(19) Europäisches Patentamt
European Patent Office
Office européen des brevets

(11) Veröffentlichungsnummer: **0 159 962**
**B1**

# (12) EUROPÄISCHE PATENTSCHRIFT

(45) Veröffentlichungstag der Patentschrift: **08.02.89**

(51) Int. Cl.⁴: **C 09 B 62/012**, C 09 B 62/00, D 06 P 3/10

(21) Anmeldenummer: **85810136.3**

(22) Anmeldetag: **28.03.85**

(54) **Faserreaktive Chrom- oder Kobaltkomplexe, deren Herstellung und Verwendung.**

(30) Priorität: **06.04.84 CH 1750/84**

(43) Veröffentlichungstag der Anmeldung: **30.10.85 Patentblatt 85/44**

(45) Bekanntmachung des Hinweises auf die Patenterteilung: **08.02.89 Patentblatt 89/6**

(84) Benannte Vertragsstaaten: **BE CH DE FR GB IT LI**

(56) Entgegenhaltungen:
**CH-A- 476 080**
**GB-A- 1 275 251**
**LU-A- 54 167**
**US-A- 3 682 995**

(73) Patentinhaber: **CIBA-GEIGY AG, Klybeckstrasse 141, CH-4002 Basel (CH)**

(72) Erfinder: **Back, Gerhard, Dr., Hammerstrasse 5, D-7850 Lörrach (DE)**
Erfinder: **Schütz, Hans Ulrich, Hans Huber-Strasse 23, CH-4053 Basel (DE)**
Erfinder: **Schlesinger, Ulrich, Dr., Hermann Sautter 5, D-7851 Binzen (DE)**

**EP 0 159 962 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Metallkomplexfarbstoffe sind seit langem bekannt und werden in grossem Umfang für das Färben und Bedrucken von Textilien aus Fasermaterialien in den verschiedensten Nuancen eingesetzt. Angesichts der immer höheren Anforderungen an diese Farbstoffe, z.B. in bezug auf die Egalität der Ausfärbungen und das Echtheitsniveau, ist der erreichte technische Stand vielfach nicht voll befriedigend. So genügen viele der bekannten 1:2-Metallkomplexazo- oder -azomethinfarbstoffe in bezug auf die Egalität der Ausfärbungen wegen mangelndem Diffusionsvermögen der Farbstoffe in der Faser nicht den heutigen Anforderungen; die meisten der bekannten 1:1-Metallkomplexazo- oder -azomethinfarbstoffe haben den Nachteil, dass sie bei stark saurem pH-Wert gefärbt werden müssen, bei dem einige Fasermaterialien bereits geschädigt werden können. Metallkomplexfarbstoffe mit einem farbgebenden Liganden und einem farblosen bis farbschwachen Liganden, die ein besseres Diffusionsvermögen in der Faser zeigen als 1:2-Metallkomplexazo- oder -azomethinfarbstoffe, sind bereits bekannt. Diese Farbstoffe genügen jedoch vielfach nicht den Anforderungen in bezug auf die Stabilität der Komplexe.

Die der vorliegenden Erfindung zugrunde liegende Aufgabe war es, neue Metallkomplexazo- oder -azomethinfarbstoffe zu finden, die bei leichter Zugänglichkeit und einfacher Applikationstechnik egale Ausfärbungen bei gleichzeitig guten Allgemeinechtheiten, insbesondere Nassechtheiten, ergeben und die insbesondere eine hohe Stabilität wie 1:2-Metallkomplexazo- oder -azomethinfarbstoffe besitzen. Es hat sich gezeigt, dass die weiter unten definierten neuen Chrom- oder Kobaltkomplexfarbstoffe diesen Anforderungen genügen.

Gegenstand der vorliegenden Erfindung sind Chrom- oder Kobaltkomplexfarbstoffe der Formel

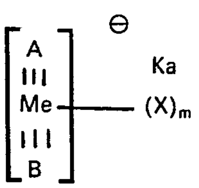

(1),

worin A der Rest eines dicyclisch metallisierbaren Azo- oder Azomethinfarbstoffes, B der Rest einer dreizähnigen, dianionischen, komplexbildenden, organischen Verbindung, die eine an dem Chrom- oder Kobaltkomplex beteiligte $>C=N-N=C<$ -Gruppe enthält,

X ein faserreaktiver Rest, Me ein Chrom- oder Kobaltatom,

Ka ein Kation, m = 1, 2, 3 oder 4 ist, und wobei die Reste A und/oder B mindestens eine wasserlöslichmachende Gruppe enthalten.

Die erfindungsgemässen Chrom- oder Kobaltkomplexe der Formel (1) sind anionisch. So ist der Rest B als dreizähnige, komplexbildende organische Verbindung mit zwei kovalenten und einer koordinativen Bindung an dem Chrom- oder Kobaltkomplex beteiligt.

Die Bezeichnung für B als Rest einer dianionischen Verbindung bedeutet, dass die den Rest B liefernde Verbindung zwei metallisierbare Gruppen enthält, die z.B. durch Abspalten eines Wasserstoffatoms, wie beispielsweise in –OH, –COOH oder –SH Gruppen, mit dem Metallatom unter Bildung kovalenter Bindungen reagieren können.

Der Azo- oder Azomethinfarbstoffrest A in Formel (1) kann ausser den komplexbildenden Gruppen die üblichen in Farbstoffen vorkommenden Substituenten enthalten, wie z.B. Alkylgruppen mit 1 bis 4 Kohlenstoffatomen, wie Methyl, Äthyl, Propyl, Isopropyl und Butyl, Alkoxygruppen mit 1 bis 4 Kohlenstoffatomen, wie Methoxy, Äthoxy, Propoxy, Isopropoxy und Butoxy, Acylaminogruppen mit 1 bis 6 Kohlenstoffatomen, wie Acetylamino und Propionylamino, Benzoylamino, Amino, Mono- oder Dialkylamino mit 1 bis 4 Kohlenstoffatomen im Alkylrest, Phenylamino, Alkoxycarbonyl mit 1 bis 4 Kohlenstoffatomen im Alkoxyrest, Nitro, Cyano, Trifluormethyl, Halogen, wie Fluor, Chlor und Brom, Sulfamoyl, Carbamoyl, Ureido, Hydroxy, $C_{1-4}$-Alkylsulfonyl, wie z.B. Methylsulfonyl, Carboxy, Sulfomethyl und Sulfo sowie einen bis vier faserreaktive Reste X und Arylazogruppen, wie z.B. die Phenylazo- und Naphthylazogruppen.

Als Azo- oder Azomethinfarbstoffrest A kommt insbesondere der Rest der Formel

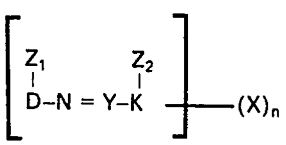

(2)

in Betracht, worin D der Rest einer Diazokomponente der Benzol- oder Naphthalinreihe oder der heterocyclischen Reihe, Y ein Stickstoffatom oder die CH-Gruppe, K für den Fall, dass Y ein Stickstoffatom ist, der Rest einer Kupplungskomponente insbesondere der Benzol-, Naphthalin- oder heterocyclischen Reihe oder einer Ketomethylenverbindung oder, für den Fall, dass Y die CH-Gruppe ist, der Rest eines o-Hydroxybenzaldehyds oder eines o-Hydroxynaphthaldehyds, $Z_1$ in o-Stellung zur Azo- oder Azomethingruppe die –O– oder –COO-Gruppe und $Z_2$ die –O– oder –N(R)-Gruppe ist, wobei R Wasserstoff, gegebenenfalls substituiertes $C_{1-4}$-Alkyl oder gegebenenfalls substituiertes Phenyl bedeutet, und $Z_2$ in Nachbarstellung zu dem Rest –N=Y– an K gebunden ist, X die unter Formel (1) angegebene Bedeutung hat und n = 0, 1, 2, 3 oder 4 ist, wobei, falls n = 0 ist, der Rest B in Formel (1) mindestens einen faserreaktiven Rest X enthält.

Aus der grossen Zahl möglicher dreizähniger, dianionischer, komplexbildender, organischer Verbindungen, die den Rest B enthalten, kommen insbesondere solche farblosen bis farbschwachen Acylhydrazone, Semicarbazone und Thiosemicarbazone in Betracht, die mit dem Chrom oder Kobalt zwei 5-, 6- oder 7-Ringe bilden können, vorzugsweise zwei 5- oder 6-Ringe und insbesondere einen 5-Ring und einen 6-Ring. Überraschenderweise zeigen die Chrom- oder Kobaltkomplexe der Formel (1), worin B mit dem Chrom- oder Kobaltatom einen 5-Ring und einen 6-Ring bildet, eine sehr grosse Stabilität.

Insbesondere bevorzugt sind diejenigen Verbindungen, worin der Rest B der Formel

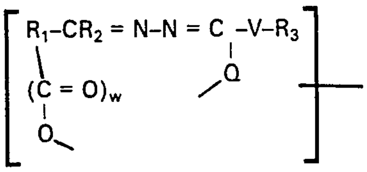 (3)

entspricht, worin $R_1$ die direkte Bindung oder ein gegebenenfalls substituierter Alkyl-, Alkenyl- oder Arylrest oder ein heterocyclischer Rest, $R_2$ Wasserstoff oder ein gegebenenfalls substituierter Alkyl- oder Arylrest, V die direkte Bindung oder ein Sauerstoffatom, $R_3$ Wasserstoff, ein gegebenenfalls substituierter Alkyl- oder Arylrest, ein heterocyclischer Rest oder eine gegebenenfalls substituierte Aminogruppe, Q ein Sauerstoff- oder Schwefelatom und w = 0 oder 1 ist, X die unter Formel (1) angegebene Bedeutung hat und p = 0, 1 oder 2 ist, wobei, falls p = 0 ist, der Rest A in Formel (1) mindestens einen faserreaktiven Rest X enthält.

Bedeutet $R_1$ die direkte Bindung, so ist vorzugsweise w = 1.

Bedeutet $R_1$ einen gegebenenfalls substituierten Alkylrest, so kommt insbesondere ein $C_1$–$C_8$-Alkylrest, vorzugsweise ein $C_{1-4}$-Alkylrest in Betracht, der substituiert sein kann durch Halogen, wie Fluor, Chlor, oder Brom, $C_{1-4}$-Alkoxy, wie Methoxy oder Äthoxy, Aryl, wie Phenyl oder Naphthyl, Carboxyl, $C_{1-8}$-Alkoxycarbonyl, wie Methoxycarbonyl oder Äthoxycarbonyl, Phenoxycarbonyl, $C_{1-8}$-Alkylaminocarbonyl, wie Methyl- oder Äthylaminocarbonyl, Phenylaminocarbonyl.

Bedeutet $R_1$ einen gegebenenfalls substituierten Alkenylrest, so kommt insbesondere ein $C_{1-8}$-Alkenylrest, vorzugsweise ein $C_{1-4}$-Alkenylrest in Betracht, der substituiert sein kann wie oben für den Alkylrest $R_1$ beschrieben.

Bedeutet $R_1$ einen gegebenenfalls substituierten Arylrest, so kommt insbesondere ein Phenyl- oder Naphthylrest in Betracht, der substituiert sein kann durch $C_{1-4}$-Alkyl, wie Methyl, Äthyl, Propyl, Isopropyl, Butyl, Isobutyl, sek.-Butyl und tert.-Butyl, $C_{1-4}$-Alkoxy, wie Methoxy, Äthoxy, Propoxy, Isopropoxy, Butoxy, Isobutoxy, sek.-Butoxy und tert.-Butoxy, Halogen, wie Fluor, Chlor und Brom, $C_{2-5}$-Alkanoylamino, wie Acetylamino, Propionylamino und Butyrylamino, Nitro, Hydroxy, Cyano, Sulfo, die Gruppe –NHX, Arylazogruppen, wie Phenyl- oder Naphthylazogruppen, die im Phenyl- oder Naphthylring durch die genannten Substituenten sowie faserreaktive Reste X weitersubstituiert sein können.

Bedeutet $R_1$ einen Alkyl-, Alkenyl- oder Arylrest, so ist der Rest $-(C{=}O)_w-O-$ insbesondere an ein α- oder β-ständiges Kohlenstoffatom zur Bindung mit dem Rest $-C(R_2)=$ gebunden.

Bedeutet $R_2$ einen gegebenenfalls substituierten Alkylrest, so kommt insbesondere ein $C_1$–$C_8$-Alkylrest, vorzugsweise ein $C_1$–$C_4$-Alkylrest in Betracht, der wie oben für den Alkylrest $R_1$ beschrieben weitersubstituiert sein kann.

Bedeutet $R_2$ einen gegebenenfalls substituierten Arylrest, so kommt insbesondere ein Phenyl- oder Naphthylrest in Betracht, der wie oben für den Arylrest $R_1$ beschrieben weitersubstituiert sein kann.

Bedeutet $R_3$ einen gegebenenfalls substituierten Alkyl- oder Arylrest, so kommen dieselben gegebenenfalls substituierten Alkyl- oder Arylreste in Betracht, wie oben für den Rest $R_1$ angegeben.

Bedeuten $R_1$ und $R_3$ einen heterocyclischen Rest, so kommt unabhängig voneinander ein solcher ein bis drei Heteroatome, wie Schwefel, Sauerstoff oder Stickstoff, enthaltender Rest, der aliphatisch oder aromatisch sein kann, in Betracht. Als Beispiele seien genannt: Piperidinyl, Pyrrolidinyl, Morpholinyl, Pyrimidinyl, Pyridyl, Chinolinyl, Isochinolinyl, wobei die genannten Reste weitersubstituiert sein können wie z.B. für den Arylrest $R_1$ angegeben.

Bedeutet $R_3$ eine gegebenenfalls substituierte Aminogruppe, so kommt $-NH_2$, $-N(H)-C_{1-8}$-Alkyl, $-N(C_{1-8}\text{-Alkyl})_2$, Phenylamino oder N–$C_{1-8}$-Alkyl-N-phenylamino in Betracht, wobei der Phenylrest wie für den Phenylrest $R_1$ beschrieben substituiert sein kann.

Besonders bevorzugt sind die Reste B der Formel (3), worin mindestens ein Rest $R_1$ oder $R_3$ ein Arylrest ist.

Bevorzugt sind ebenfalls die Reste B der Formel (3), worin V die direkte Bindung ist und/oder Q ein Sauerstoffatom ist.

Insbesondere bevorzugt sind als Rest B die Reste der Formel (3), worin $R_1$ unsubstituiertes oder durch $C_{1-4}$-Alkyl, Halogen, Nitro, Acetylamino, Sulfo, Phenylazo, Sulfophenylazo oder –NH–X substituiertes Phenyl oder Naphthyl oder durch Hydroxy substituiertes Chinolinyl, $R_2$ Wasserstoff oder $C_{1-4}$-Alkyl, V die direkte Bindung oder ein Sauerstoffatom, w = 0, Q ein Sauerstoff oder Schwefelatom und $R_3$ Wasserstoff, Amino, $C_{1-4}$-Alkyl oder ein unsubstituierter oder durch $C_{1-4}$-Alkyl, Halogen oder Nitro substituierter Phenylrest ist, oder worin $R_1$ die direkte Bindung, $R_2$ Wasserstoff, $C_{1-4}$-Alkyl, durch Carboxy substituiertes $C_{1-4}$-Alkyl oder Phenyl, V die direkte Bindung oder ein Sauerstoffatom, w = 1, Q ein Sauerstoffatom und $R_3$ Wasserstoff, Amino, $C_{1-4}$-Alkyl oder ein unsubstituierter oder durch $C_{1-4}$-Alkyl, Halogen oder Nitro substituierter Phenylrest ist, oder worin $R_1$ $C_{1-4}$-Alkyl, $R_2$ Wasserstoff oder unsubstituiertes oder durch Carboxy substituiertes $C_{1-4}$-Alkyl, V die direkte Bindung oder ein Sauerstoffatom, w = 0 oder 1, Q ein Sauerstoffatom und $R_3$ Wasserstoff, Amino, $C_{1-4}$-Alkyl oder ein unsubstituierter oder durch $C_{1-4}$-Alkyl, Halogen oder Nitro substituierter Phenylrest ist, oder worin $R_1$ $C_{3-6}$-Alkenyl, $R_2$ und $R_3$ unabhängig

voneinander Wasserstoff, $C_{1-4}$-Alkyl oder ein unsubstituierter oder durch $C_{1-4}$-Alkyl, Halogen oder Nitro substituierter Phenylrest, oder $R_3$ Amino, V die direkte Bindung oder ein Sauerstoffatom, w = 0 und Q ein Sauerstoffatom ist.

Beispiele für die genannten Reste der Formel (3) sind:

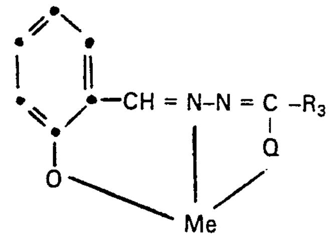
,
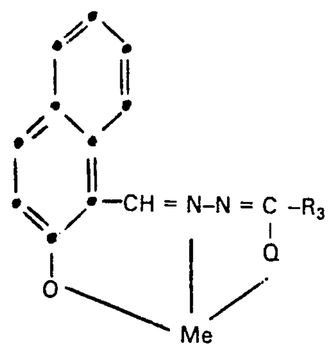
,
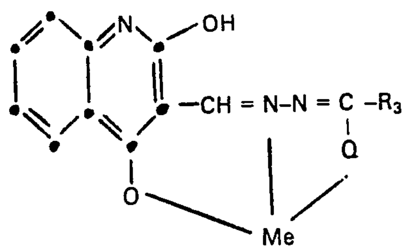
,

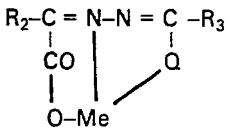
,
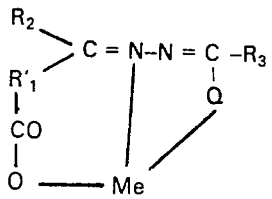
,
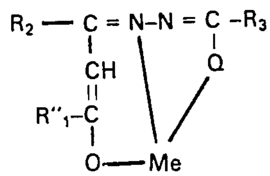
,

In den oben angegebenen Strukturen ist das Metallatom aufgeführt, um die Bindungsweise des Restes B an das Metallatom zu erläutern. $R_2$, $R_3$, Q und Me haben die vorgenannten Bedeutungen und $R'_1$ bedeutet einen $C_{1-4}$-Alkylenrest, der gemäss der bevorzugten Bildung eines 5- und eines 6-Ringes des Restes B mit dem Metallatom die Gruppe $-CH_2-$, $CH_3-\overset{\backslash}{C}H$, $CH_3-CH_2-\overset{\backslash}{C}H$ ist. $R''_1$ bedeutet den $C_{1-4}$-Alkylrest.

Unter dem faserreaktiven Rest X in Formel (1) werden solche Acylreste verstanden, die eine oder mehrere reaktive Gruppen oder abspaltbare Substituenten im Molekül aufweisen, welche z.B. mit Cellulosematerialien in Gegenwart säurebindender Mittel und gegebenenfalls unter Einwirkung von Wärme mit den Hydroxylgruppen der Cellulose, oder mit synthetischen oder natürlichen Polyamidfasern, wie z.B. Wolle, mit den $NH_2$-Gruppen dieser Fasern unter Ausbildung kovalenter Bindungen zu reagieren vermögen. Derartige faserreaktive Gruppierungen sind aus der Literatur in grosser Zahl bekannt.

Vorzugsweise bedeutet X einen faserreaktiven Rest der aliphatischen oder heterocyclischen Reihe, der direkt oder über ein Brückenglied an den Azo- oder Azomethinfarbstoffrest A und/oder an den Rest B gebunden ist.

Vorzugsweise ist X über eine gegebenenfalls monoalkylierte Aminogruppe wie z.B. $-NH-$, $-N(CH_3)-$, $-N(C_2H_5)-$ oder $-N(C_3H_7)$ oder über ein eine Aminogruppe enthaltendes Brückenglied an den Rest A und/oder B gebunden.

Im einzelnen sind beispielsweise zu nennen Mono- oder Dihalogensymmetrische-triazinylreste, z.B. 2,4-Dichlortriazinyl-6-, 2-Amino-4-chlortriazinyl-6-, 2-Alkylamino-4-chlortriazinyl-6-, wie 2-Methylamino-4-chlor-triazinyl-6-, 2-Äthylamino- oder 2-Propylamino-4-chlortriazinyl-6-, 2-β-Oxäthylamino-4-chlortriazinyl-6-, 2-Di-β-oxäthylamino- 4-chlortriazinyl-6- und die entsprechenden Schwefelsäurehalbester, 2-Diäthylamino- 4-chlortriazinyl-6-, 2-Morpholino- oder 2-Piperidino- 4-chlor-triazinyl-6-, 2-Cyclohexylamino- 4-chlortriazinyl-6-, 2-Arylamino-4-chlortriazinyl-6-, wie 2-Phenylamino- 4-chlortriazinyl-6-, 2-(o-, m- oder p-Carboxy- oder -Sulfophenyl)- amino-4-chlortriazinyl-6-, 2-Alkoxy- 4-chlortriazinyl-6-, wie 2-Methoxy- oder 2-Äthoxy- 4-chlortriazinyl-6-, 2-Cyclohexyloxy-4-chlortriazinyl-6-, 2-(Phenylsulfonyl)-methoxy- 4-chlortriazinyl-6-, 2-Aryloxy- und substituiertes Aryloxy- 4-chlortriazinyl-6-, wie 2-Phenoxy- 4-chlortriazinyl-6-, 2-(p-Sulfophenyl)-oxy-4-chlortriazinyl-6-, 2-(o-, m- oder p-Methyl- oder -Methoxyphenyl)-oxy- 4-chlortriazinyl-6-, 2-Alkylmercapto- oder 2-(substituiertes Aryl)-mercapto- 4-chlortriazinyl-6-, wie 2-β-Hydroxyäthylmercapto- 4-chlortriazinyl-6-, 2-Phenylmercapto- 4-chlortriazinyl-6-, 2-(4'-Methylphenyl)-mercapto- 4-chlortriazinyl-6-, 2-(2',4'-Dinitro)-phenylmercapto- 4-chlortriazinyl-6-, 2-Methyl- 4-chlortriazinyl-6-, und der 2-Phenyl-4-chlortriazinyl-6-Rest.

Besonders interessante faserreaktive Reste sind Fluor-1,3,5-triazinreste der Formel

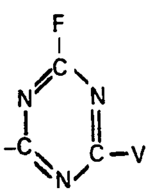
,

wobei als Substituenten V am Triazinring insbesondere zu nennen sind:

Reste von primären, sekundären und tertiären Aminen, wie $-NH_2$, $-NHC_2H_5$, $-N(C_2H_5)_2$, $-NH-CH(CH_3)_2$, $-NHC_2H_4OH$, $-N(C_2H_4OH)$, Morpholino, Piperidino, N-Phenylamino, N-(2-, 3- oder 4-Sulfophenyl)-amino, N-Toluidino, N-(2,4- oder 2,5-Disulfophenyl)-amino und N-(γ-Methoxypropyl)-amino, $C_{1-4}$-Alkoxyreste, wie Methoxy, Äthoxy, Isopropoxy, Propoxy.

Von Interesse sind ferner Reaktivreste, die der folgenden Formel entsprechen:

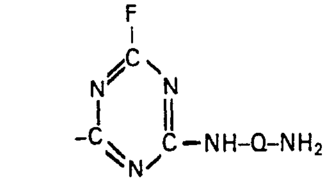
,

worin Q ein aliphatisches oder aromatisches Brückenglied darstellt. Derartige Reste können mit 2,4,6-Trifluor-1,3,5-triazin zu einem Rest der Formel

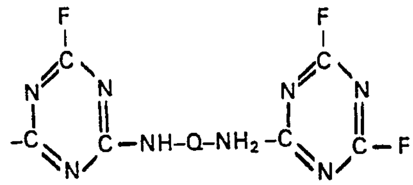

weitersubstituiert sein und dieser schliesslich mit einem Amin zur Reaktion gebracht werden. Geeignete derartige Amine sind z.B. Ammoniak, Methylamin, Äthylamin, Dimethylamin, Diäthylamin, Äthanolamin, Diäthanolamin, Morpholin, Piperidin, 2-, 3- oder 4-Aminotoluol, Metanilsäure, Sulfanilsäure, Anilin, N-Methylanilin, 4-Aminobenzylsulfonsäure, 2-, 3- oder 4-Aminobenzoesäure, Naphthylaminomono-, -di- und -trisulfonsäuren sowie auch aminogruppenhaltige Farbstoffe.

Geeignete Diamine, die den Rest der Formel $-HN-Q-NH_2$ einführen, sind z.B.: Äthylendiamin, 1,3-Diaminopropan, 1,6-Diaminohexan, 1,3- und 1,4-Phenylendiamin, 1,3-Phenylendiamin-4-sulfonsäure, 1,4-Phenylendiamin-2-sulfonsäure, 2,4-Diaminotoluol, 4,4'-Diaminodiphenyl-2,2'-disulfonsäure, 4,4'-Diamino-diphenylharnstoff-2,2'-disulfonsäure, 2,5-Diaminonaphthalin-4,8-disulfonsäure, 4,4'-Diaminodiphenyläther und 2,5-Diaminobenzoesäure.

Des weiteren sind von Interesse Mono-, Di- oder Trihalogenpyrimidinylreste, wie 2,4-Dichlorpyrimidinyl-6-, 2,4,5-Trichlorpyrimidinyl-6-, 2,4-Dichlor-5-nitro- oder -5-methyl- oder -5-carboxymethyl- oder -5-carboxy- oder -5-cyano- oder -5-vinyl- oder -5-sulfo- oder -5-mono-, -di- oder trichlormethyl- oder 5-carbalkoxy-pyrimidinyl-6-, 2,6-Dichlorpyrimidin-4-carbonyl-, 2,4-Dichlorpyrimidin-5-carbonyl-, 2-Chlor-4-methylpyrimidin-5-carbonyl-, 2-Methyl-4-chlorpyrimidin-5-carbonyl-, 2-Methylthio-4-fluorpyrimidin-5-carbonyl-, 6-Methyl-2,4-dichlorpyrimidin-5-carbonyl-, 2,4,6-Trichlorpyrimidin-5-carbonyl-, 2,4-Dichlorpyrimidin-5-sulfonyl-, 2-Chlorchinoxalin-3-carbonyl-, 2- oder 3-Monochlorchinoxalin-6-carbonyl-, 2- oder 3-Monochlorchinoxalin-6-sulfonyl-, 2,3-Dichlorchinoxalin-6-sulfonyl-, 1,4-Dichlorphthalazin-6-sulfonyl- oder 6-carbonyl-, 2,4-Dichlorchinazolin-7- oder -6-sulfonyl- oder -carbonyl-, 2- oder 3- oder 4-(4',5'-Dichlorpyridazon-6'-yl-1')-phenylsulfonyl-oder-carbonyl-, β-(4',5'-Dichlorpyridazon-6'-yl-1')-äthylcarbonyl-, N-Methyl-N'-(2,4-dichlortriazinyl-6)carbamyl-, N-Methyl-N-(2-methylamino-4-chlortriazinyl-6)-carbamyl-, N-Methyl-N-(2-dimethylamino-4-chlortriazinyl-6)-carbamyl-, N-Methyl- oder N-Äthyl-N-(2,4-dichlortriazinyl-6)-aminoacetyl-, N-Methyl-N-(2,3-dichlorchinoxalin-6-sulfonyl)-aminoacetyl-, N-Methyl-N-(2,3-dichlorchinoxalin-6-carbonyl)-aminoacetyl-, sowie die entsprechenden Brom- und Fluor-Derivate der oben erwähnten chlorsubstituierten heterocyclischen Reste, unter diesen beispielsweise 2-Fluor-4-pyrimidinyl-, 2,6-Difluor-4-pyrimidinyl-, 2,6-Difluor-5-chlor-4-pyrimidinyl-, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 2-Fluor-5-nitro-6-chlor-4-pyrimidinyl-, 2-Fluor-5-nitro-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-chlor-6-chlormethyl- 4-pyrimidinyl-, 2,6-Difluor- 5-chlormethyl- 4-pyrimidinyl-, 2,6-Difluor- 5-nitro- 4-pyrimidinyl-, 2-Fluor-6-methyl-4-pyrimidinyl-, 2-Fluor-5-chlor-6-methyl- 4-pyrimidinyl-, 2-Fluor-5-chlor- 4-pyrimidinyl-, 2-Fluor-6-chlor-4-pyrimidinyl-, 6-Trifluormethyl- 5-chlor- 2-fluor- 4-pyrimidinyl-, 6-Trifluormethyl- 2-fluor- 4-pyrimidinyl-, 6-Trifluormethyl- 2-fluor- 4-pyrimidinyl-, 2-Fluor-5-nitro- 4-pyrimidinyl-, 2-Fluor-5-trifluormethyl- 4-pyrimidinyl-, 2-Fluor-5-phenyl- oder -5-methylsulfonyl-4-pyrimidinyl-, 2-Fluor-5-carbonamido- 4-pyrimidinyl-, 2-Fluor-5-carbomethoxy- 4-pyrimidinyl-, 2-Fluor-5-brom- 6-trifluormethyl- 4-pyrimidinyl-, 2-Fluor-6-carbonamido- 4-pyrimidinyl-, 2-Fluor-6-carbomethoxy- 4-pyrimidinyl-, 2-Fluor-6-phenyl- 4-pyrimidinyl-, 2-Fluor-6-cyan- 4-pyrimidinyl-, 2,6-Difluor-5-methylsulfonyl- 4-pyrimidinyl-, 2-Fluor-5-sulfonamido- 4-pyrimidinyl-, 2-Fluor-5-chlor- 6-carbomethoxy- 4-pyrimidinyl-, 2,6-Difluor-5-trifluormethyl- 4-pyrimidinyl; sulfonylgruppenhaltige Triazinreste, wie 2,4-Bis-(phenylsulfonyl)-triazinyl-6-, 2-(3'-Carboxyphenyl)-sulfonyl-4-chlortriazinyl-6-, 2-(3'-Sulfophenyl)-sulfonyl-4-chlortriazinyl-6-, 2,4-Bis-(3'-carboxyphenylsulfonyl)-triazinyl-6-; sulfonylgruppenhaltige Pyrimidinringe, wie 2-Carboxymethylsulfonyl-pyrimidinyl-4-, 2-Methylsulfonyl-6-methylpyrimidinyl-4-, 2-Methylsulfonyl-6-äthylpyrimidinyl-4-, 2-Phenylsulfonyl-5-chlor- 6-methylpyrimidinyl-4-, 2,6-Bis-methylsulfonyl-pyrimidinyl-4-, 2,6-Bis-methylsulfonyl-5-chlor-pyrimidinyl-4-, 2,4-Bis-methylsulfonyl-pyrimidinyl- 5-sulfonyl, 2-Methylsulfonyl-pyrimidinyl-4-, 2-Phenylsulfonyl-pyrimidinyl-4-, 2-Trichlormethylsulfonyl- 6-methyl-pyrimidinyl-4-, 2-Methylsulfonyl-5-chlor- 6-methyl-pyrimidinyl-4-, 2-Methylsulfonyl-5-brom- 6-methyl-pyrimidinyl-4-, 2-Methylsulfonyl-5-chlor- 6-äthyl-pyrimidinyl-4-, 2-Methylsulfonyl-5-chlor- 6-chlormethyl-pyrimidinyl-4-, 2-Methylsulfonyl-4-chlor- 6-methyl-pyrimidin- 5-sulfonyl-, 2-Methylsulfonyl- 5-nitro- 6-methyl-pyrimidinyl-4-, 2,5,6-Tris-methylsulfonyl-pyrimidinyl-4-, 2-Methylsulfonyl-5,6-dimethyl-pyrimidinyl-4-, 2-Äthylsulfonyl-5-chlor- 6-methyl-pyrimidinyl-4-, 2-Methylsulfonyl-6-chlor-pyrimidinyl-4-, 2-Methylsulfonyl-6-carboxy-pyrimidnyl-4, 2-Methylsulfonyl-5-sulfo-pyrimidinyl-4-, 2-Methylsulfonyl-6-carbomethoxy-pyrimidinyl-4-, 2-Methylsulfonyl-5-carboxy-pyrimidinyl-4-, 2-Methylsulfonyl-5-cyan-6-methoxy-pyrimidinyl-4-, 2-Methylsulfonyl-5-chlor-pyrimidinyl-4-, 2-Sulfoäthylsulfonyl-6-methyl-pyrimidinyl-4-, 2-Methylsulfonyl-5-brom-pyrimidinyl-4-, 2-Phenylsulfonyl-5-chlor-pyrimidinyl-4-, 2-Carboxymethylsulfonyl-5-chlor- 6-methyl-pyrimidinyl-4-, 2-Methylsulfonyl-6-chlorpyrimidinyl-4- und -5-carbonyl-, 2,6-Bis-(methylsulfonyl)-pyrimidin-4- oder -5-carbonyl-, 2-Äthylsulfonyl-6-chlorpyrimidin-5-carbonyl-, 2,4-Bis-(methylsulfonyl)-pyrimidin-5-sulfonyl-, 2 -Methylsulfonyl-4-chlor- 6-methylpyrimidin- 5-sulfonyl- oder -carbonyl; ammoniumgruppenhaltige Triazinringe, wie 2-Trimethylammonium-4-phenylamino- oder -4-(o-, m- oder p-sulfophenyl)-amino-triazinyl-6-, 2-(1,1-Dimethylhydrazinium)-4-phenylamino- oder -4-(o-, m- oder p-sulfophenyl)-aminotriazinyl-6-, 2-(2-Isopropyliden-1,1-dimethyl)-hydrazinium- 4-phenylamino- oder -4-(o-, m- oder p-sulfophenyl)-aminotriazinyl-6-, 2-N-Aminopyrrolidinium- oder 2-N-Aminopiperidinium-4-phenylamino- oder -4-(o-, m- oder p-sulfophenyl)-aminotriazinyl-6-, ferner 4-Phenylamino- oder 4-(sulfophenylamino)-triazinyl-6-Reste, die in 2-Stellung über eine Stickstoffbindung das 1,4-Bis-aza-bicyclo-[2,2,2]-octan oder das 1,2-Bis-aza-bicyclo-[0,3,3]-octan quartär gebunden enthalten, 2-Pyridinium-4-phenylamino- oder -4-(-o-, m- oder p-sulfophenyl)-amino-triazinyl-6- sowie entsprechende 2-Oniumtriazinyl-6-Reste, die in 4-Stellung durch Alkylamino-, wie Methylamino, Äthylamino-, oder β-Hydroxy-äthylamino-, oder Alkoxy-, wie Methoxy- oder Äthoxy-, oder Aryloxy-, wie Phenoxy-, oder Sulfophenoxy-Gruppen substituiert sind; 2-Chlorbenzthiazol-5- oder -6-carbonyl- oder -5- oder -6-sulfonyl-, 2-Arylsulfonyl- oder -Alkylsulfonylbenztriazol-5- oder -6-carbonyl- oder -5- oder -6-sulfonyl-, wie 2-Methylsulfonyl- oder 2-Äthylsulfonylbenzthiazol-5- oder -6-sulfonyl- oder -carbonyl - und die entsprechenden, im ankondensierten Benzolring Sulfogruppen enthaltenden 2-Sulfonylbenzthiazol-5- oder -6-carbonyl- oder 6-sulfonyl-Derivate, 2-Chlorbenzoxazol-5- oder -6-carbonyl- oder -sulfonyl-, 2-Chlorbenzimidazol-5- oder -6-carbonyl- oder -sulfonyl-, 2-Chlor-1-methylbenzimidazol-5- oder -6-carbonyl- oder -sulfonyl-, 2-Chlor-4-methylthiazol-(1,3)-5-carbonyl- oder -4- oder -5-sulfonyl-, N-Oxyd des 4-Chlor- oder 4-Nitrochinolin-5-carbonyl-. Des weiteren sind Reaktivgruppen der aliphatischen Reihe zu nennen wie Mono-, Di- oder Trichloracryloylreste oder Mono- oder Dibromacryloylreste, z.B. $-CO-CH=CH-Cl$, $-COCCl=CH_2$, $-CO-CCl=CH-CH_3$, ferner $-CO-CCl=CH-COOH$, $-CO-CH=CCl-COOH$, β-Chlorpropionyl-, 3-Phenylsulfonylpropionyl-, 3-Methylsulfonyl-propionyl-, β-Sulfato-äthylaminosulfonyl-, Vinylsulfonyl-, β-Chloräthylsulfonyl-, β-Sulfatoäthylsulfonyl-, β-Methylsulfonyl-äthylsulfonyl-, β-Phenylsulfonyläthylsulfonyl-, 2-Fluor-2-chlor- 3,3-difluorcyclobutan- 1-carbonyl-, 2,2,3,3-Tetrafluorcyclobutancarbonyl-1- oder -sulfonyl-1-, β-(2,2,3,3-Tetrafluorcyclobutyl-1)-acryloyl-, α- oder β-Bromacryloyl-, die α- oder β-Alkyl- oder -Arylsulfonyl-acryloyl-Gruppe, wie α- oder β-Methylsulfonylacryloyl, α,β-Dibrom- oder α,β-Dichlorpropionyl und β-Chloräthylsulfonylbutyryl.

Das Kation Ka in Formel (1) bedeutet ein Wasserstoff-, Natrium-, Kalium-, Lithium- oder Ammonium-Ion oder das Kation eines organischen Amins wie z.B. des Triäthanolamins.

Die Reste A und/oder B enthalten mindestens eine wasserlöslichmachende Gruppe. Als wasserlöslichmachende Gruppe kommen in Betracht: Sulfon-, Sulfonamid-, N-Mono- oder N,N-Dialkylsulfonamidgruppen sowie insbesondere Sulfonsäuregruppen. Insbesondere enthält der Rest der Formel (2) 0, 1, 2, 3 oder 4 Sulfonsäuregruppen.

Als Sulfongruppen kommen Alkylsulfon-, insbesondere $C_{1-4}$-Alkylsulfongruppen in Betracht.

Als N-Mono- oder N,N-Dialkylsulfonamidgruppe kommt insbesondere eine solche mit einem oder zwei $C_{1-4}$-Alkylresten in Betracht.

Die bevorzugten Chrom- oder Kobaltkomplexe der Formel (1) entsprechen der Formel

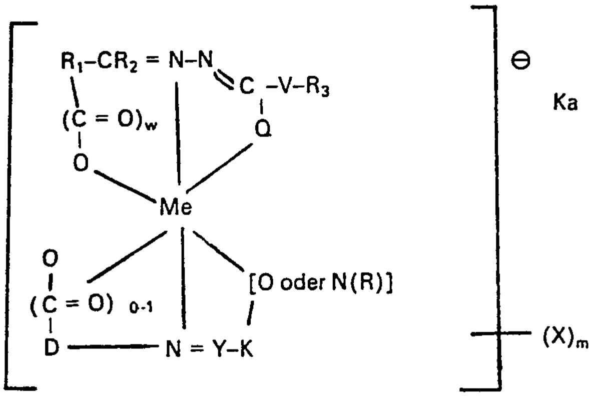

(4)

worin $R_1$ die direkte Bindung zu dem –COO-Rest, ein gegebenenfalls durch Carboxy substituierter $C_{1-8}$-Alkylrest, insbesondere ein gegebenenfalls durch Carboxy substituierter $C_{1-4}$-Alkylrest, ein $C_{1-8}$- insbesondere $C_{1-4}$-Alkenylrest oder ein gegebenenfalls durch $C_{1-4}$-Alkyl, Halogen, Nitro, $C_{2-5}$-Alkanoylamino, Sulfo, Carboxy oder Arylazo insbesondere Phenylazo substituierter Phenyl- oder Naphthylrest, oder ein heterocyclischer Rest, insbesondere ein durch Hydroxy substituierter Chinolinylrest, $R_2$ Wasserstoff, ein gegebenenfalls durch Carboxy substituierter $C_{1-8}$- insbesondere $C_{1-4}$-Alkylrest oder ein gegebenenfalls durch $C_{1-4}$-Alkyl, Halogen, Nitro, $C_{2-5}$-Alkanoylamino, Sulfo oder Carboxy substituierter Phenyl- oder Naphthylrest, V die direkte Bindung oder ein Sauerstoffatom, $R_3$ Wasserstoff, $C_{1-8}$- insbesondere $C_{1-4}$-Alkyl, Phenyl-$C_{1-4}$-alkyl, Naphthyl-$C_{1-4}$-alkyl, gegebenenfalls durch $C_{1-4}$-Alkyl, $C_{1-4}$-Alkoxy, Halogen, $C_{2-5}$-Alkanoylamino, Nitro, Hydroxy, Cyano, Sulfo oder Phenylazo substituiertes Phenyl oder Naphthyl oder ein Rest der Formel

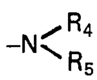

worin $R_4$ und $R_5$ unabhängig voneinander Wasserstoff, gegebenenfalls substituiertes $C_{1-8}$-, insbesondere $C_{1-4}$-Alkyl oder gegebenenfalls substituiertes Phenyl ist, Q ein Sauerstoff- oder Schwefelatom, w = 0 oder 1, Me ein Chrom- oder Kobaltatom, D der Rest einer Diazokomponente der Benzol oder Naphthalinreihe, der die $-(CO)_{0-1}$-O-Gruppe in o-Stellung zur –N=Y-Gruppe enthält, Y ein Stickstoffatom oder die CH-Gruppe, K für den Fall, dass Y ein Stickstoffatom ist, der Rest einer Kupplungskomponente der Benzol- oder Naphthalinreihe oder der 5-Pyrazolon-, 5-Aminopyrazol-, Chinolin-, Acetoacetarylid- oder Benzoylessigsäurearylid-Reihe ist, der den Rest –[O oder N(R)]– in Nachbarstellung zur Azogruppe enthält, und wobei R Wasserstoff, gegebenenfalls substituiertes $C_{1-4}$-Alkyl oder gegebenenfalls substituiertes Phenyl ist, oder für den Fall, dass Y die CH-Gruppe ist, K den Rest eines o-Hydroxybenzaldehyds oder o-Hydroxynaphthaldehyds bedeutet, X einen faserreaktiven Rest der aliphatischen oder heterocyclischen Reihe bedeutet, der direkt oder über ein Brückenglied an D und/oder K und/oder $R_1$ gebunden ist, Ka ein Kation und m = 1,2,3 oder 4 bedeutet.

Insbesondere bedeutet m = 1 oder 2.

Bevorzugt sind ferner die Chrom- oder Kobaltkomplexe der Formel (4),worin $R_1$, $R_2$, $R_3$, V, Q und w die auf Seite 6, Zeile 19 bis Seite 7, Zeile 14 angegebenen Bedeutungen haben.

Insbesondere ist X ein Acryloyl-, Mono-, Di- oder Trihalogenacryloyl- oder -methacryloyl-, Mono- oder Dihalogenpropionyl-, Phenylsulfonylpropionyl-, Methylsulfonylpropionyl-, Vinylsulfonyl-, β-Chloräthylsulfonyl-, β-Sulfatoäthylsulfonyl, β-Chloräthylsulfonylbutyrylrest oder ein Rest der Mono-, Di- oder Trihalogenpyrimidyl- oder Mono- oder Dihalogentriazinylreihe, wobei X gegebenenfalls über ein Brückenglied der Formel

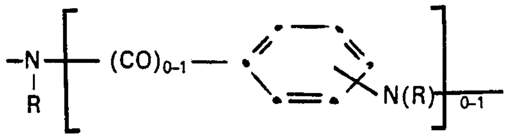

oder $-CH_2-N(R)-$ an D und/oder K und/oder $R_1$ gebunden ist und R die unter Formel (2) angegebene Bedeutung hat. Vor allem ist X der α,β-Dibrompropionyl- oder α- Bromacryloylrest, der über eine Aminogruppe an D und/oder K gebunden ist.

Ganz besonders bevorzugt sind die Chrom- oder Kobaltkomplexe der Formel

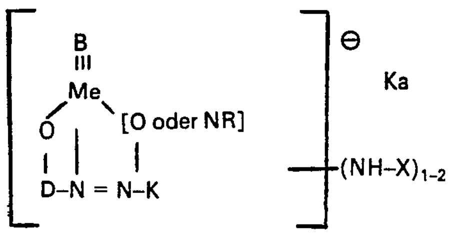
(5)

worin B den Rest der Formel

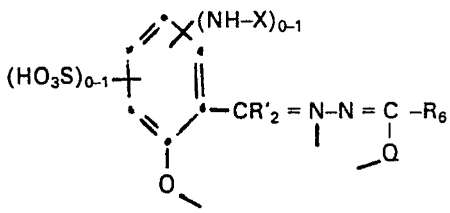
(6)

worin $R'_2$ Wasserstoff oder Methyl, $R_6$ Wasserstoff, Methyl, Phenyl oder $NH_2$ und Q ein Sauerstoff- oder Schwefelatom ist, oder den Rest der Formel

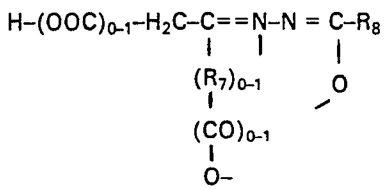
(7)

worin $R_7$ $C_{1-4}$-Alkyl und $R_8$ Methyl oder Phenyl ist, oder den Rest der Formel

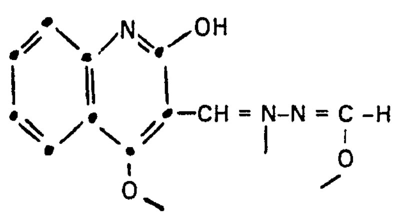
(8)

oder den Rest der Formel(9)

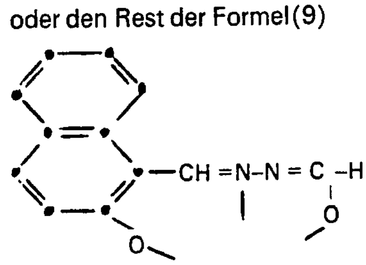
(9)

bedeutet, und D ein Benzolrest ist, der das Sauerstoffatom in o-Stellung zur Azobrücke enthält und durch Sulfo, Chlor, Nitro, Methoxy und den Rest –NH–X substituiert sein kann, oder ein Naphthalinrest ist, der das Sauerstoffatom in 1- oder 2-Stellung und die Azogruppe in 2- oder 1-Stellung enthält und der substituiert sein kann durch Sulfo, Nitro und den Rest –NH–X, K ein Naphthalinrest ist, der ausser durch den Rest –NH–X durch 1 oder 2 Sulfogruppen substituiert sein kann und das Sauerstoffatom oder –N(R), wobei R Wasserstoff oder Phenyl ist, in o-Stellung zur Azogruppe enthält, ein 1-Phenyl-3-methyl-5-pyrazolonrest ist, der im Phenylring durch den Rest –NH–X oder Sulfo substituiert sein kann, ein in o-Stellung zur Azogruppe durch das Sauerstoffatom substituierter Dimethyl- oder tert.-Butylphenolrest oder ein 2-Hydroxychinolinylrest ist, der die Azogruppe in 3-Stellung und das Sauerstoffatom in 4-Stellung enthält und X den α,β-Dibrompropionyl-, α-Bromacryloyl-, Chloracetyl-, β-Chlorpropionyl, 2-Fluor-4-(N-äthyl-N-phenylamino)- 1,3,5-triazinyl-6-, 2-Fluor-4-methoxy- oder 4-β-äthoxy-äthoxy-1,3,5-triazinyl-6-, 2-Chlor- 4-phenylamino- 1,3,5-triazinyl-6-, 2-Chlor- 4-methoxy- oder 4-äthoxy- oder 4-isopropoxy- 1,3,5-triazinyl-6- oder 2,4-Difluor- 5-chlorpyrimidinyl-6-rest bedeutet, Me ein Chrom- oder Kobaltatom und Ka ein Alkalikation ist.

Insbesondere bedeutet Me in den Formeln (1), (4) und (5) das Chromatom.

Bevorzugt sind ferner die Chrom- oder Kobaltkomplexe der Formel (5), worin B den Rest der Formel (6) bedeutet und X den α,β-Dibrompropionylrest bedeutet.

Insbesondere bedeutet Y in den Formeln (2) und (4) das Stickstoffatom.

Ganz besonders bevorzugt sind die Chromkomplexe der Formel (5), worin K ein Naphthalinrest ist, der ausser durch den Rest –NH–X durch 1 oder 2 Sulfogruppen substituiert sein kann und das Sauerstoffatom in o-Stellung zur Azogruppe enthält.

Besonders interessante Chromkomplexe entsprechen der Formel

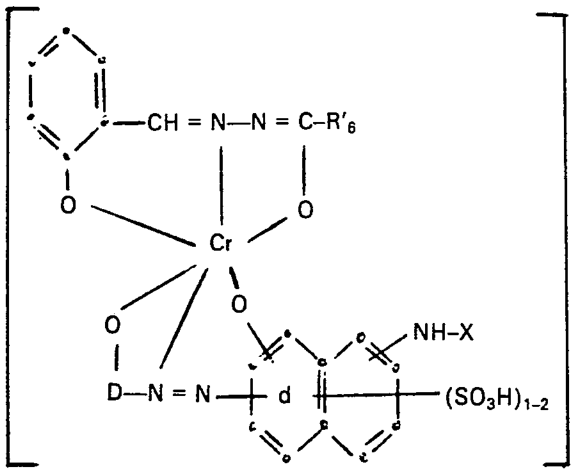

⊖Ka

(10)

worin $R'_6$ Wasserstoff, Methyl, Phenyl oder Amino ist, D ein Benzolrest ist, der das Sauerstoffatom in o-Stellung zur Azobrücke enthält und durch Chlor oder Nitro substituiert sein kann, oder ein Naphthalinrest ist, der das Sauerstoffatom in 1- oder 2-Stellung und die Azogruppe in 2- oder 1-Stellung enthält und der substituiert sein kann durch Sulfo oder Nitro, und X ein α,β-Dibrompropionyl- oder α-Bromacryloylrest ist, und worin die Azogruppe in o-Stellung zu dem Sauerstoffatom an den Ring d gebunden ist und Ka ein Alkalikation ist.

Ganz besonders bevorzugt ist der Chromkomplex der Formel

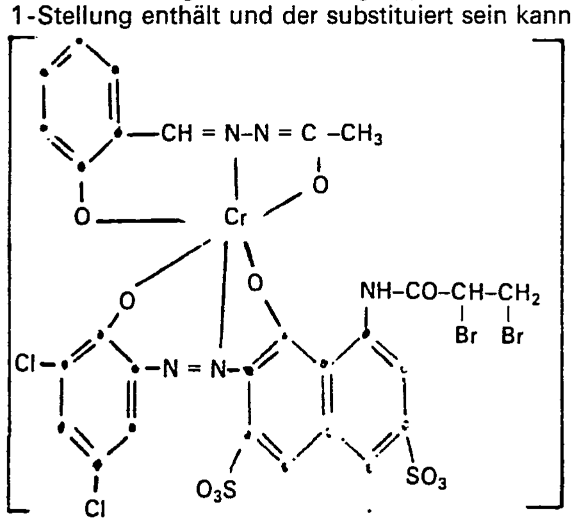

3⊖

3Ka

(11)

worin Ka ein Alkalikation ist.

Gegenstand der Erfindung ist ferner ein Verfahren zur Herstellung der Chromkomplexe der Formel (1), welches dadurch gekennzeichnet ist, dass man eine den Rest B einführende Verbindung oder deren Vorprodukte mit einem 1:1-Komplex der Formel

$$\left[ A \equiv Me \equiv (L)_3 \right] \begin{matrix} {}^{\oplus}An \\ (X)_n \end{matrix} \qquad (12)$$

worin A, Me und X die unter Formel (1) angegebenen Bedeutungen haben, An ein Anion und n = 0, 1, 2, 3 oder 4 ist und L ein gegebenenfalls den 1:1-Komplex stabilisierender farbloser Ligand ist, und worin A und/oder B mindestens eine wasserlöslichmachende Gruppe enthalten, in wässrigem, organischem oder wässrig-organischem Medium umsetzt, und gegebenenfalls anschliessend den erhaltenen Chrom- oder Kobaltkomplex mit einer den (die) faserreaktiven Rest(e) X einführenden Verbindung umsetzt.

Vorzugsweise wird die den Rest B einführende Verbindung mit dem 1:1-Chrom- oder Kobaltkomplex der Formel (12) bei einer Temperatur von 50 bis 100 °C und einem pH von 5 bis 9 umgesetzt.

Die Umsetzung mit einer die Reaktivgruppe(n) einführenden Verbindung erfolgt insbesondere bei einer Temperatur von 15 bis 30 °C und einem pH von 5 bis 8.

In der Literatur sind viele metallisierbare Azo- und Azomethinfarbstoffe beschrieben, die den Rest A liefern können, wie z.B. o,o'-Dihydroxy-, o-Carboxy-o'-hydroxy-,o-Hydroxy-o'-aminoazo- oder Azomethinverbindungen, die insbesondere der Formel

$$\left[ \overset{Z_3}{\overset{|}{D}} - N = Y - \overset{Z_4}{\overset{|}{K}} \right] (So_3{}^{\ominus}Ka)_r \qquad (13)$$

entsprechen, worin $Z_3$ die Hydroxy-, Carboxy- oder Methoxygruppe, $Z_4$ die Hydroxy- oder HN(R)-Gruppe ist und D, K, Y, Ka und R die unter Formel (2) angegebenen Bedeutungen haben, und r = 0, 1, 2, 3 oder 4 ist, und D und/oder K gegebenenfalls funktionelle Gruppen enthalten, welche zur Einführung der faserreaktiven Gruppe(n) X geeignet sind, wie z.B. Aminogruppen oder in Aminogruppen überführbare Gruppen wie z.B. die Acetylamino- oder die Nitrogruppe. Die Verbindungen der Formel (13), worin Y ein Stickstoffatom ist, werden in an sich bekannter Weise hergestellt, indem man ein Amin der Formel

$$(Ka^{\ominus}O_3S)_s - \overset{Z_3}{\overset{|}{D}} - NH_2 \qquad (14)$$

diazotiert und auf eine Kupplungskomponente der Formel

$$H - \overset{Z_4}{\overset{|}{K}} - (SO_3{}^{\ominus}Ka)_t \qquad (15)$$

kuppelt, wobei D, K, $Z_3$, $Z_4$ und Ka die unter Formel (13) angegebenen Bedeutungen haben und s + t = r ist.

Die Diazotierung der Diazokomponente der Formel (14) erfolgt in der Regel durch Einwirkung salpetriger Säure in wässrig-mineralsaurer Lösung bei tiefer Temperatur, die Kupplung auf die Kupplungskomponente der Formel (15) bei sauren, neutralen bis alkalischen pH-Werten.

Als Amine der Formel (14) kommen z.B. in Betracht:

2-Amino-1-hydroxybenzol, 2-Amino-1-methoxybenzol, Anthranilsäure, 4- oder 5-Sulfonamido-anthranilsäure, 3- oder 5-Chloranthranilsäure, 4-Chlor- und 4,6-Dichlor-2-amino-1-hydroxybenzol, 4- oder 5- oder 6-Nitro-2-amino-1-hydroxybenzol, 4-Chlor- und 4-Methyl- und 4-Acetylamino-6-nitro-2-amino-1-hydroxybenzol, 6-Acetylamino- und 6-Chlor-4-nitro-2-amino-1-hydroxybenzol, 4-Cyan-2-amino-1-hydroxybenzol, 4-Methoxy-2-amino-1-hydroxybenzol, 2-Amino-1-hydroxybenzol-5--methyl- und 5-benzylsulfon, 2-Amino-1-hydroxybenzol-4-methyl-, -äthyl-, -chlormethyl- und butylsulfon, 6-Chlor-, 5-Nitro- und 6-Nitro-2-amino-1-hydroxybenzol-4-methylsulfon, 2-Amino-1-hydroxybenzol-4- oder -5-sulfamid, -sulf-N-methyl- und -sulf-N-β-hydroxyäthylamid, 2-Amino-1-methoxybenzol-4-sulfanilid, 4-Methoxy-5-chlor-2-amino-1-hydroxybenzol, 4-Methyl-2-amino-1-hydroxybenzol, 4-Chlor-5-nitro-2-amino-1-hydroxybenzol, 5-Nitro-4-methyl-2-amino-1-hydroxybenzol, 5-Nitro-4-methoxy-2-amino-1-hydroxybenzol, 3,4,6-Trichlor-2-amino-1-hydroxybenzol, 6-Acetylamino-4-chlor-2-amino-1-hydroxybenzol, 4,6-Dinitro-2-amino-1-hydroxybenzol, 4-Nitro-2-amino-1-hydroxybenzol-5- oder -6-sulfonsäureamid, 4- oder 5-Chloranisidin, 4- oder 5-Nitro-anisidin, 2-Methoxy-5-methylanilin, 2,5-Dimethoxyanilin, 2-Anisidin-4- oder -5-β-hydroxyäthylsulfon, 4-Methyl-6-sulfo-2-amino-1-hydroxybenzol, 2-Amino-4-sulfo-1-hydroxybenzol, 4-Chlor-6-sulfo-2-amino-1-hydroxybenzol, 6-Chlor-4-sulfo-2-amino-1-hydroxybenzol, 5-Nitro-4-sulfo-2-amino-1-hydroxybenzol, 4-Nitro-6-sulfo-2-amino-1-hydroxybenzol, 6-Nitro-4-sulfo-2-amino-1-hydroxybenzol, 4-Acetylamino-2-amino-1-hydroxybenzol, 4-Acetylamino-6-sulfo-2-amino-1-hydroxybenzol, 5-Acetylamino-2-amino-1-hydroxybenzol, 6-Acetylamino-4-sulfo-2-amino-1-hydroxybenzol, 4-Chlor-2-amino-1-hydroxybenzol-5-sulfamid, 2-Amino-1-hydroxybenzol-4-(N-2'-Carboxyphenyl)sulfamid, 1-Amino-2-hydroxy-4-sulfonaphthalin, 1-Amino-2-hydroxy-4-sulfo-6-nitronaphthalin, 1-Amino-2-hydroxy-4-sulfo-6-acetamidonaphthalin, 1-Amino-2-hydroxy-4,8-disulfonaphthalin, 1-Amino-2-hydroxy-6-sulfonaphthalin,

1-Amino-2-hydroxy-7-sulfonaphthalin, 1-Amino-2-hydroxy-8-sulfonaphthalin, 2-Amino-1-hydroxy-4-sulfonaphthalin, 2-Amino-1-hydroxy-6-sulfonaphthalin.

Die Kupplungskomponenten der Formel (15) können sich z.B. von folgenden Gruppen von Kupplungskomponenten ableiten:

– In o-Stellung zur OH-Gruppe kuppelnde Naphthole, die gegebenenfalls mit Chlor, Amino, Acylamino, Acyl, $C_{1-4}$-Alkyl, $C_{1-4}$-Alkoxy, Sulfonamido-, N-mono- oder N,N-disubstituierten Sulfonamidogruppen, Sulfo- und Sulfongruppen substituiert sind.

– In o-Stellung zur Aminogruppe kuppelnde Naphthylamine, die gegebenenfalls mit Halogen, insbesondere Brom, $C_{1-4}$-Alkyl, $C_{1-4}$-Alkoxy, Sulfonamido-, mono- oder disubstituierten Sulfonamido-, Sulfo- oder Sulfongruppen substituiert sind.

– 5-Pyrazolone oder 5-Aminopyrazole, die in 1-Stellung einen gegebenenfalls mit Halogen, wie z.B. Chlor, Nitro, $C_{1-4}$-Alkyl- und Alkoxygruppen, Sulfonamido-, N-alkylierten Sulfonamidogruppen, Sulfo oder Sulfongruppen und insbesondere Aminogruppen substituierten Phenyl- oder Naphthylrest besitzen.

– 2,6-Dihydroxy- 3-cyano- oder -3-carbonamido-4-alkylpyridine und 6-Hydroxy-2-pyridone, die in 1-Stellung durch gegebenenfalls substituiertes $C_{1-4}$-Alkyl, z.B. Methyl, Isopropyl, β-Hydroxyäthyl, β-Aminoäthyl, γ-Isopropoxypropyl oder durch $-NH_2$ oder eine substituierte Aminogruppe wie z.B. Dimethylamino oder Diäthylamino substituiert sind, in 3-Stellung eine Cyano- oder Carbonamidogruppe und in 4-Stellung eine $C_{1-4}$-Alkylgruppe, insbesondere Methyl, tragen.

– Acetessigsäureanilide und Benzoylessigsäureanilide, die im Anilidkern gegebenenfalls mit $C_{1-4}$-Alkyl-, Alkoxy-, Alkylsulfonylgruppen, $C_{1-4}$-Hydroxyalkyl-, Alkoxyalkyl- oder Cyanalkylsulfonylgruppen, Sulfonamido-, N-alkylierten Sulfonamidogruppen, Sulfo, Acetylamino und Halogen substituiert sein können.

– Phenole, die mit niedrigmolekularen Acylaminogruppen und/oder mit 1 bis 5 Kohlenstoffatome enthaltenden Alkylgruppen substituiert sind und in o-Stellung kuppeln.

– Hydroxychinoline, die gegebenenfalls durch Hydroxy substituiert sind.

Beispiele solcher Kupplungskomponenten sind:

2-Naphthol, 1-Naphthol, 1-Hydroxynaphthalin-4-, -5- oder -8-sulfonsäure, 1,3- oder 1,5-Dihydroxynaphthalin, 1-Hydroxy-7-aminonaphthalin-3-sulfonsäure, 2-Naphthol-6-sulfonamid, 1-Hydroxy-7-N-methyl- oder N-acetylaminonaphthalin-3-sulfonsäure, 2-Naphthol-6-β-hydroxyäthylsulfon, 1-Hydroxy-6-amino- oder -6-N-Methyl- oder -6-N-Acetylaminonaphthalin-3-sulfonsäure, 1-Hydroxy-7-aminonaphthalin-3,6-disulfonsäure, 1-Hydroxy-6-aminonaphthalin-3,5- oder -4,8-disulfonsäure, 1-Acetylamino-7-naphthol, 1-Hydroxy-6-N-(4'-aminophenyl)aminonaphthalin-3-sulfonsäure, 1-Hydroxy-5-aminonaphthalin-3-sulfonsäure, 1-Propionylamino-7-naphthol, 2-Hydroxy-6-aminonaphthalin-4-sulfonsäure, 1-Carbomethoxyamino-7-naphthol, 1-Hydroxy-8-aminonaphthalin-5-sulfonsäure, 1-Carboäthoxy-amino-7-naphthol, 1-Hydroxy-8-aminonaphthalin-5,7-disulfonsäure, 1-Carbopropoxy-amino-7-naphthol, 1-Hydroxy-8-aminonaphthalin-3-sulfonsäure, 1-Dimethylaminosulfonyl -amino-7-naphthol, 6-Acetylamino-2-naphthol, 1-Hydroxy-8-amino-naphthalin- 3,5- oder -3,6-disulfonsäure, 4-Acetylamino-2-naphthol, 2-Hydroxy-5-aminonaphthalin-4,7-disulfonsäure, 4-Methoxy-1-naphthol, 4-Acetylamino-1-naphthol, 1-Naphthol-3-, -4- oder -5-sulfonamid, 2-Naphthol -3-, -4-, -5-, -6-, -7- oder -8-sulfonamid, 5,8-Dichlor-1-naphthol,5-Chlor-1-naphthol, 2-Naphthylamin, 2-Naphthylamin-1- oder -6-sulfonsäure, 1-Naphthylamin-4-sulfonsäure, 2-Aminonaphthalin-5-, -6- oder -7-sulfonamid, 2-Aminonaphthalin-6-sulfonsäure-N-methyl-, -äthyl-, -isopropyl-, -β-oxyäthyl- oder -γ-methoxypropylamid, 2-Aminonaphthalin-6-sulfanilid, 2-Aminonaphthalin-6-sulfonsäure-N-methylanilid, 1-Aminonaphthalin-3-, -4- oder -5-sulfonamid, 1-Aminonaphthalin-5-methyl- oder -äthylsulfon, 5,8-Dichlor-1-aminonaphthalin, 2-Phenylaminonaphthalin, 2-N-Methylaminonaphthalin, 2-N-Äthylaminonaphthalin, 2-Phenylaminonaphthalin-6-sulfonsäure, 2-Phenylaminonaphthalin-5-, -6- oder -7-sulfonamid, 2-(3'-Chlorphenylamino)-naphthalin-5-, -6- oder -7-sulfonamid, 6-Methyl-2-aminonaphthalin, 6-Brom-2-amino-naphthalin, 6-Methoxy-2-aminonaphthalin, 1,3-Dimethylpyrazolon, 3-Methyl-5-pyrazolon, 1-Phenyl-3-methyl-5-pyrazolon, 1-Phenyl-3-carbonamido-5-pyrazolon, 1-(2'-, 3'- oder 4'-Methylphenyl)-3-methyl-5-pyrazolon, 1-[3'-oder4'-(β-Hydroxyäthylsulfonyl)-phenyl]-3-methyl-5-pyrazolon, 1-(2'-Methoxyphenyl)-3-methyl-5-pyrazolon,1-(2'-, 3'- oder 4'-Chlorphenyl)-3-methyl-5-pyrazolon, 1-(2'-,3'-oder4'-Nitrophenyl)-3-methyl-5-pyrazolon,1-(2',5'-oder3',4'-Dichlorphenyl)-3-methyl-5-pyrazolon, 1-(2'-, 3'- oder 4'-Sulfamoylphenyl)-3-methyl-5-pyrazolon, 1-(2-, 3'- oder 4'-Methylsulfonylphenyl)-3-methyl-5-pyrazolon, 2,6-Dihydroxy-3-cyano-4-methylpyridin, 1-Methyl-3-cyano-4-äthyl-6-hydroxypyridon-(2), 1-Amino-3-cyano-4-methyl-6-hydroxypyridon(2), 1-Phenyl-3-carbonamido-4-methyl-6-hydroxypyridon-(2), Acetoacetanilid, Acetoacet-o-, -m- oder -p-sulfoanilid, Acetoacet-4-(β-hydroxyäthylsulfonyl)-anilid, Acetoacet-o-anisidid, Acetoacetnaphthylamid, Acetoacet-o-toluidid, Acetoacet-o-chloranilid, Acetoacet-m- oder -p-chloranilid, Acetoacetanilid-3- oder -4-sulfonamid, Acetoacet-3- oder -4-aminoanilid, Acetoacet-m-xylidid, Benzoylessigsäureanilid, 4-Methylphenyol, 3-Dialkylaminophenol, besonders 3-Dimethylamino- und 3-Diäthylaminophenyol, 4-t-Butylphenol, 4-t-Amylphenol, 2- oder 3-Acetylamino-4-methylphenol, 2-Methoxycarbonylamino-4-methylphenol, 2-Äthoxycarbonylamino-4-methylphenol, 3,4-Dimethylphenol und 2,4-Dimethylphenol, 1-(4'-Aminophenyl)-3-methyl-5-pyrazolon, 1-(2'-, 3'- oder 4'-Sulfophenyl)-3-methyl-5-pyrazolon, 1-(2'-Chlor-4'- oder 5'-sulfophenyl)-3-methyl-5-pyrazolon, 1-(2'-Methyl-6'-chlorphenyl)-3-methyl-5-pyrazolon, 1-(2'-Methyl-4'-sulfophenyl)-3-methyl-5-pyrazolon, 1-(2'-, 3'- oder 4'-Chlor- oder Methyl- oder Sulfophenyl)-3-carboxy-5-pyrazolon, 1-[5'-sulfonaphthyl(2')]-3-methyl-5-pyrazolon,1-[4"-Amino-2'2"-disulfostilben(4')]-3-methyl-5-pyrazolon,1-Äthyl-3-cyano-4-methyl-6-

hydroxypyridon-(2), 1-Äthyl-3-sulfomethyl-4-methyl-6-hydroxypyridon-(2), 2,6-Dihydroxy-3-cyano-4-sulfomethylpyridin, 2,4,6-Trihydroxypyrimidin, 2,4-Dihydroxychinolin.

Für die Herstellung der Azomethinfarbstoffe der Formel (13) werden in bekannter Weise die oben genannten aromatischen Amine der Formel (14) mit o-Hydroxybenzaldehyden oder o-Hydroxynaphthaldehyden kondensiert.

Geeignete Aldehyde sind beispielsweise:

2-Hydroxybenzaldehyd, 3- und 5-Methyl-2-hydroxybenzaldehyd, 3,5- und 3,6-Dimethyl-2-hydroxybenzaldehyd, 5-Butyl-2-hydroxybenzaldehyd, 5-Chlor- oder -Brom-2-hydroxybenzaldehyd, 3- und 4-Chlor-2-hydroxybenzaldehyd, 3,5-Dichlor-2-hydroxybenzaldehyd, 3-Chlor-5-methyl-2-hydroxybenzaldehyd, 3-Methyl-5-chlor-2-hydroxybenzaldehyd, 3- und 4- und 5-Nitro-2-hydroxybenzaldehyd, 3,5-Dinitro- und 4-Chlor- 5-nitro-2-hydroxybenzaldehyd, 4-Methoxy-2-hydroxybenzaldehyd, 1-Hydroxy-2-naphthaldehyd und dessen in 4-Stellung chlorierter Abkömmling; und 2-Hydroxy-1-naphthaldehyd.

Bevorzugt sind diejenigen erfindungsgemässen Chrom- oder Kobaltkomplexe, worin Y ein Stickstoffatom und K der Rest einer Kupplungskomponente der Naphthalinreihe ist.

Gegebenenfalls kann eine freie Aminogruppe im Rest D und/oder K nach der Kupplung mit einem Acylierungs- oder Alkylierungsmittel in eine Acylamino- oder Alkylaminogruppe umgewandelt werden, und ebenso kann eine Hydroxygruppe im Rest D und/oder K durch Alkylierung in eine Alkoxygruppe übergeführt werden.

Eine weitere Ausführungsform des Verfahrens zur Herstellung des 1:1-Chrom- oder Kobaltkomplexazomethinfarbstoffes der Formel (12) ist dadurch gekennzeichnet, dass man den 1:1-Chrom- oder Kobaltkomplex der Formel (12) statt mit dem Azomethin der Formel (13) auch mit einem Gemisch des Amins der Formel (14) und einem o-Hydroxybenzaldehyd oder einem o-Hydroxynaphthaldehyd herstellen kann.

Die Amine der Formel (14), die Kupplungskomponenten der Formel (15) und die o-Hydroxybenzaldehyde oder o-Hydroxynaphthaldehyde können in Aminogruppen überführbare Reste, wie z.B. die Acetylamino- oder die Nitrogruppe, enthalten. Beispielsweise kann eine Acetylaminogruppe durch Verseifen und eine Nitrogruppe durch Reduktion in eine Aminogruppe überführt werden, vorteilhafterweise im Anschluss an die Herstellung der Farbstoffe der Formel (13) oder die Herstellung des 1:1-Chrom- oder Kobaltkomplexes der Formel (12).

Die Herstellung der 1:1-Chrom- oder Kobaltkomplexe geschieht nach an sich bekannten Methoden. Man stellt z.B. den 1:1-Chromkomplex der Verbindung der Formel (12) her, indem man die metallfreie Verbindung in saurem Medium mit einem Salz des dreiwertigen Chroms wie Chromchlorid, Chromfluorid oder Chromsulfat umsetzt, gegebenenfalls in Anwesenheit von löslichkeitsfördernden oder die Chromierung beschleunigenden Mitteln, wie z.B. Alkoholen oder Hydroxycarbonsäuren. Anschliessend lässt man den 1:1-Komplex bei pH-Werten von 5–9 mit einer Verbindung, welche den Rest B einführt, reagieren.

Die Herstellung der 1:1-Kobaltkomplexe der Formel (12) geschieht nach an sich bekannten Methoden. Man stellt z.B. den 1:1-Kobaltkomplex der Verbindung der Formel (12) her, indem man die metallfreie Verbindung in schwach saurer, neutraler oder alkalischer Lösung oder Dispersion in an sich bekannter Weise mit einer farblosen Kobalt (III)-Komplex-Verbindung umsetzt. Als farblose Kobalt (III)-Komplex-Verbindungen eignen sich die Umsetzungsprodukte eines farblosen Komplexbildners, wie z.B. Diäthylentriamin, Ammoniak oder $NO_2^{\ominus}$-Ionen, mit einem Kobalt (II)- oder (III)-salz, wie z.B. Kobalt (III)-hexammin-trichlorid, Kobalt (II)-chlorid, Kobalt (II)-sulfat, Kobalt (II)-acetat.

Die Umsetzung zu dem Kobaltkomplex der Formel (1) erfolgt bei pH-Werten von 5–9 mit einer Verbindung, welche den Rest B einführt.

Die Metallisierung der Azo- oder Azomethinverbindung erfolgt vorzugsweise in wässriger Lösung gegebenenfalls unter Zusatz von organischen Lösungsmitteln wie Alkoholen oder Dimethylformamid, oder aber in rein organischen Lösungsmitteln, z.B. in Alkoholen, Glykolen, Glykol-äthern oder -estern, Glycerin oder Ketonen, wie z.B. Methylisobutylketon. Man metallisiert zweckmässig in schwach saurem bis alkalischem Medium, vorzugsweise im pH-Bereich zwischen 5 und 9. Zur Beschleunigung der Metallisierung kann der Reaktionslösung ein Oxidationsmittel, wie z.B. Wasserstoffperoxid oder Nitrobenzolsulfonsäure zugegeben werden.

Als den Rest B einführende Verbindungen kommen definitionsgemäss komplexierbare Acylhydrazone, Semicarbazone oder Thiosemicarbazone oder deren Vorprodukte in Betracht, die mit dem Chrom- oder Kobalt zwei kovalente und eine koordinative Bindung eingehen können.

Insbesondere bevorzugt sind die Verbindungen der Formel

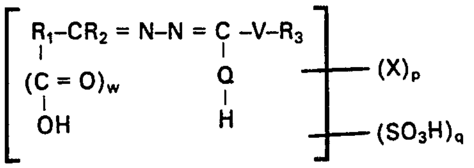

(16),

worin $R_1$, $R_2$, V, $R_3$, Q, X, w und p die unter Formel (3) angegebenen Bedeutungen haben und q = 0, 1 oder 2 ist. Die sulfogruppenfreien Verbindungen der Formel (16) sind bekannt und werden nach an sich bekannten Methoden hergestellt. Die Verbindungen der Formel (16), worin $R_1$ die direkte Bindung, ein unsubstituierter oder durch Halogen, $C_{1-4}$-Alkoxy, Phenyl, Naphthyl, Carboxy, $C_{1-8}$-Alkoxycarbonyl, Phenoxycarbonyl, $C_{1-8}$-Alkylaminocarbonyl oder Phenylaminocarbonyl substituierter Alkyl- oder Alkenylrest, vorzugsweise mit 1 bis 8 Kohlenstoffatomen, oder ein unsubstituierter oder durch $C_{1-4}$-Alkyl, $C_{1-4}$-Alkoxy, Halogen, $C_{2-5}$-Alkanoylamino, Nitro oder Cyano

substituierter Phenyl- oder Naphthylrest, oder ein heterocyclischer Rest, $R_2$ Wasserstoff oder ein Alkyl-, vorzugsweise $C_{1-8}$-Alkyl-, Phenyl- oder Naphthylrest, der wie für den Alkyl-, Phenyl- oder Naphthylrest $R_1$ angegeben substituiert sein kann, V die direkte Bindung oder ein Sauerstoffatom, $R_3$ Wasserstoff, ein Alkyl-, vorzugsweise $C_{1-8}$-Alkyl-, Phenyl- oder Naphthylrest, der wie für den Alkyl-, Phenyl- oder Naphthylrest $R_1$ angegeben substituiert sein kann, ein heterocyclischer Rest oder eine gegebenenfalls substituierte Aminogruppe, Q ein Sauerstoff- oder Schwefelatom, X ein faserreaktiver Rest, p = 0, 1 oder 2, q = 1 oder 2 und w = 0 oder 1 ist, sowie deren Chrom- oder Kobaltkomplexe. Diese Verbindungen sind neu und stellen einen weiteren Gegenstand der Erfindung dar. Sie werden hergestellt, indem man z.B. ein Hydrazid der Formel

$$H_2N-NH-\underset{\underset{Q}{||}}{C}-V-R_3-(SO_3H)_u \qquad (17)$$

worin Q, V und $R_3$ die oben angegebenen Bedeutungen haben und u = 0, 1 oder 2 ist, in an sich bekannter Weise mit einer Carbonylverbindung der Formel

$$(HO_3S)_v-\underset{\underset{\underset{OH}{|}}{\underset{(C=O)_{0-1}}{|}}}{R_1}-C(R_2)=O \qquad (18)$$

worin $R_1$ und $R_2$ die oben angegebenen Bedeutungen haben und v = 0, 1 oder 2 ist, umsetzt, wobei u + v = 1 oder 2 sein muss; oder indem man ein Hydrazid der Formel (17) mit einem Aldimin der Formel

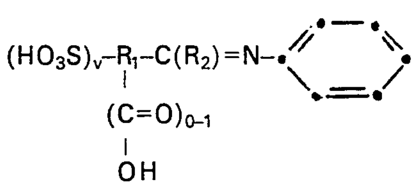 (19),

worin $R_1$, $R_2$ und v die unter Formel (18) angegebenen Bedeutungen haben, umsetzt, wobei u + v = 1 oder 2 sein muss; oder indem man ein Hydrazon der Formel

$$(HO_3S)_v-\underset{\underset{\underset{OH}{|}}{\underset{(C=O)_{0-1}}{|}}}{R_1}-(CR_2)=N-NH_2 \qquad (20),$$

worin $R_1$, $R_2$ und v die unter Formel (18) angegebenen Bedeutungen haben, in an sich bekannter Weise mit einer Verbindung der Formel

$$W-\underset{\underset{Q}{||}}{C}-V-R_3-(SO_3H)_u \qquad (21)$$

umsetzt, wobei Q, V, $R_3$ und u die unter Formel (16) angegebenen Bedeutungen haben, u + v = 1 oder 2 sein muss, und W ein abspaltbarer Rest, wie z.B. der Rest eines Anhydrids oder ein Halogenatom, insbesondere ein Chlor- oder Bromatom ist.

Als Beispiele für Verbindungen der Formel (17) seien genannt: Monoformylhydrazin, Monoacetylhydrazin, Monopropionylhydrazin, Monobenzoylhydrazin, Mono-(4-Chlor- oder 4-Nitrobenzoyl)-hydrazin, Semicarbazid, Thiosemicarbazid, Salicylsäurehydrazid, 5-Hydroxysalicylsäurehydrazid, 4-Trifluormethylsalicylsäurehydrazid, Pyridincarbonsäurehydrazid, 6-Chlor-3-hydroxychinolin-4-carbonsäurehydrazid.

Als Beispiele für Verbindungen der Formel (18) seien genannt: 4-Chlorsalicylaldehyd, 5-Chlorsalicylaldehyd, 3-Nitrosalicylaldehyd, 5-Nitrosalicylaldehyd, 3,5-Dichlorsalicylaldehyd, 3,5-Dibromsalicylaldehyd, 5-Sulfosalicylaldehyd, 2-Hydroxynaphthaldehyd, 6-Brom-2-hydroxynaphthaldehyd, 5-Nitro-2-hydroxynaphthaldehyd, 2-Hydroxy-3-carboxynaphthaldehyd, 2-Hydroxy- 3- methoxycarbonylnaphthaldehyd, 2-Hydroxy- 3-phenylcarbamoylnaphthaldehyd, 2,6-Dihydroxy-4-methyl-5-cyan-3-pyridinaldehyd, 2,6-Dihydroxy-4-methyl-5-carbamoyl-3-pyridinaldehyd, 2,4-Dihydroxychinolin-3-aldehyd, 2,4-Dihydroxy-3-acetylchinolin, 2-Hydroxyacetophenon, 2-Hydroxybenzophenon, Glykolaldehyd, Glyoxylsäure, Brenztraubensäure, Acetondicarbonsäure, Acetessigsäure-methyl-, -äthyl- oder propylester, Acetylaceton, Diacetonalkohol, 2-Phenyl-4,6-dihydroxy-5-pyrimidinaldehyd, 1-Phenyl-3-methyl-4-formyl-5-hydroxypyrazol.

Als Verbindungen der Formel (19) kommen die gleichen Verbindungen wie unter Formel (18) in Betracht, die anstelle der Carbonylgruppe einen Phenylaldiminrest enthalten.

Als Verbindungen der Formel (20) kommen die Umsetzungsprodukte der für Formel (18) genannten Verbindungen mit Hydrazin in Betracht.

Als Verbindungen der Formel (21) seien genannt: Essigsäureanhydrid, Propionsäureanhydrid, Essigsäuremethylester, Essigsäureäthylester, Propionsäuremethylester, Propionsäureäthylester, Ameisensäuremethylester, Ameisensäureäthylester.

Bevorzugt sind die sulfogruppenhaltigen Verbindungen der Formel (16), worin $R_1$ Phenyl, $R_2$ Wasserstoff, V die direkte Bindung, $R_3$ Wasserstoff, $C_{1-4}$-Alkyl, Phenyl oder Amino, w = 0, Q ein Sauerstoff- oder Schwefelatom, p = 0 und q = 1 ist.

Insbesondere ist die Sulfogruppe an $R_1$ gebunden. Als faserreaktive Reste X kommen die weiter oben genannten Reste in Betracht, die direkt, über eine Aminogruppe oder über ein eine Aminogruppe enthaltendes Brückenglied an $R_3$ oder vorzugsweise an $R_1$ gebunden sind.

Die Herstellung der Chrom- oder Kobaltkomplexe der Formel (1) kann auch dadurch erfolgen, dass man den 1:1-Chrom- oder Kobaltkomplex der Formel (12) mit Vorprodukten der den Rest B

einführenden Verbindung umsetzt. Diese Verfahrensweisen sind dadurch gekennzeichnet, dass man

a) als Vorprodukte der den Rest B einführenden Verbindung ein Hydrazid der Formel (17) zusammen mit einer Carbonylverbindung der Formel (18) verwendet, ohne die Bedingung, dass u + v = 1 oder 2 sein muss;

b) als Vorprodukte der den Rest B einführenden Verbindung ein Hydrazon der Formel (20) zusammen mit einer Verbindung der Formel (21) verwendet, ohne die Bedingung, dass u + v = 1 oder 2 sein muss.

Eine weitere Ausführungsform des erfindungsgemässen Verfahrens ist dadurch gekennzeichnet, dass man eine den Rest B einführende Verbindung zum 1:1-Chromkomplex mit einem das Chromatom einführenden Mittel umsetzt und anschliessend mit einem metallfreien komplexierbaren Azo- oder Azomethinfarbstoff umsetzt.

Werden als den Rest B einführende Verbindung solche der Formel (16) verwendet, worin q = 1 oder 2 ist, so sind diese 1:1 Chrom- oder Kobaltkomplexe neu und stellen einen weiteren Gegenstand der Erfindung dar.

Falls die Reaktivgruppe(n) X in dem Chrom- oder Kobaltkomplex der Formel (1) an den Rest A gebunden ist, erfolgt die Einführung der Reaktivgruppe(n) zweckmässigerweise nach Herstellung des 1:1-Chromkomplexes der Formel (12) oder vorzugsweise im Anschluss an die Umsetzung des 1:1-Chromkomplexes der Formel (12) mit der den Rest B einführenden organischen Verbindung. Falls die Reaktivgruppe(n) X in dem Chrom- oder Kobaltkomplex der Formel (1) an den Rest B gebunden ist (sind), erfolgt deren Einführung vorzugsweise im Anschluss an die Umsetzung mit dem 1:1-Chromkomplex der Formel (12).

Die Einführung der faserreaktiven Gruppe(n) X in den 1:1-Chrom- oder Kobaltkomplex der Formel (12) oder in den Chrom- oder Kobaltkomplex der Formel (16) erfolgt in an sich bekannter Weise dadurch, dass man diese Chrom- oder Kobaltkomplexe mit einem oder bis zu vier den (die) Rest(e) X einführenden oder bildenden Mittel(n) umsetzt, wobei die Reste A und/oder B in den Formeln (12) und (16) funktionelle Gruppen, welche die Bindung der faserreaktiven Gruppe(n) X ermöglichen, enthalten müssen. Solche zur Bindung der Reste X geeignete Gruppen sind z.B. gegebenfalls monoalkylierte Aminogruppen, wie beispielsweise $-NH_2$, $-N(CH_3)H$ oder $-N(C_2H_5)H$ oder z.B. die β-Oxyäthylsulfonylgruppe.

Die Einführung der Reaktivgruppe(n), die über eine Oxy-, Thio- oder vorzugsweise Aminogruppe gebunden ist (sind), erfolgt dadurch, dass man die Chrom- oder Kobaltkomplexe der Formeln (12) und (16) mit einem oder mehreren Acylierungsmittel(n), welche(s) einen oder bis zu vier gegebenenfalls voneinander verschiedene Rest(e) X einführt (einführen), umsetzt.

Die Bildung der direkt an die Reste A und/oder B gebundenen faserreaktiven Gruppe(n), wie z.B. die β-Sulfatoäthylsulfonylgruppe, erfolgt in an sich bekannter Weise, z.B. durch Sulfatierung der oben genannten β-Oxyäthylsulfonylgruppe.

Die erfindungsgemässen Chrom- oder Kobaltkomplexe der Formel (1) eignen sich zum Färben von stickstoffgruppenhaltigen oder hydroxygruppenhaltigen Materialien, wie z.B. Baumwolle, Seide, Leder und insbesondere Wolle und synthetische Polyamide. Man erhält egale Färbungen in gelben, braunen, orangen, roten, blauen, grauen, grünen und schwarzen Tönen mit guten Allgemeinechtheiten, insbesondere sehr guter Reib-, Nass-, Nassreib- und Lichtechtheit. Ferner sind die erfindungsgemässen Farbstoffe sehr gut mit faserreaktiven Säurefarbstoffen kombinierbar. Das oben genannte Textilmaterial kann in den verschiedensten Verarbeitungsformen vorliegen, wie z.B. als Faser, Garn, Gewebe oder Gewirke.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

Beispiel 1

53,9 Teile des Monoazofarbstoffes aus diazotierter 1-Amino-2-hydroxynaphthalin- 4-sulfonsäure und 1-Hydroxy- 6-aminonaphthalin-3-sulfonsäure in Form des 1 Atom Chrom pro Azofarbstoffmolekül enthaltenden 1:1-Chromkomplexes werden in 500 Teilen Wasser bei ca. 70° suspendiert und durch Zugabe von 2n-Natriumhydroxydlösung bei pH 7–7,5 gelöst. Nach Zugabe von 17,9 Teilen der Acylhydrazonverbindung aus Salicylaldehyd und Monoacetylhydrazin wird das Reaktionsgemisch bei 70–75° und pH 7–7,5 gerührt, bis die Ausgangsprodukte nicht mehr nachweisbar sind. Die erhaltene, klare blaue Lösung wird nach Abkühlen auf ca. 30 °C mit 15 Teilen Natriumbicarbonat versetzt und durch Zugabe von 200 Teilen Eis auf ca. 10 °C gekühlt. Anschliessend werden innerhalb 1 Stunde 30 Teile, 1,2-Dibrompropionylchlorid, verdünnt mit 30 Teilen Aceton, zugetropft. Nach weiteren 3 Stunden Rühren ohne Kühlung wird die erhaltene, tiefblaue Farbstofflösung im Vakuum bei 50–60° zur Trockne eingedampft. Der neue Farbstoff der Konstitution

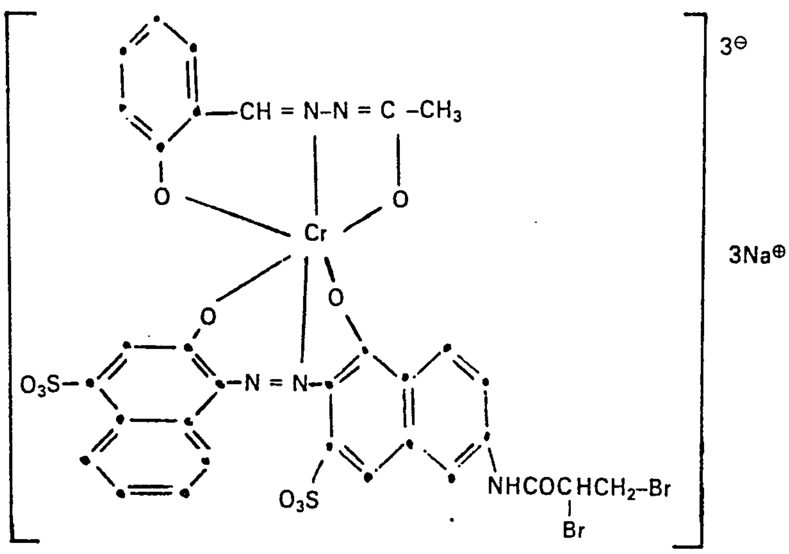

ist sehr gut wasserlöslich und färbt normale oder filzfrei ausgerüstete Wolle nach dem Verfahren des Färbebeispiels 3 in vollen, dunkelbaluen Tönen mit ausgezeichneten Echtheitseigenschaften.

Herstellung der Hydrazonverbindung:

24 Teile Salicylaldehyd werden mit 200 Teilen Äthylalkohol vermischt. Nach Zugabe von 14,8 Teilen Monoacetylhydrazin wird das Reaktionsgemisch unter Rühren zum Sieden erhitzt und während 2 Stunden am Rückfluss gehalten. Nach Abkühlen auf 5–10° wird der auskristallisierte Niederschlag abfiltriert und nach Waschen mit kaltem Äthylalkohol nochmals aus dem gleichen Lösungsmittel umkristallisiert. Die in einer Ausbeute von 92% der Theorie erhaltene Verbindung bildet schwach gelbliche, nadelförmige Kristalle vom Schmelzpunkt 199–201° und besitzt folgende Konstitution:

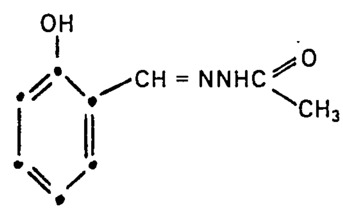

Weitere reaktive Metallkomplexfarbstoffe mit ähnlichen Eigenschaften erhält man in analoger Weise durch Umsetzen der 1:1-Chromkomplexe der in der folgenden Tabelle in Kolonne I angegebenen Monoazofarbstoffe mit den in Kolonne II aufgeführten Acylhydrazonverbindungen und anschliessende Acylierung des erhaltenen Chromkomplexes mit den in Kolonne III genannten Acylierungsmitteln. In Kolonne IV sind die mit den neuen Farbstoffen auf Wolle erzielbaren Farbtöne angegeben:

| Beispiel | I | II | III | IV |
|---|---|---|---|---|
| 2 | 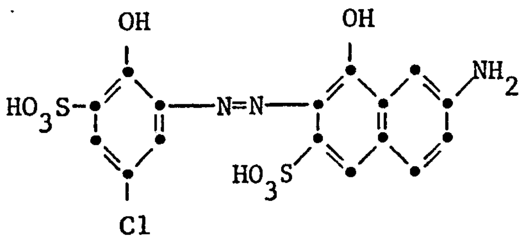 | 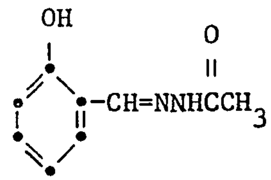 | 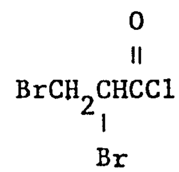 | grau |
| 3 | 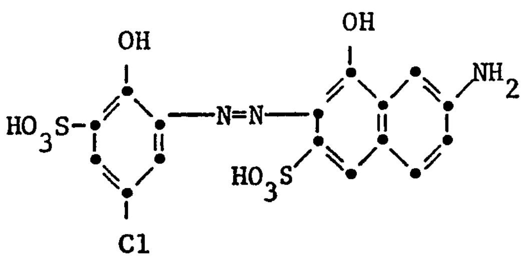 | 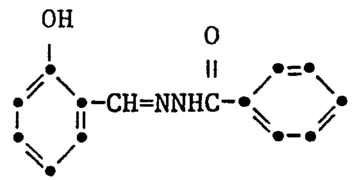 | 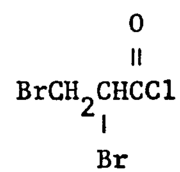 | grau |
| 4 | 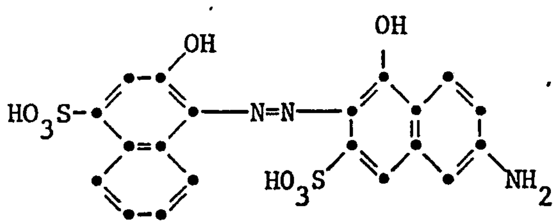 | 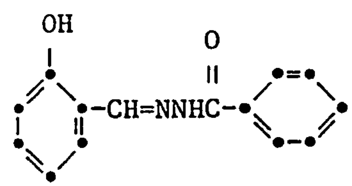 | 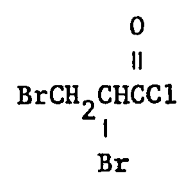 | dunkelblau |

| Beispiel | I | II | III | IV |
|---|---|---|---|---|
| 5 | 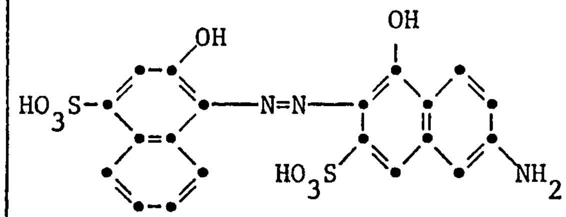 | 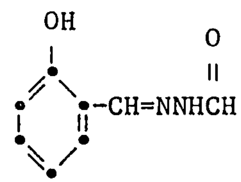 | 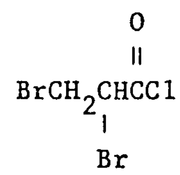 | blau |
| 6 | 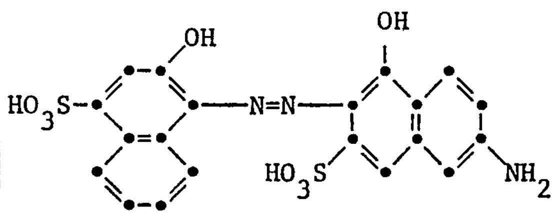 | 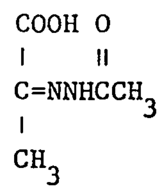 | 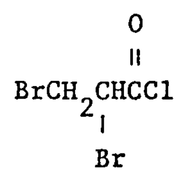 | blau |
| 7 | 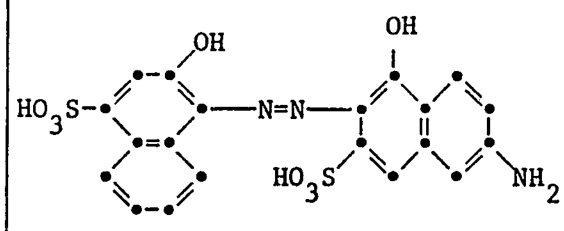 | 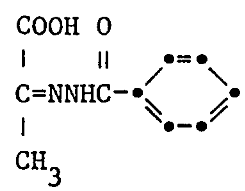 | 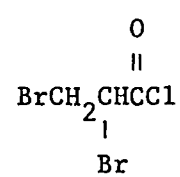 | dunkelblau |

| Beispiel | I | II | III | IV |
|---|---|---|---|---|
| 8 | 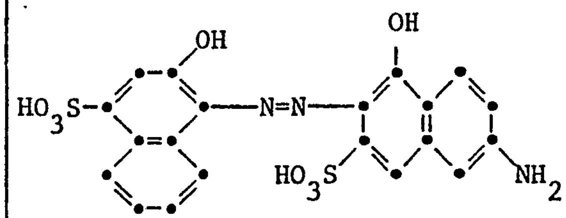 | 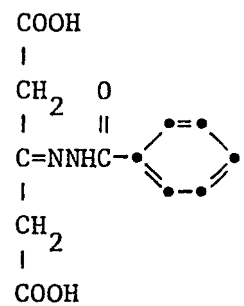 | 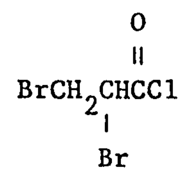 | dunkelblau |
| 9 | 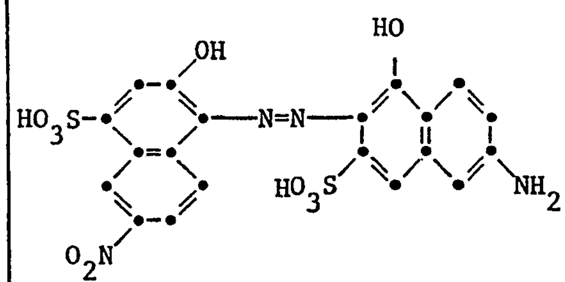 | 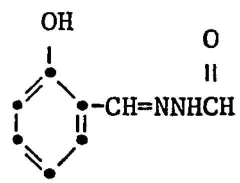 | 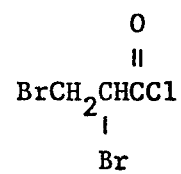 | grau |
| 10 | 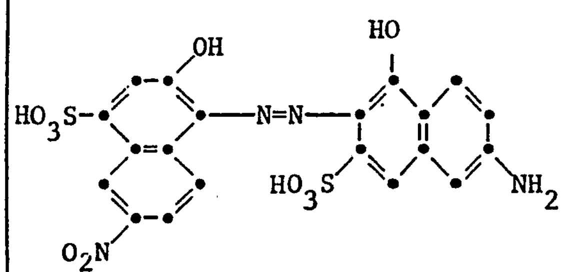 | 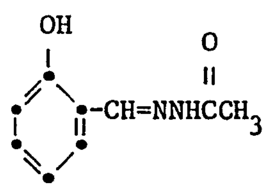 | 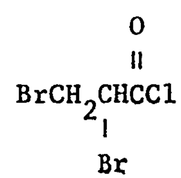 | grau |

| Beispiel | I | II | III | IV |
|---|---|---|---|---|
| 11 | 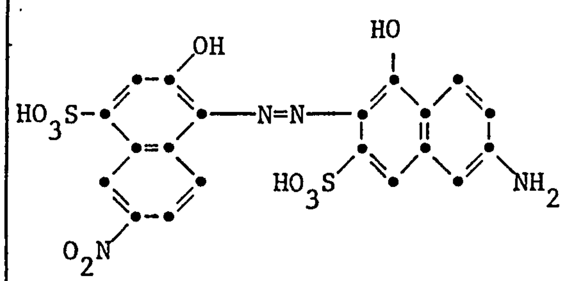 | 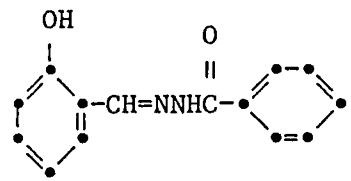 | 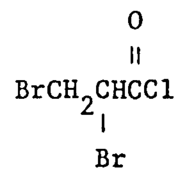 | grün-grau |
| 12 | 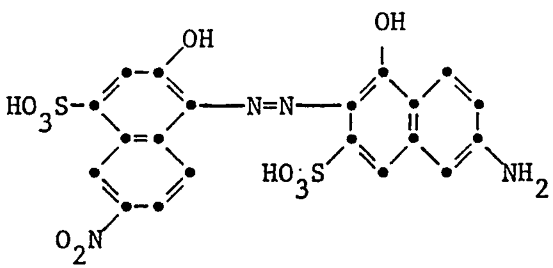 | 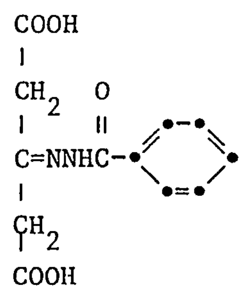 | 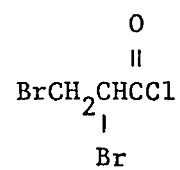 | blau-grau |
| 13 | 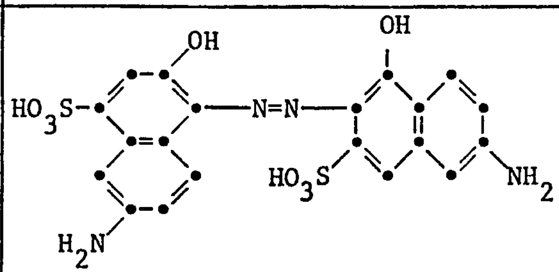 | 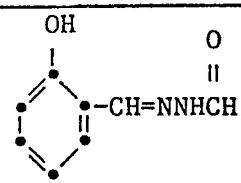 | 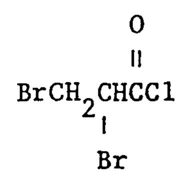 | dunkelblau |

| Beispiel | I | II | III | IV |
|---|---|---|---|---|
| 14 | 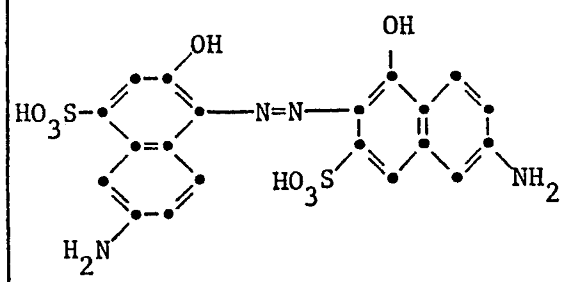 | 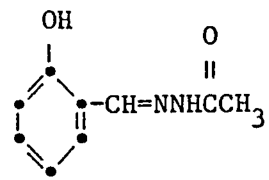 | 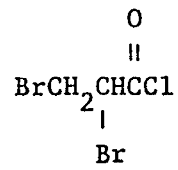 | dunkel-blau |
| 15 | 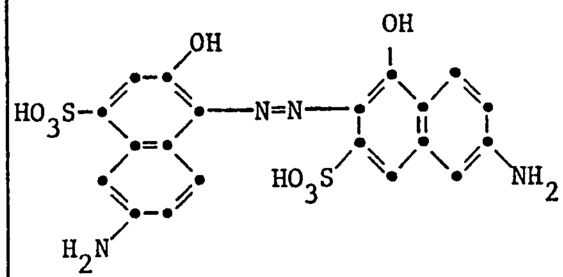 | 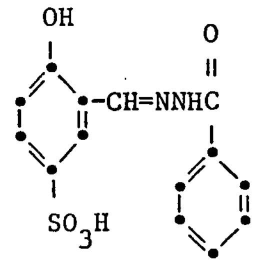 | 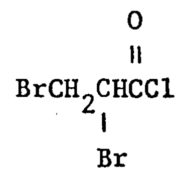 | dunkel-blau |
| 16 | 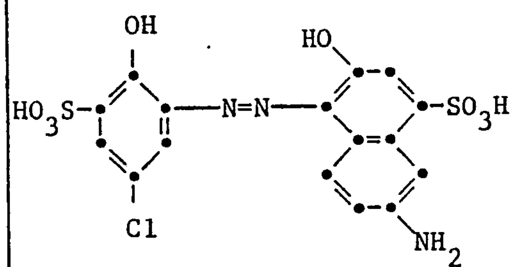 | 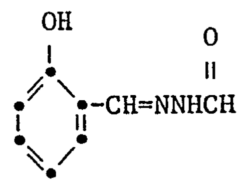 | 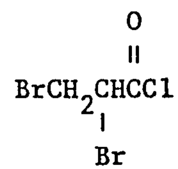 | blaugrau |

| Beispiel | I | II | III | IV |
|---|---|---|---|---|
| 17 | 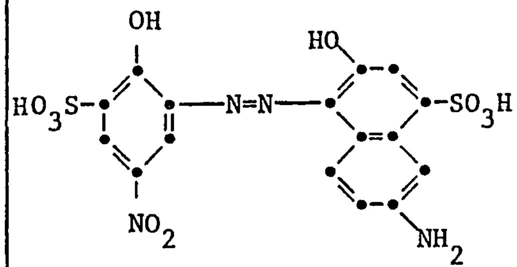 | 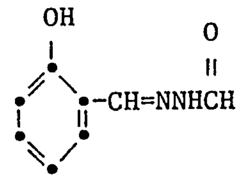 | 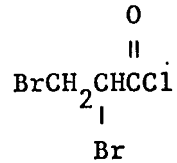 | grau |
| 18 | 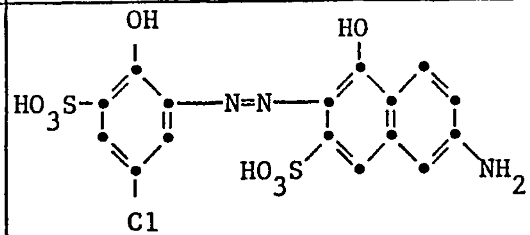 | 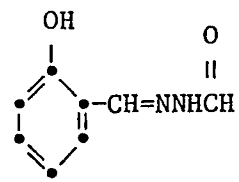 | 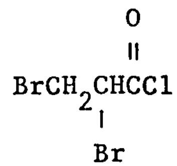 | grau |
| 19 | 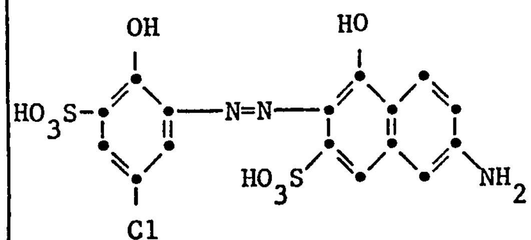 | 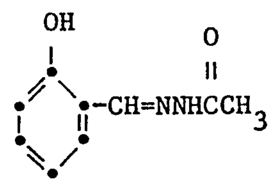 | 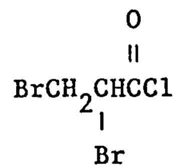 | grau |

| Beispiel | I | II | III | IV |
|---|---|---|---|---|
| 20 | 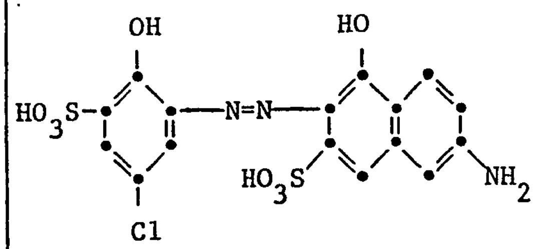 | 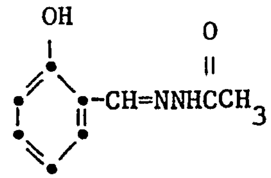 | 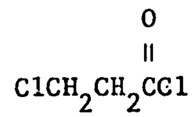 | grau |
| 21 | 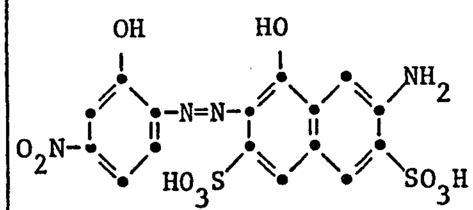 | 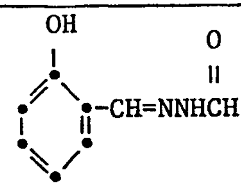 | 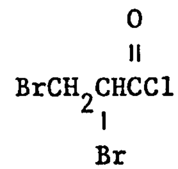 | blaugrau |
| 22 | 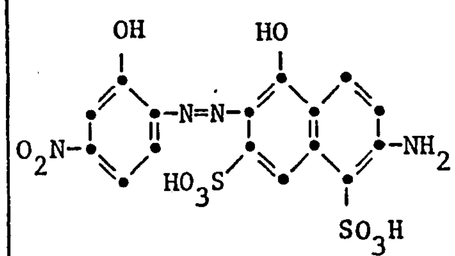 | 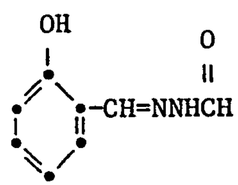 | 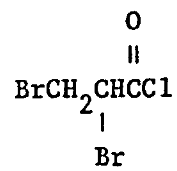 | marineblau |

| Beispiel | I | II | III | IV |
|---|---|---|---|---|
| 23 | 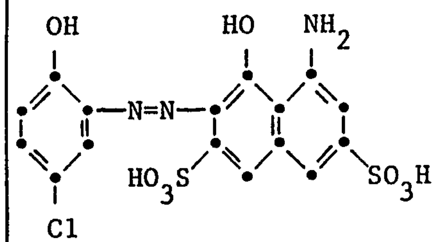 | 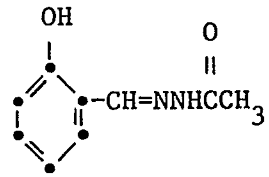 | 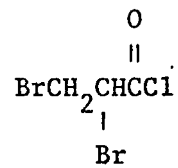 | marine-blau |
| 24 | 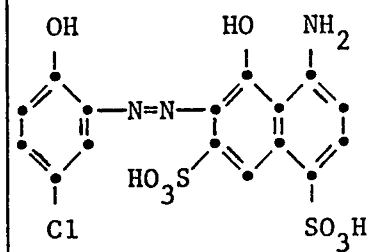 | 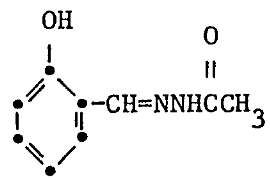 | 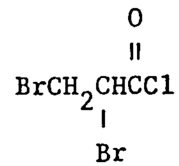 | marine-blau |
| 25 | 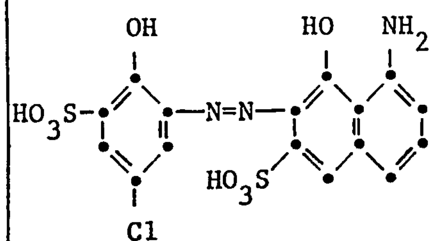 | 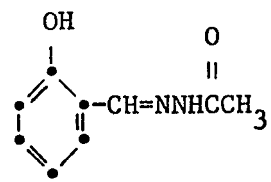 | 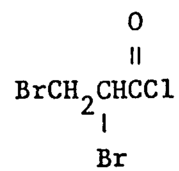 | marine-blau |

| Beispiel : | I | II | III | IV |
|---|---|---|---|---|
| 26 | 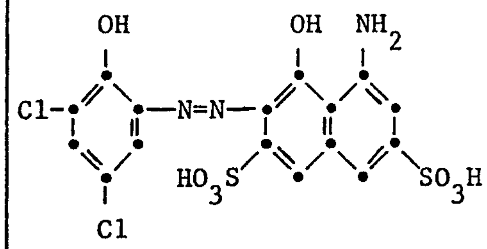 | 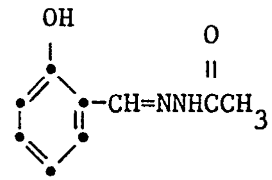 | 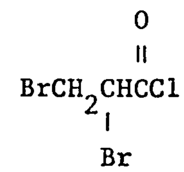 | marine-blau |
| 27 | 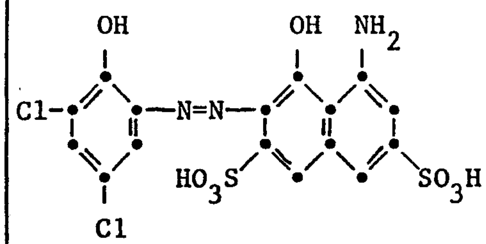 | 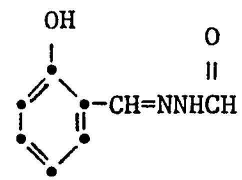 | 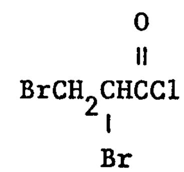 | marine-blau |
| 28 | 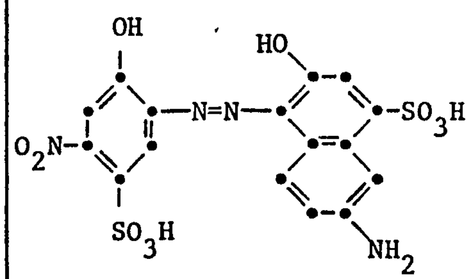 | 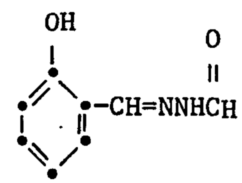 | 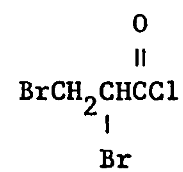 | grau |

| Beispiel | I | II | III | IV |
|---|---|---|---|---|
| 29 | 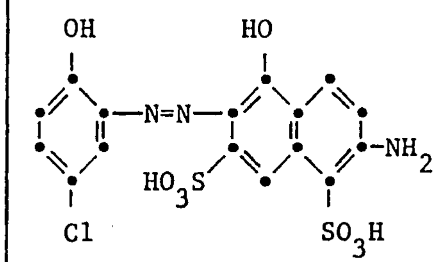 | 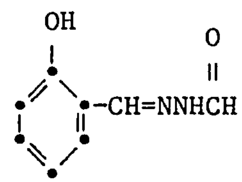 | 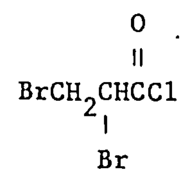 | marine-blau |
| 30 | 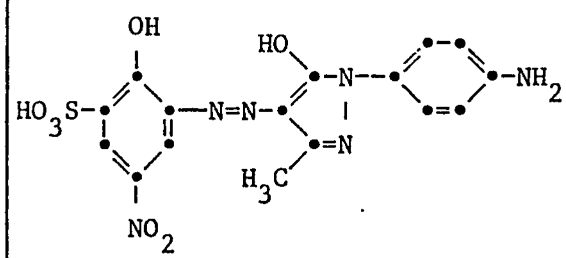 | 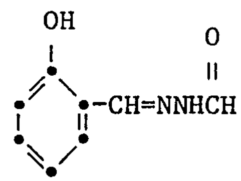 | 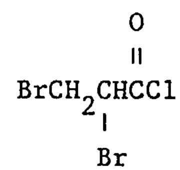 | orange |
| 31 | 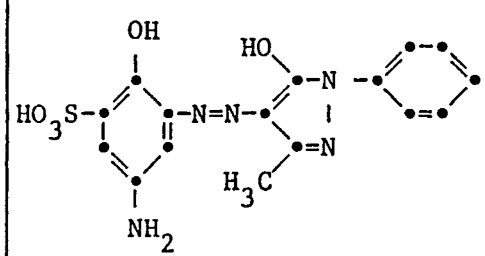 | 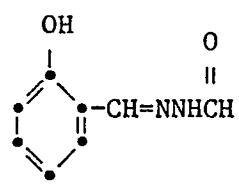 | 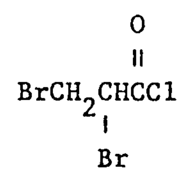 | orangebraun |

| Beisp. | I | II | III | IV |
|---|---|---|---|---|
| 32 | 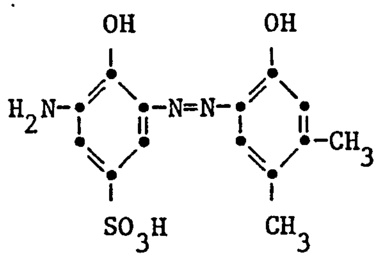 | 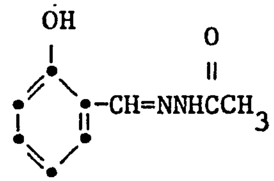 | 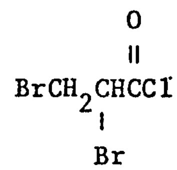 | violettbraun |
| 33 | 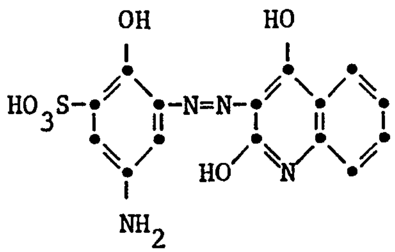 | 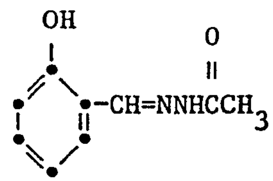 | 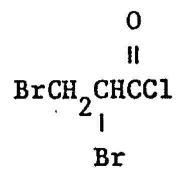 | bordeaux |
| 34 | 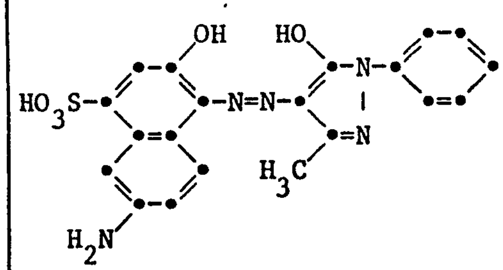 | 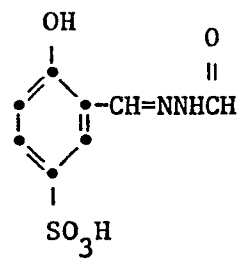 | 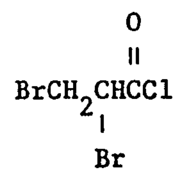 | bordeaux |

| Beispiel | I | II | III | IV |
|---|---|---|---|---|
| 35 | 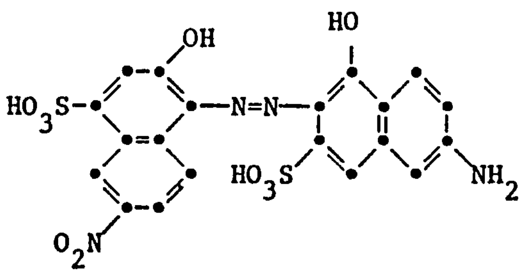 | 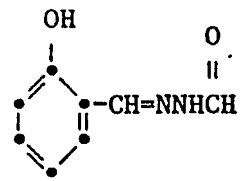 | 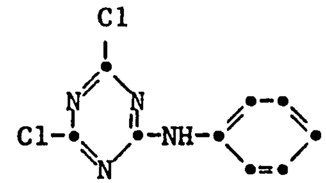 | grau |
| 36 | 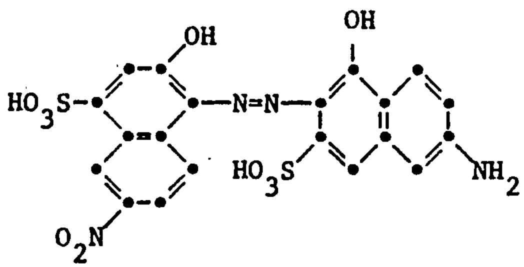 | 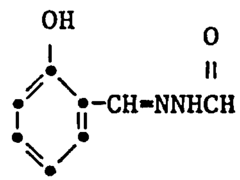 | 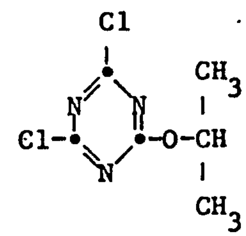 | grau |
| 37 | 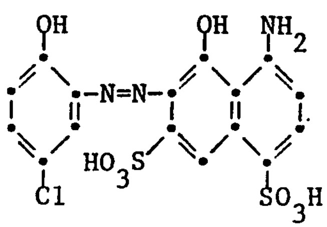 | 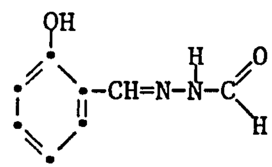 | 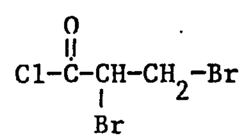 | Marineblau |

| Beispiel | I | II | III | IV |
|---|---|---|---|---|
| 38 | 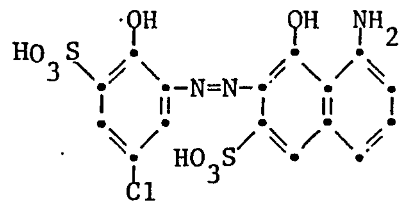 | 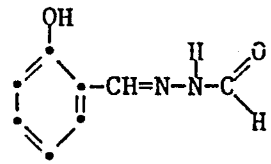 | 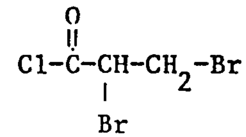 | marineblau |
| 39 | 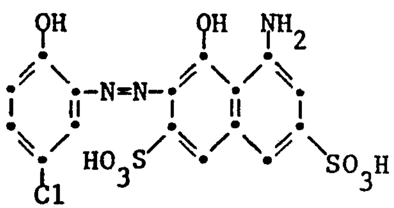 | 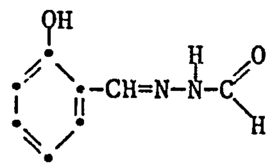 | 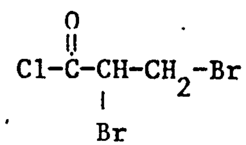 | blaugrau |
| 40 | 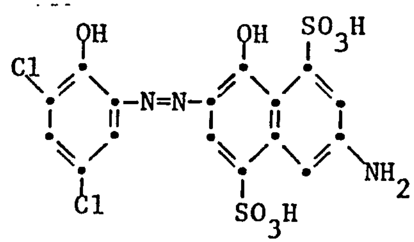 | 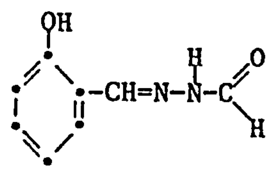 | 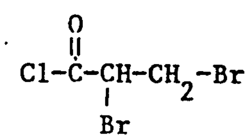 | rotstich. grau |

| Beispiel | I | II | III | IV |
|---|---|---|---|---|
| 41 | 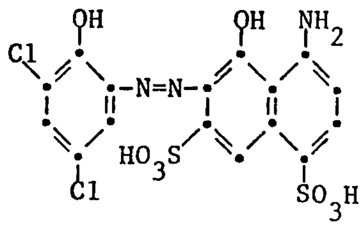 | 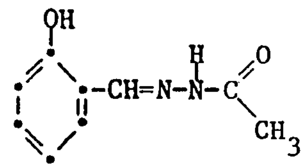 | 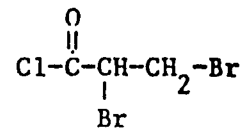 | marineblau |
| 42 | 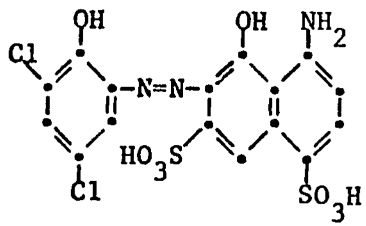 | 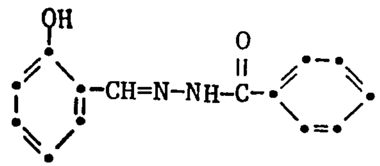 | 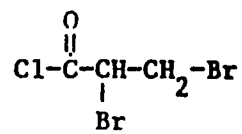 | marineblau |
| 43 | 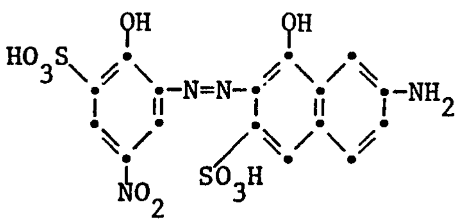 | 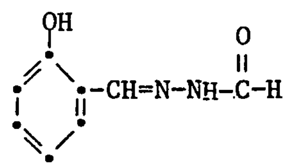 | 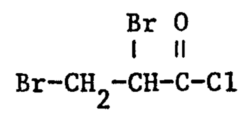 | grau |

| Beispiel | I | II | III | IV |
|---|---|---|---|---|
| 44 | 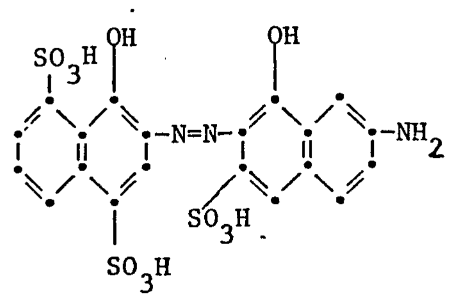 | 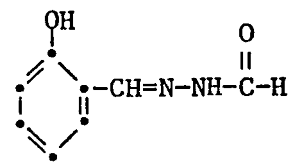 | 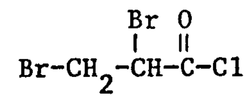 | blaugrau |
| 45 | 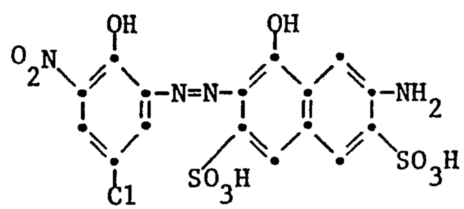 | dito | dito | grau |
| 46 | 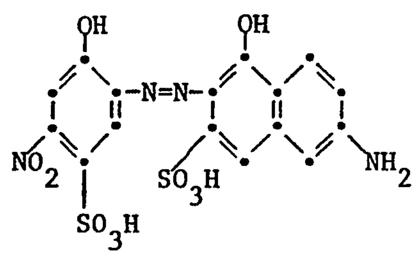 | dito | dito | blaugrau |

| Beispiel | I | II | III | IV |
|---|---|---|---|---|
| 47 | 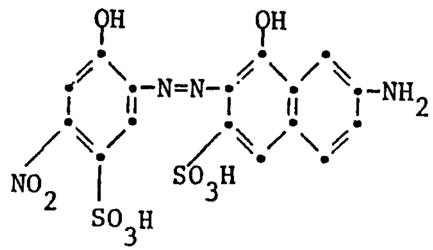 | 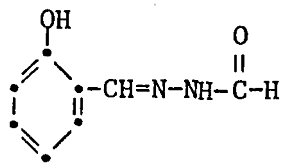 | 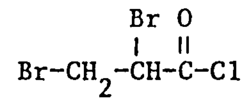 | blaugrau |
| 48 | 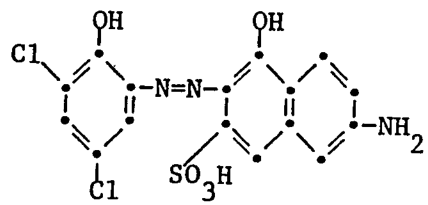 | dito | dito | grau |
| 49 | 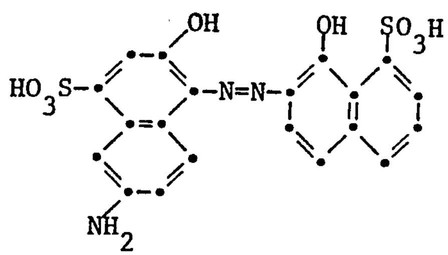 | dito | dito | grau |

| Beispiel | I | II | III | IV |
|---|---|---|---|---|
| 50 | 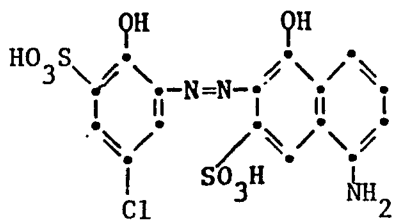 | 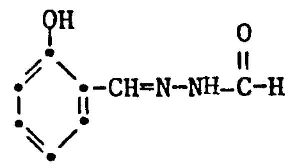 | 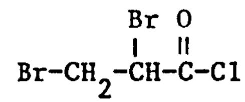 | blaugrau |
| 51 | 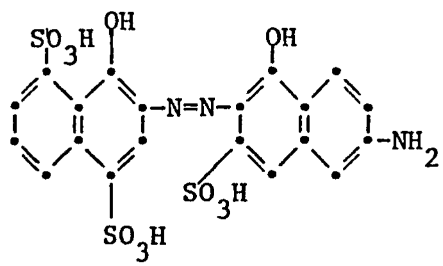 | dito | dito | grau |
| 52 | 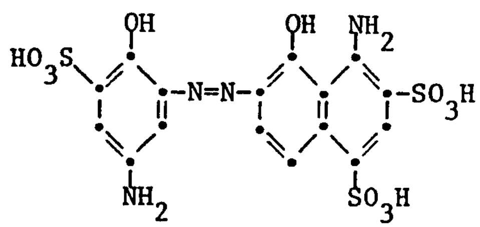 | dito | dito | grau |

| Beispiel | I | II | III | IV |
|---|---|---|---|---|
| 53 | 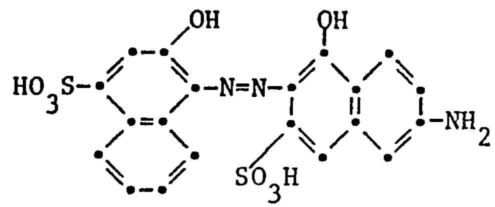 | 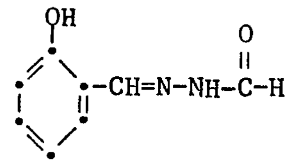 | 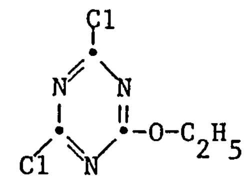 | dunkelblau |
| 54 | dito | dito | Cl-CO-$CH_2$-Cl | dito |
| 55 | dito | dito | 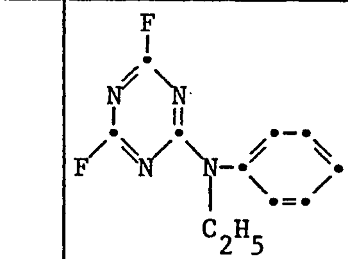 | dito |
| 56 | dito | dito | 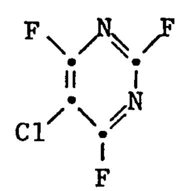 | dito |

| Beispiel | I | II | III | IV |
|---|---|---|---|---|
| 57 | 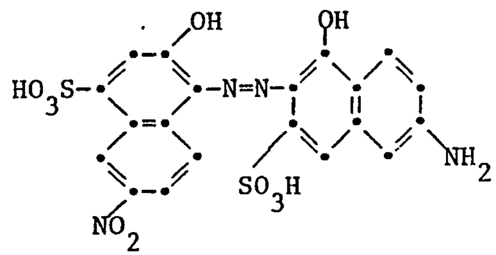 | 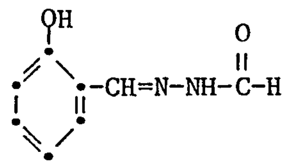 | $Cl-CO-CH_2-CH_2-Cl$ | grau |
| 58 | dito | dito | 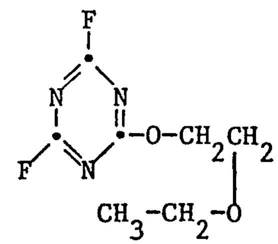 | dito |
| 59 | 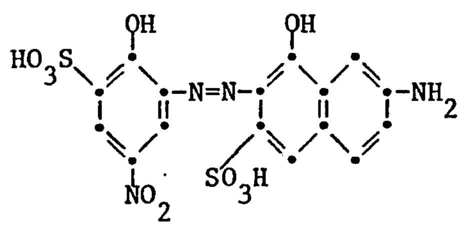 | dito | 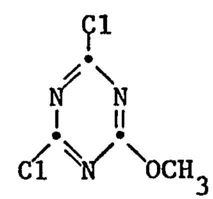 | dito |

| Beispiel | I | II | III | IV |
|---|---|---|---|---|
| 60 | 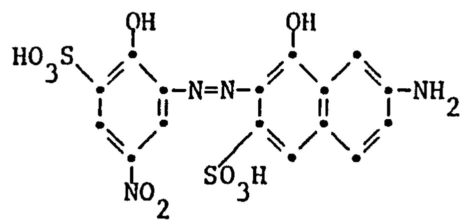 | 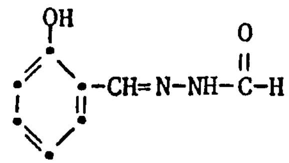 | $Cl-CO-CH_2-Cl$ | grau |
| 61 | 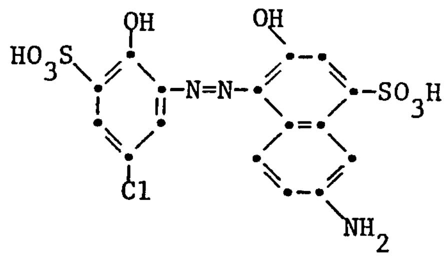 | dito | 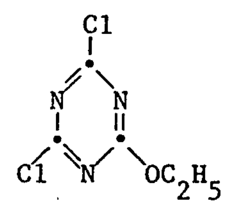 | dunkelblau |
| 62 | dito | dito | 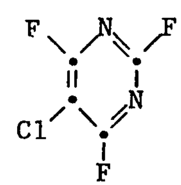 | dito |

| Beispiel | I | II | III | IV |
|---|---|---|---|---|
| 63 | 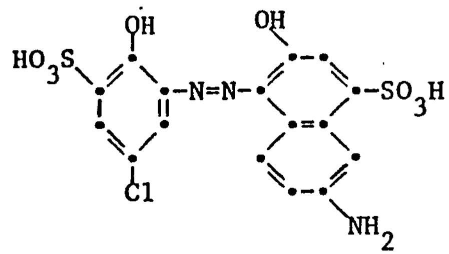 | 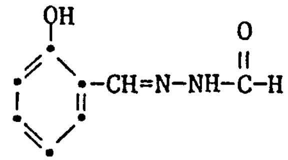 | $Cl-CO-CH_2-Cl$ | dunkelblau |
| 64 | dito | 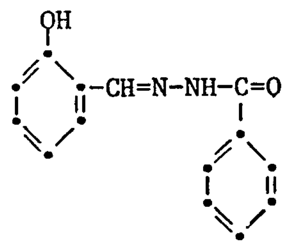 | 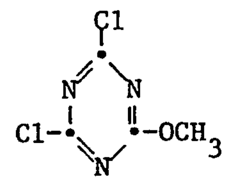 | dito |
| 65 | dito | dito | 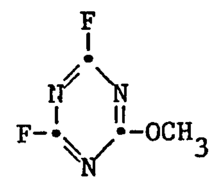 | dito |

| Beiz | I | II | III | IV |
|---|---|---|---|---|
| 66 | 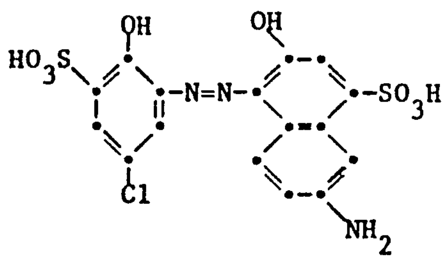 | 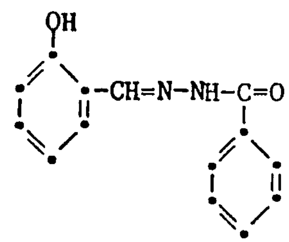 | $Cl-CO-CH_2-Cl$ | dunkelblau |
| 67 | dito | dito | 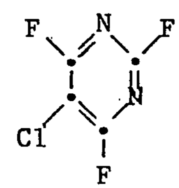 | dito |
| 68 | dito | 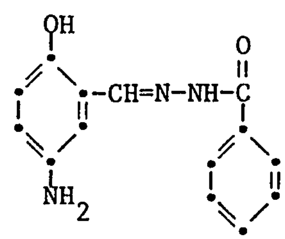 | $Cl-CO-CH_2-Cl$ | dito |

| Beispiel | I | II | III | IV |
|---|---|---|---|---|
| 69 | 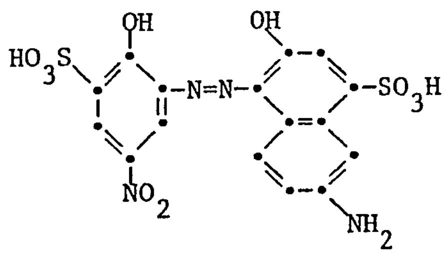 | 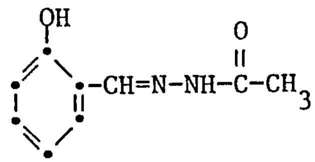 | 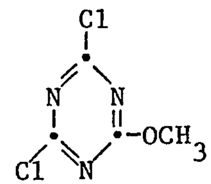 | grau |
| 70 | dito | dito | 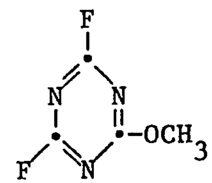 | dito |
| 71 | dito | dito | $Cl-CO-CH_2-Cl$ | dito |
| 72 | dito | dito | 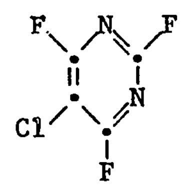 | dito |

Beispiel 73

41,9 Teile des Monoazofarbstoffs aus diazotierter 1-Hydroxy-2-amino- 4-nitrobenzol-6-sulfonsäure und 1-Phenyl- 3-methyl- 5-pyrazolon werden in Form des 1 Atom Chrom pro Molekül Azoverbindung enthaltenden 1:1-Chromkomplexes unter Rühren in 600 Teilen Wasser von 60–70 °C angeschlämmt und durch Zugabe von 5n-Natriumhydroxidlösung bis zum pH-Wert 9,0–9,5 in Lösung gebracht. Unter Einhalten der Temperatur von 60–70 °C wird anschliessend in 1 Stunde die Lösung von 36,0 Teilen krist. Natriumsulfid ($Na_2S \times 9H_2O$) in 100 Teilen Wasser zugetropft. Die unter Farbumschlag von gelborange nach orangerot verlaufende Reduktion der Nitrogruppe ist nach 2–3 Stunden Rühren bei gleicher Temperatur beendet. Der erhaltene, aminogruppenhaltige 1:1-Chromkomplex wird durch Neutralisieren der Reaktionslösung und Zugabe von Natriumchlorid abgeschieden, durch Filtration isoliert und mit verdünnter Natriumchloridlösung gewaschen. Der erhaltene Filterkuchen wird in 600 Teilen Wasser von 60–65° angeschlämmt und durch Zugabe von 2n-Natriumhydroxidlösung bei pH 8,5–9,0 gelöst. Nach Zugabe von 17,9 Teilen der in Beispiel 1 beschriebenen Acylhydrazonverbindung aus Salicylaldehyd und Monoacetylhydrazin wird das Reaktionsgemisch unter Einhalten eines pH-Bereich von 8,0–9,0 solange bei 60–70 °C gerührt, bis die Umsetzung des 1:1-Chromkomplexes mit dem Liganden beendet ist. Die erhaltene orangerote Reaktionslösung wird anschliessend auf 10–15 °C gekühlt und innerhalb 1 Stunde mit der Lösung von 30 Teilen 1:2-Dibrompropionylchlorid in 30 Teilen Aceton versetzt, wobei zugleich durch Zutropfen von 2n-Natriumhydroxidlösung ein pH-Bereich von 6,0–6,5 eingehalten wird. Nach weiteren 2 Stunden Rühren bei Raumtemperatur wird der Metallkomplex von folgender Konstitution

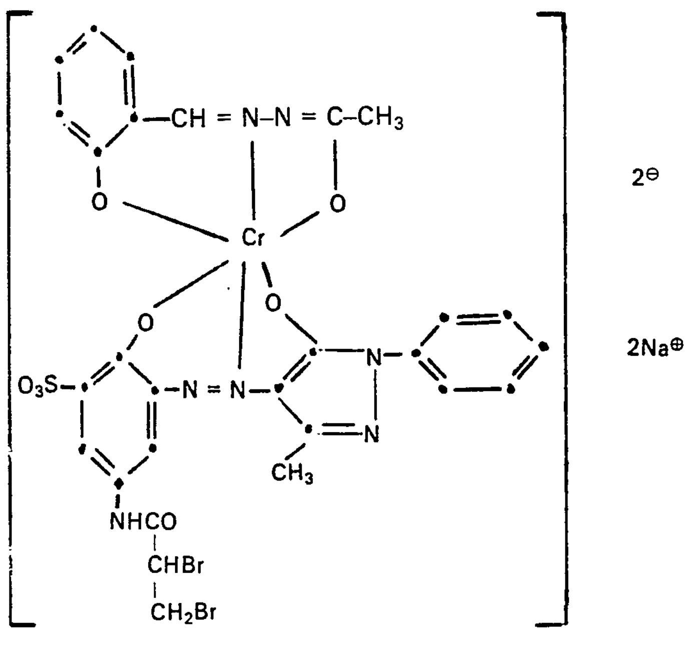

durch Zugabe von Natriumchlorid aus der Reaktionslösung abgeschieden, durch Filtration isoliert und im Vakuum bei 70 °C getrocknet. Der neue, wasserlösliche Farbstoff ergibt auf Wollmaterial nach dem angegebenen Färbeverfahrens volle, nass- und lichtechte Rotbrauntöne.

Beispiel 74

38,9 Teile des Monoazofarbstoffs aus diazotierter 1-Hydroxy-2-amino- 4-nitrobenzol-6-sulfonsäure und 2-Hydroxynaphthalin in Form des 1 Atom Chrom pro Molekül Azoverbindung enthaltenden 1:1-Chromkomplexes werden unter Rühren in 600 Teilen Wasser von 65 °C angeschlämmt und durch Zugabe von 5n-Natriumhydroxydlösung bis zum pH-Wert 9,0–9,5 in Lösung gebracht. Unter Einhaltung einer Temperatur von 65–70 °C wird anschliessend innerhalb 1 Stunde die Lösung vvn 36,0 Teilen krist. Natriumsulfid $Na_2S \cdot 9H_2O$) in 100 Teilen Wasser zugetropft. Die unter Farbumschlag von Rotviolett nach Dunkelblau verlaufende Reduktion der Nitrogruppe ist nach weiteren 2 Stunden Rühren beendet. Der erhaltene, aminogruppentragende 1:1-Chromkomplex wird durch Neutralisieren der Reaktionslösung und Zugabe von Natriumchlorid abgeschieden, durch Filtration isoliert und mit verdünnter Natriumchloridlösung gewaschen. Der erhaltene Filterkuchen wird unter Rühren und Zugabe von verdünnter Natriumhydroxydlösung in 600 Teilen Wasser von 70 °C bei pH 7–7,5 gelöst. Nach Zugabe einer neutralen Lösung von 20,2 Teilen 2-Hydroxybenzaldehyd-5-sulfonsäure und 7,4 Teilen Monoacetylhydrazinin 100 Teilen Wasser wird das Reaktionsgemisch auf 90–95 °C erhitzt und unter Einhalten von pH 8,0 solange gerührt, bis die Anlagerung zum einheitlichen, blauen Mischkomplex vollständig ist. Anschliessend wird die Reaktionslösung auf 10–15 °C gekühlt und innerhalb 1 Stunde mit einer Lösung von 30 Teilen 1,2-Dibrompropionylchlorid in 30 Teilen Aceton versetzt, wobei zugleich durch Zutropfen von 2n-Natriumhydroxydlösung ein pH-Bereich von 6,0–6,5 eingehalten wird. Nach weiteren 2 Stunden Rühren bei Raumtemperatur wird der Farbstoff von folgender Konstitution

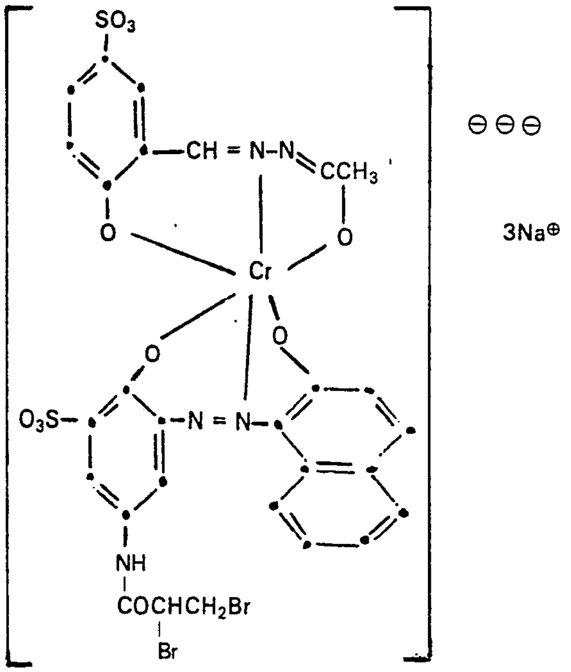

durch Zugabe von Natriumchlorid aus der Reaktionslösung abgeschieden, durch Filtration isoliert und im Vakuum bei 60–70 °C getrocknet.

Der neue, leicht wasserlösliche Farbstoff ergibt auf Wolle nach den angegebenen Verfahren volle, blaustichige Graunuancen mit sehr guten Echtheitseigenschaften.

Weitere Farbstoffe mit ähnlichen Eigenschaften sind in analoger Weise zugänglich durch Umsetzen der in der folgenden Tabelle in Kolonne I angegebenen, als 1:1-Chromkomplexe vorliegenden, aminogruppenhaltigen Monoazoverbindungen mit den in Kolonne II aufgeführten Verbindungen und anschliessende Acylierung des erhaltenen Chromkomplexes mit 1,2-Dibrompropionylchlorid. In Kolonne III sind die mit den neuen Farbstoffen auf Wolle erzielbaren Nuancen angegeben.

Tabelle 2

| Beispiel | I | II | III |
|---|---|---|---|
| 75 | 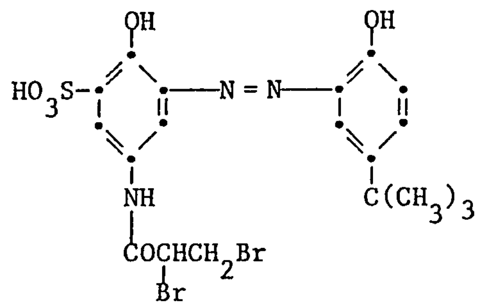 | 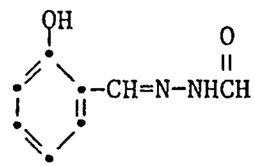 | braunviolett |
| 76 | dito | 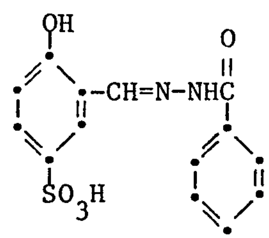 | dito |
| 77 | 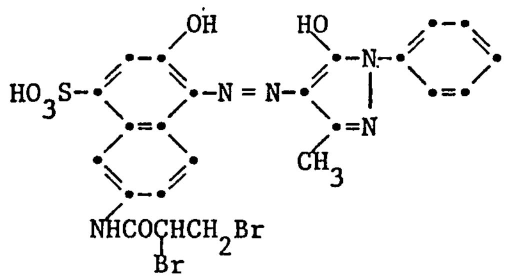 | dito | bordeaux |

Tabelle 2 (Fortsetzung)

| Beispiel | I | II | III |
|---|---|---|---|
| 78 | 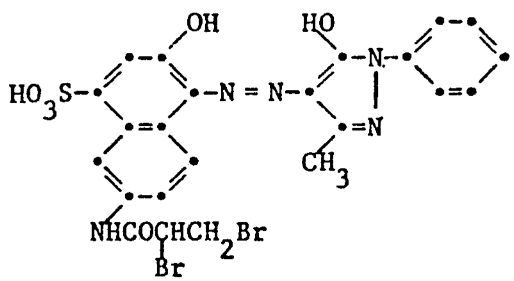 | 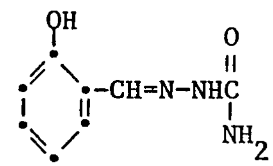 | bordeaux |
| 79 | 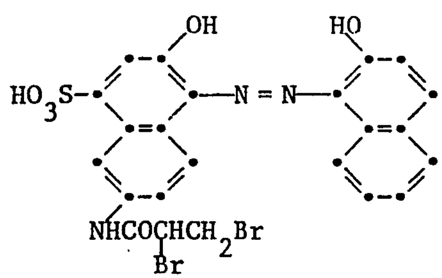 | 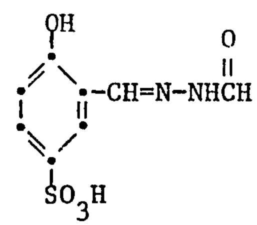 | grau |
| 80 | dito | 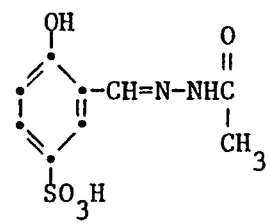 | dito |

Tabelle 2 (Fortsetzung)

| Beispiel | I | II | III |
|---|---|---|---|
| 81 | 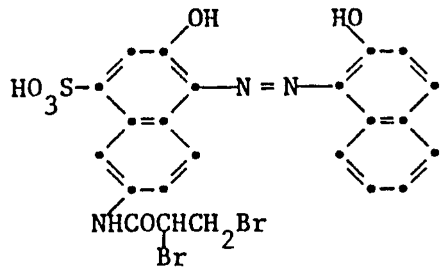 | 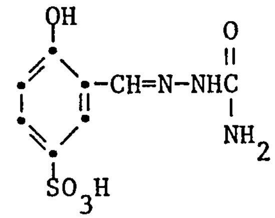 | blaugrau |
| 82 | 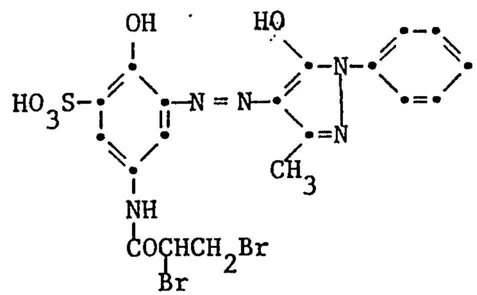 | 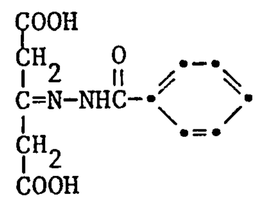 | braunrot |
| 83 | 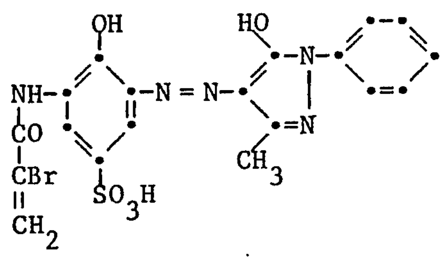 | 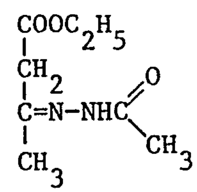 | orangebraun |

Tabelle 2 (Fortsetzung)

| Beispiel | I | II | III |
|---|---|---|---|
| 84 | 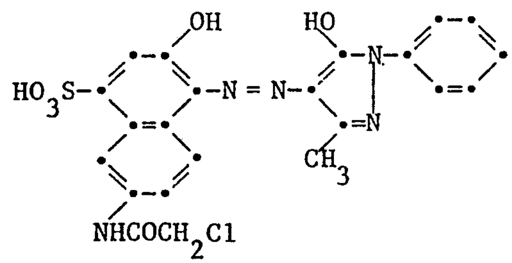 | 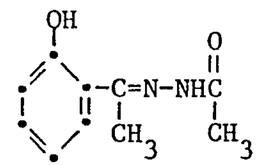 | bordeaux |
| 85 | dito | 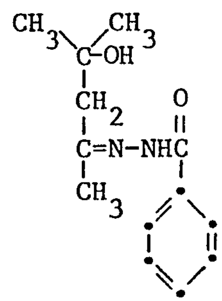 | blaurot |
| 86 | 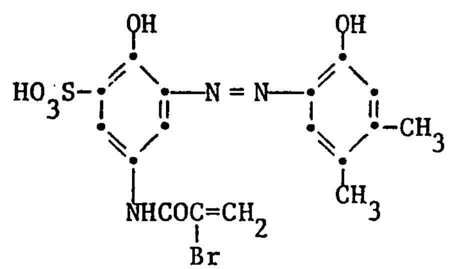 | 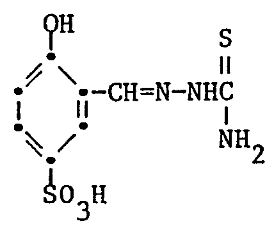 | braunviolett |

Tabelle 2 (Fortsetzung)

| Beispiel | I | II | III |
|---|---|---|---|
| 87 | 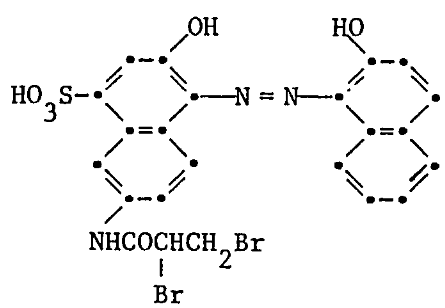 | 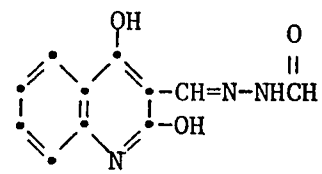 | blaugrau |
| 88 | dito | 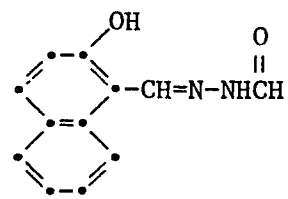 | grüngrau |

Beispiel 89

41,9 Teile des Monoazofarbstoffes aus diazotierter 1-Hydroxy-2-amino- 4-nitrobenzol-6-sulfonsäure und 1-Phenyl-3-methyl-5-pyrazolon werden in Form des 1 Atom Chrom pro Molekül Azofarbstoff enthaltenden 1:1-Chromkomplexes unter Rühren in 500 Teilen Wasser bei pH 7 gelöst.

Nach Zugabe von 19,4 Teilen 2-Hydroxy-5-aminobenzaldehyd-semicarbazon, hergestellt nach Angaben von M. Tanaka im Bull. Chem. Soc. Japan (1968), 41, 2807, wird das Reaktionsgemisch auf 90 °C erwärmt und gleichzeitig durch Zutropfen einer verdünnten Natriumhydroxidlösung ein pH-Bereich von 8,0–9,0 eingehalten, wobei eine klare Lösung des einheitlichen Anlagerungsproduktes entsteht.

Nach Abkühlen auf 10–15 °C und Zugabe von 15 Teilen Natriumbicarbonat wird eine Lösung von 30 Teilen 1,2-Dibrompropionsäurechlorid in 30 Teilen Aceton innerhalb 1 Stunde unter intensivem Rühren zugetropft und das Reaktionsgemisch weitere 3 Stunden bei Raumtemperatur nachgerührt.

Der entstandene Farbstoff von folgender Konstitution

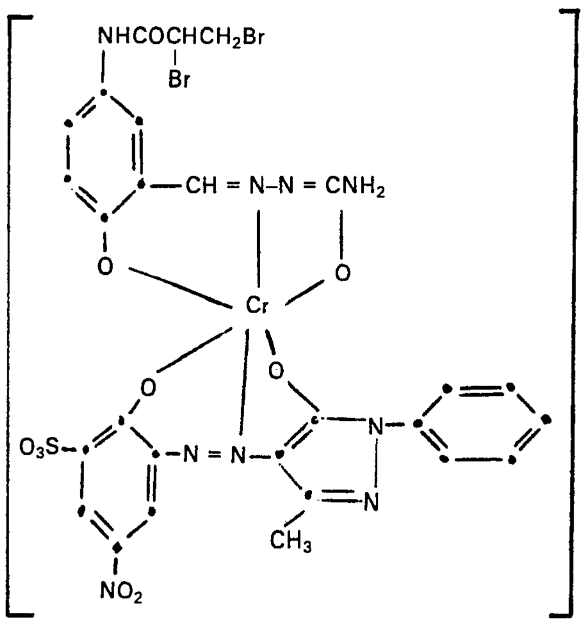

⊖ ⊖

2Na⊕

wird aus der klaren Reaktionslösung durch Zugabe von Natriumchlorid abgeschieden, durch Filtration isoliert und nach Waschen des Filterkuchens mit verdünnter Natriumlösung im Vakuum bei 60 °C getrocknet. Der neue Farbstoff ist sehr gut wasserlöslich und ergibt auf Wolle nach den angegebenen Färbevorschriften volle, nass- und lichtechte, rotstichige Orangetöne.

Wird der obengenannte 1:1-Chromkomplex anstelle der erwähnten Carbazonverbindung mit 25,5 Teilen 2-Hydroxy-5-aminobenzaldehyd-benzoylhydrazon, bzw. 21,0 Teilen 2-Hydroxy-5-aminobenzaldehyd-thiosemicarbazon (hergestellt nach Tanaka, loc. cit.) unter sonst gleichen Bedingungen umgesetzt und wie angegeben acyliert, so wird ein koloristisch gleichwertiger, oranger bzw. rotoranger Farbstoff erhalten.

Weitere Farbstoffe mit ähnlichen Eigenschaften erhält man in analoger Weise durch Umsetzen der 1:1-Chromkomplexe der in der folgenden Tabelle in Kolonne I angegebenen Monoazoverbindungen mit den in Kolonne II aufgeführten farblosen Verbindungen und anschliessende Acylierung des erhaltenen Chromkomplexes mit 1,2-Dibrompropionylchlorid. In Kolonne III sind die auf Wolle erzielbaren Nuancen der Farbstoffe angegeben.

Tabelle 3

| Beispiel | I | II | III |
|---|---|---|---|
| 90 | 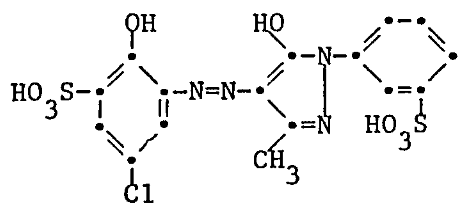 | 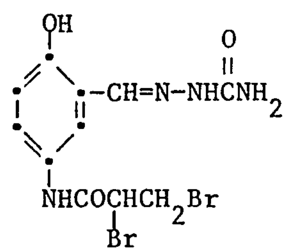 | rot |
| 91 | 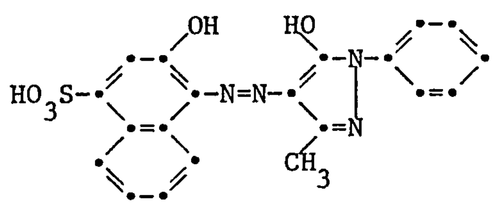 | dito | blaurot |
| 92 | 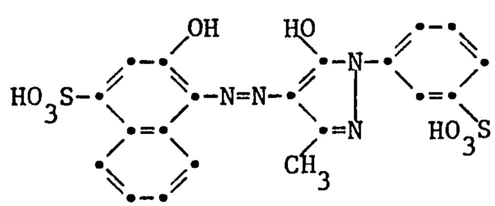 | 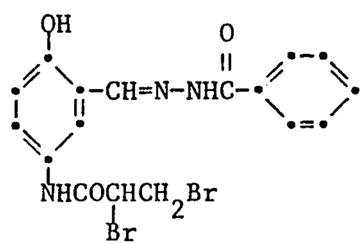 | bordeaux |

Tabelle 3 (Fortsetzung)

| Beispiel | I | II | III |
|---|---|---|---|
| 93 | 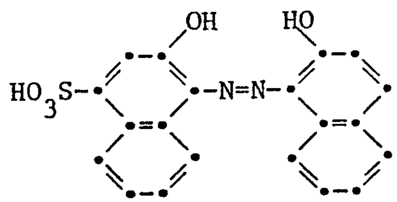 | 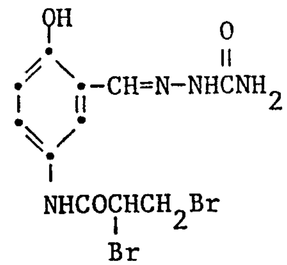 | grünblau |
| 94 | 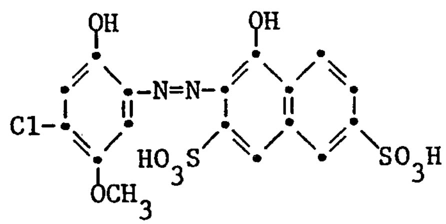 | 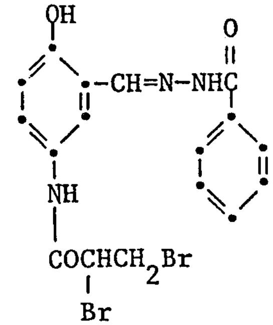 | blau |

Tabelle 3 (Fortsetzung)

| Beispiel | I | II | III |
|---|---|---|---|
| 95 | 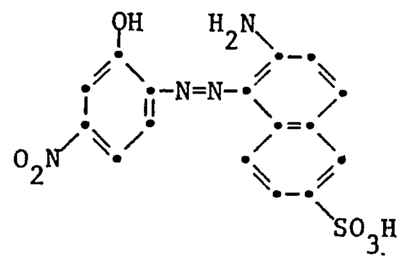 | 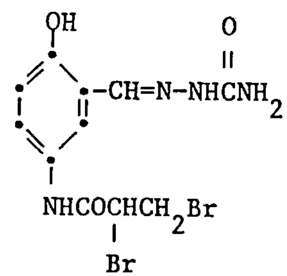 | grün |
| 96 | 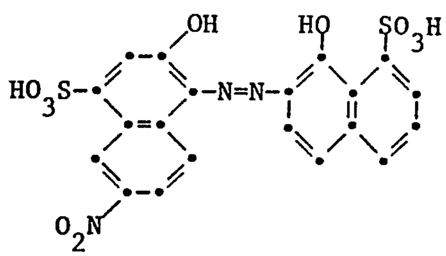 | 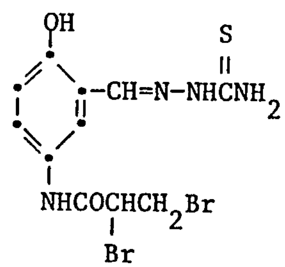 | dunkelgrün |

Beispiel 97

4,33 Teile des Monoazofarbstoffs aus diazotiertem 2-Amino-4,6-dinitro-1-hydroxybenzol und 1-Aminonaphthalin-4-sulfonsäure werden nach Angaben der französischen Patentschrift Nr. 1 134 264 in den entsprechenden, durch Nitritliganden stabilisierten 1:1-Kobaltkomplex übergeführt.

Die erhaltene Filterpaste wird in 200 Teilen Wasser von 40–45 °C suspendiert. Nach Zugabe von 1,94 Teilen 2-Hydroxy-5-aminobenzaldehydsemicarbazon, hergestellt nach M. Tanaka, loc.cit. in Beispiel 89, wird mit 2n-Natriumhydroxidlösung auf einen pH-Bereich von 8,0–9,0 bleibend eingestellt und anschliessend bei der oben angegebenen Temperatur gerührt, bis die Anlagerung der Hydrazonverbindung an den 1:1-Kobaltkomplex unter Verdrängung der Nitritliganden beendet ist.

Die entstandene, dunkelgrüne Reaktionslösung wird durch Zutropfen von verdünnter Salzsäure neutralisiert und auf 0°–5 °C abgekühlt. Anschliessend erfolgt die Acylierung der freien Aminogruppe mit 3,0 Teilen 1,2-Dibrompropionsäurechlorid, wie in den vorhergehenden Beispielen angegeben.

Der erhaltene, reaktive Kobaltkomplex der folgenden Konstitution

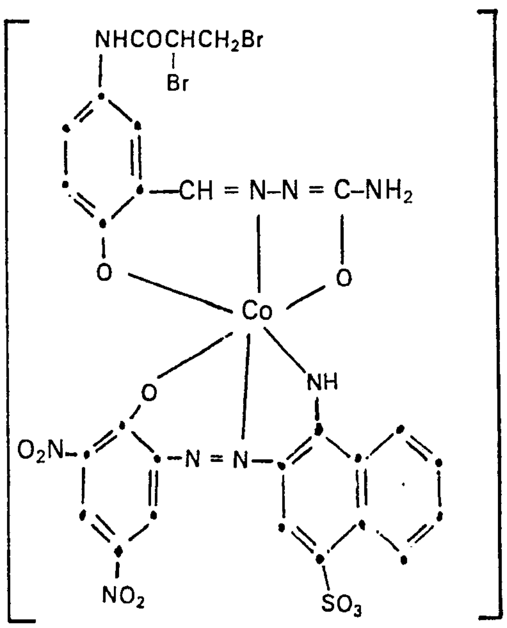

⊖ ⊖

$2Na^{\oplus}$

wird durch Zugabe von Natriumchlorid abgeschieden, durch Filtration isoliert und nach Waschen des Filterkuchens mit verdünnter Natriumchloridlösung im Vakuum bei 60 °C getrocknet.

Der neue, gut wasserlösliche Farbstoff färbt normale und chlorierte Wolle in vollen, nass- und lichtechten Dunkelgrüntönen.

Weitere Farbstoffe mit ähnlichen Eigenschaften erhält man in analoger Weise durch Umsetzen der in der folgenden Tabelle 4 in Kolonne I angegebenen, als 1:1-Kobaltkomplexe mit Nitritliganden vorliegenden Monoazoverbindungen mit den in Kolonne II aufgeführten Verbindungen und anschliessende Acylierung der erhaltenen Kobaltkomplexe mit 1,2-Dibrompropionylchlorid. In Kolonne III sind die mit den Farbstoffen auf Wolle erzielbaren Nuancen angegeben.

Tabelle 4

| Beispiel | I | II | III |
|---|---|---|---|
| 98 | 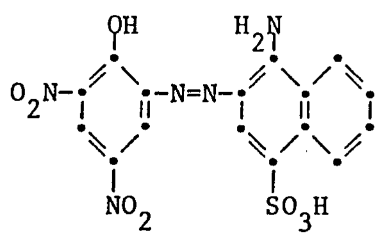 | 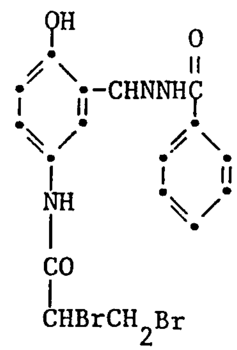 | grüngrau |
| 99 | dito | 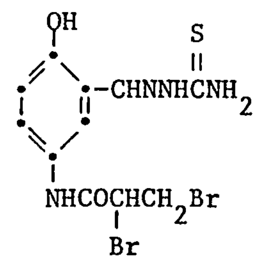 | dunkelgrün |

Tabelle 4 (Fortsetzung)

| Beispiel | I | II | III |
|---|---|---|---|
| 100 | 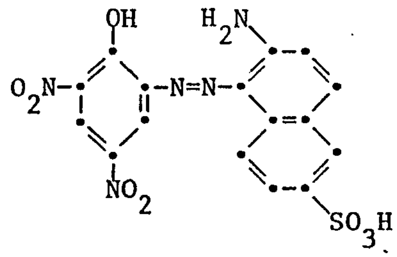 | 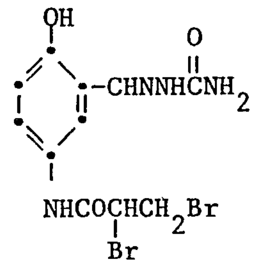 | dunkelgrün |
| 101 | 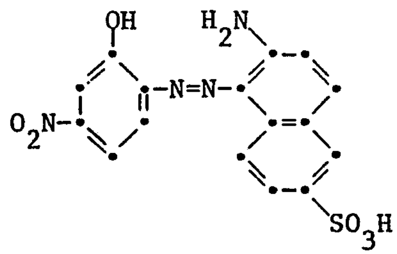 | 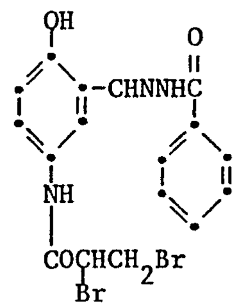 | grün |
| 102 | dito | 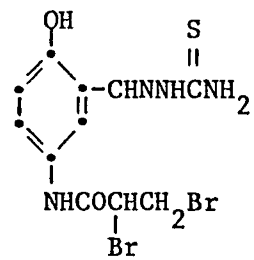 | grün |

Tabelle 4 (Fortsetzung)

| Beispiel | I | II | III |
|---|---|---|---|
| 103 | 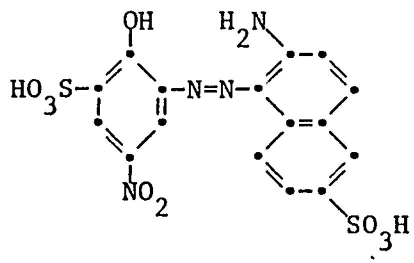 | 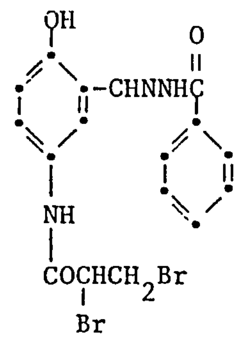 | olivegrün |
| 104 | 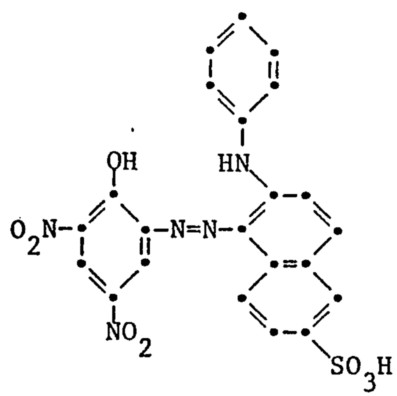 | 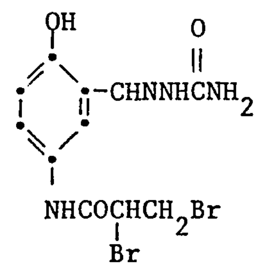 | dunkelgrün |

Färbebeispiel 1

Ein Flanellgewebe aus chlorierter Wolle wird auf einem Foulard mit nachfolgend beschriebener Farbstoffzubereitung getränkt und auf eine Flüssigkeitsaufnahme von 100% abgequetscht.

| | |
|---|---|
| 50 | Teile des Farbstoffes gemäss Beispiel 9 |
| 300 | Teile Harnstoff |
| 320 | Teile Solvitose OFA à 4% (Verdickungsmittel) |
| 10 | Teile einer Mischung von anionaktivem Fettalkoholäthersulfat mit nichtionogenen Netzmitteln |
| 10 | Teile des in Färbebeispiel 5 verwendeten Egalisiermittels |
| 10 | Teile Natrium-metabisulfit |
| 10 | Teile Essigsäure 80%ig |
| 290 | Teile Wasser |
| 1000 | Teile Foulardierflotte. |

Das imprägnierte Gewebe wird anschliessend in aufgerolltem und luftdicht verpacktem Zustand während 48 Stunden bei Raumtemperatur gelagert. Nach Spülen mit kaltem Wasser wird das Material auf frischem Bad mit soviel Ammoniak zu 24% behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Schwarz von ausgezeichneten Echtheitseigenschaften gefärbt.

Färbebeispiel 2

2 Teile des gemäss Beispiel 36 erhaltenen Farbstoffes werden unter Zusatz von 0,5 Teilen m-nitrobenzolsulfonsaurem Natrium in 100 Teilen Wasser gelöst. Mit der erhaltenen Lösung wird ein Baumwollgewebe imprägniert, so dass es um 75% seines Gewichtes zunimmt und dann getrocknet.

Danach imprägniert man das Gewebe mit einer 20° warmen Lösung, die pro Liter 5 g Natriumhydroxid und 300 g Natriumchlorid enthält, quetscht auf 75% Gewichtszunahme ab, dämpft die Färbung während 30 Sekunden bei 100 bis 101°, spült, seift während einer Viertelstunde in einer 0,3%igen kochenden Lösung eines ionenfreien Waschmittels, spült und trocknet. Das Baumwollgewebe ist in einem Grauton von guten Echtheitseigenschaften gefärbt.

Färbebeispiel 3

2 Teile des gemäss Beispiel 35 erhältlichen Farbstoffes werden in 100 Teilen Wasser gelöst. Die Lösung gibt man zu 1900 Teilen kaltem Wasser, fügt 60 Teile Natriumchlorid zu und geht mit 100 Teilen eines Baumwollgewebes in dieses Färbebad ein. Man steigert die Temperatur auf 40°, wobei nach 30 Minuten 40 Teile kalzinierte Soda und nochmals 60 Teile Natriumchlorid zugegeben werden. Man hält die Temperatur 30 Minuten auf 40°, spült und seift dann die Färbung während 15 Minuten in einer 0,3%igen kochenden Lösung eines ionenfreien Waschmittels, spült und trocknet.

Man erhält ein grünstichig grau gefärbtes Baumwollgewebe mit guten Echtheitseigenschaften.

Färbebeispiel 4

Ein Flanellgewebe aus chlorierter Wolle wird auf einem Foulard mit nachfolgend beschriebener Farbstoffzubereitung getränkt und auf eine Flüssigkeitsaufnahme von 100% abgequetscht:

| | |
|---|---|
| 50 | Teile des Farbstoffes gemäss Beispiel 21 |
| 300 | Teile Solvitose OFA à 40% (Verdickungsmittel) |
| 20 | Teile einer Mischung von anionaktivem Fettalkoholäthersulfat mit nichtionogenen Netzmitteln |
| 10 | Teile des in Färbebeispiel 5 verwendeten Egalisiermittels |
| 20 | Teile Essigsäure 80%ig |
| 600 | Teile Wasser |
| 1000 | Teile Foulardierflotte. |

Das imprägnierte Gewebe wird anschliessend in einen Dämpfer gebracht und während 20 bis 40 Minuten mit gesättigtem Dampf behandelt. Nach Spülen mit kaltem Wasser wird das Material auf frischem Bad mit soviel 24%iger Ammoniaklösung behandelt, dass ein pH-Wert von 8,5 erreicht wird und während 15 Minuten bei 80° gehalten. Nach Spülen in warmem Wasser wird zum Schluss mit Essigsäure 80%ig abgesäuert und getrocknet. Das Wollgewebe ist in einem vollen Grauton von ausgezeichneten Echtheitseigenschaften gefärbt.

Färbebeispiel 5

In 1000 Teilen Wasser von 50° werden nacheinander 4 Teile 80%ige Essigsäure, 2 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 4 Teile Ammoniumsulfat gelöst.

3 Teile des gemäss Beispiel 5 erhaltenen Farbstoffes werden in 100 Teilen Wasser heiss gelöst und dem obigen Färbebad zugegeben. Ein Zirkulationsfärbeapparat wird mit 100 Teilen vorgenetztem Woll-Kammzug in Wickelform beschickt und im Verlaufe von 30 Minuten die Temperatur des Bades von 50 auf 97–99° erhöht, und anschliessend 90 Minuten kochend gefärbt. Der Farbstoff zieht fast vollkommen auf das Substrat auf. Nach Abkühlen des Bades auf 80° wird der pH-Wert von etwa 4,5 durch Zugabe von Ammoniaklösung auf bleibend 8,5 erhöht und das Färbegut bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein dunkelblau gefärbtes Färbegut von sehr guter Nassechtheit sowie ausgezeichneter Lichtechtheit.

Färbebeispiel 6

In 1000 Teilen Wasser von 50° werden nacheinander 6 Teile 80%ige Essigsäure, 3 Teile des Ammoniumsalzes des sauren Schwefelsäureesters des Adduktes aus einem Fettamin (bestehend aus 30% Hexadecylamin, 25% Octadecylamin und 45% Octadecenylamin und 7 Mol Äthylenoxid) sowie 6 Teile Ammoniumsulfat gelöst.

3 Teile des gemäss Beispiel 26 erhaltenen Farbstoffes werden in 100 Teilen Wasser heiss gelöst und dem obigen Färbebad zugegeben. Ein Zirkulationsfärbeapparat wird mit 150 Teilen vorgenetzter loser Wolle beschickt und im Verlaufe von 30 Minuten die Temperatur der Flotte von 50° auf 97–99° erhöht und anschliessend 90 Minuten kochend gefärbt. Der Farbstoff zieht fast vollkommen auf das Substrat auf. Nach Abkühlen der Flotte auf 80° wird der pH-Wert von etwa 4,5 durch Zugabe von Ammoniaklösung auf bleibend 8,5 erhöht und das Färbegut 20 Minuten bei dieser Temperatur nachbehandelt. Nach gründlichem Spülen mit heissem und kaltem Wasser, Absäuern mit 1 Teil 80%iger Ameisensäure, Zentrifugieren und Trocknen erhält man ein faseregal dunkelblau gefärbtes Substrat mit guter Nass- und Reibechtheit sowie ausgezeichneter Lichtechtheit.

Färbebeispiel 7

In ein Färbebad, welches auf 3000 Teile deionisiertes Wasser 3 Teile Ammoniumsulfat und 2 Teile des in Beispiel Nr. 90 angegebenen Farbstoffs enthält, wird bei einer Temperatur von 50 °C mit 100 Teilen eines vorgenetzten Texturtricot aus Polyamid-6,6-Fasern eingegangen. Unter ständigem Bewegen des Färbegutes wird die Temperatur innerhalb 40 Minuten auf 95–98 °C gesteigert und während einer weiteren Stunde beibehalten.

Nach Abkühlen des Färbebades wird das Gewebe warm und kalt gespült; nach Trocknen liegt eine volle, nass- und lichtechte Rotfärbung vor.

Wird eine analoge Färbung mit 2,5 Teilen des Farbstoffes nach Beispiel 95 unter den gleichen Bedingungen vorgenommen, so resultiert ein nass- und lichtecht grün gefärbtes Polyamid-tricotgewebe.

## Patentansprüche

1. Chrom- oder Kobaltkomplexe der Formel

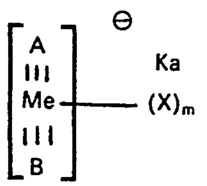

(1),

worin A der Rest eines dicyclisch metallisierbaren Azo- oder Azomethinfarbstoffes, B der Rest einer dreizähnigen, dianionischen, komplexbildenden, organischen Verbindung, die eine an dem Chrom- oder Kobaltkomplex beteiligte $>C=N-N=C<$ -Gruppe enthält, X ein faserreaktiver Rest, Me ein Chrom- oder Kobaltatom, Ka ein Kation, m = 1, 2, 3 oder 4 ist, und wobei die Reste A und/oder B mindestens eine wasserlöslichmachende Gruppe enthalten.

2. Chrom- oder Kobaltkomplexe gemäss Anspruch 1, worin der Rest A der Formel

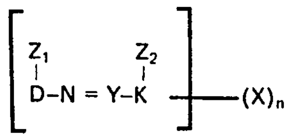

(2)

entspricht, worin D der Rest einer Diazokomponente der Benzol- oder Naphthalinreihe oder der heterocyclischen Reihe, Y ein Stickstoffatom oder die CH-Gruppe, K für den Fall, dass Y ein Stickstoffatom ist, der Rest einer Kupplungskomponente oder, für den Fall, dass Y die CH-Gruppe ist, der Rest eines o-Hydroxybenzaldehyds oder eines o-Hydroxynaphthaldehyds, $Z_1$ in o-Stellung zur Azo- oder Azomethingruppe die –O– oder –COO-Gruppe und $Z_2$ die –O– oder –N(R)-Gruppe ist, wobei R Wasserstoff, gegebenenfalls substituiertes $C_{1-4}$-Alkyl oder gegebenenfalls substituiertes Phenyl bedeutet, und $Z_2$ in Nachbarstellung zu dem Rest –N=Y– an K gebunden ist, X die in Anspruch 1 angegebene Bedeutung hat und n = 0, 1, 2, 3 oder 4 ist, wobei, falls n = 0 ist, der Rest B in Formel (1), mindestens einen faserreaktiven Rest X enthält.

3. Chrom- oder Kobaltkomplexe gemäss Anspruch 1, worin der Rest B der Formel

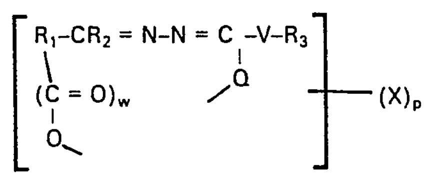

(3)

entspricht, worin $R_1$ die direkte Bindung oder ein gegebenenfalls substituierter Alkyl-, Alkenyl- oder Arylrest oder ein heterocyclischer Rest, $R_2$ Wasserstoff oder ein gegebenenfalls substituierter Alkyl- oder Arylrest, V die direkte Bindung oder ein Sauerstoffatom, $R_3$ Wasserstoff, ein gegebenenfalls substituierter Alkyl- oder Arylrest, ein heterocyclischer Rest oder eine gegebenenfalls substituierte Aminogruppe, Q ein Sauerstoff- oder Schwefelatom und w = 0 oder 1 ist, X die in Anspruch 1 angegebene Bedeutung hat und p = 0, 1 oder 2 ist, wobei, falls p = 0 ist, der Rest A in Formel (1) mindestens einen faserreaktiven Rest X enthält.

4. Chrom- oder Kobaltkomplexe gemäss einem der Ansprüche 1 bis 3, worin X einen faserreaktiven Rest der aliphatischen oder heterocyclischen Reihe bedeutet, der direkt oder über ein Brückenglied an den Rest A und/oder an den Rest B gebunden ist.

5. Chrom- oder Kobaltkomplexe gemäss einem der Ansprüche 1 bis 3, worin die Reste A und/oder B mindestens eine Sulfonsäuregruppe enthalten.

6. Chrom- oder Kobaltkomplexe gemäss einem der Ansprüche 1 bis 5 der Formel

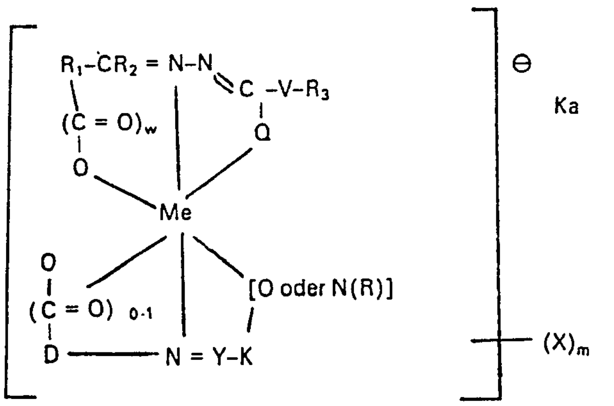

(4),

worin $R_1$ die direkte Bindung zu dem –COO-Rest, ein gegebenenfalls durch Carboxy substituierter $C_{1-8}$-Alkylrest, insbesondere ein gegebenenfalls durch Carboxy substituierter $C_{1-4}$-Alkylrest, ein $C_{1-8}$- insbesondere $C_{1-4}$-Alkenylrest oder ein gegebenenfalls durch $C_{1-4}$-Alkyl, Halogen, Nitro, $C_{2-5}$-Alkanoylamino, Sulfo, Carboxy oder Arylazo insbesondere Phenylazo substituierter Phenyl- oder Naphthylrest, oder ein heterocyclischer Rest, insbesondere ein durch Hydroxy substituierter Chinolinylrest, $R_2$ Wasserstoff, ein gegebenenfalls durch Carboxy substituierter $C_{1-8}$- insbesondere $C_{1-4}$-Alkylrest oder ein gegebenenfalls durch $C_{1-4}$-Alkyl, Halogen, Nitro, $C_{2-5}$-Alkanoylamino, Sulfo oder Carboxy substituierter Phenyl- oder Naphthylrest, V die direkte Bindung oder ein Sauerstoffatom, $R_3$ Wasserstoff, $C_{1-8}$- insbesondere $C_{1-4}$-Alkyl, Phenyl-$C_{1-4}$-alkyl, Naphthyl-$C_{1-4}$-alkyl, gegebenenfalls durch $C_{1-4}$-Alkyl, $C_{1-4}$-Alkoxy, Halogen, $C_{2-5}$-Alkanoylamino, Nitro, Hydroxy, Cyano, Sulfo oder Phenylazo substituiertes Phenyl oder Naphthyl oder ein Rest der Formel

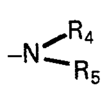

worin $R_4$ und $R_5$ unabhängig voneinander Wasserstoff, gegebenenfalls substituiertes $C_{1-8}$- insbesondere $C_{1-4}$-Alkyl oder gegebenenfalls substituiertes Phenyl ist, Q ein Sauerstoff- oder Schwefelatom, w = 0 oder 1, Me ein Chrom- oder Kobaltatom, D der Rest einer Diazokomponente der Benzol- oder Naphthalinreihe, der die $-(CO)_{0-1}$-O-Gruppe in o-Stellung zur –N=Y-Gruppe enthält, Y ein Stickstoffatom oder die CH-Gruppe, K für den Fall, dass Y ein Stickstoffatom ist, der Rest einer Kupplungskomponente der Benzol- oder Naphthalinreihe oder der 5-Pyrazolon-, 5-Aminopyrazol-, Chinolin-, Acetoacetarylid- oder Benzoylessigsäurearylid-Reihe ist, der den Rest –[O oder N(R)]- in Nachbarstellung zur Azogruppe enthält, und wobei R Wasserstoff, gegebenenfalls substituiertes $C_{1-4}$-Alkyl oder gegebenenfalls substituiertes Phenyl ist, oder für den Fall, dass Y die CH-Gruppe ist, K den Rest eines o-Hydroxybenzaldehyds oder o-Hydroxynaphthaldehyds bedeutet, X einen faserreaktiven Rest der aliphatischen oder heterocyclischen Reihe bedeutet, der direkt oder über ein Brückenglied an D und/oder K und/oder $R_1$ gebunden ist, Ka ein Kation und m – 1, 2, 3 oder 4 bedeutet.

7. Chrom- oder Kobaltkomplexe gemäss Anspruch 6, worin m = 1 oder 2 ist.

8. Chrom- oder Kobaltkomplexe gemäss Anspruch 6, worin $R_1$ unsubstituiertes oder durch $C_{1-4}$-Alkyl, Halogen, Nitro, Acetylamino, Sulfo, Phenylazo, Sulfophenylazo oder –NH–X substituiertes Phenyl oder Naphthyl oder durch Hydroxy substituiertes Chinolinyl, $R_2$ Wasserstoff oder $C_{1-4}$-Alkyl, V die direkte Bindung oder ein Sauerstoffatom, w = O, Q ein Sauerstoff- oder Schwefelatom und $R_3$ Wasserstoff, Amino, $C_{1-4}$-Alkyl oder ein unsubstituierter oder durch $C_{1-4}$-Alkyl, Halogen oder Nitro substituierter Phenylrest ist, oder worin $R_1$ die direkte Bindung, $R_2$ Wasserstoff, $C_{1-4}$-Alkyl, durch Carboxy substituiertes $C_{1-4}$-Alkyl oder Phenyl, V die direkte Bindung oder ein Sauerstoffatom, w = 1, Q ein Sauerstoffatom und $R_3$ Wasserstoff, Amino, $C_{1-4}$-Alkyl oder ein unsubstituierter oder durch $C_{1-4}$-Alkyl, Halogen oder Nitro substituierter Phenylrest ist, oder worin $R_1$ $C_{1-4}$-Alkyl, $R_2$ Wasserstoff oder unsubstituiertes oder durch Carboxy substituiertes $C_{1-4}$-Alkyl, V die direkte Bindung oder ein Sauerstoffatom, w = 0 oder 1, Q ein Sauerstoffatom und $R_3$ Wasserstoff, Amino, $C_{1-4}$-Alkyl oder ein unsubstituierter oder durch $C_{1-4}$-Alkyl, Halogen oder Nitro substituierter Phenylrest ist, oder worin $R_1$ $C_{3-6}$-Alkenyl, $R_2$ und $R_3$ unabhängig voneinander Wasserstoff, $C_{1-4}$-Alkyl oder ein unsubstituierter oder durch $C_{1-4}$-Alkyl, Halogen oder Nitro substituierter Phenylrest, oder $R_3$ Amino, V die direkte Bindung oder ein Sauerstoffatom, w = 0 und Q ein Sauerstoffatom ist.

9. Chrom- oder Kobaltkomplexe gemäss Anspruch 6, worin X ein Acryloyl-, Mono-, Di- oder Trihalogenacryloyl- oder -methacryloyl-, Mono- oder Dihalogenpropionyl-, Phenylsulfonylpropionyl-, Methylsulfonylpropionyl-, Vinylsulfonyl-, β-Chloräthylsulfonyl-, β-Chloräthylsulfonylbutyryl-, β-Sulfatoäthylsulfonyl-Rest oder ein Rest der Mono-, Di- oder Trihalogenpyrimidyl- oder Mono- oder Dihalogentriazinylreihe ist, wobei X gegebenenfalls über ein Brückenglied der Formel

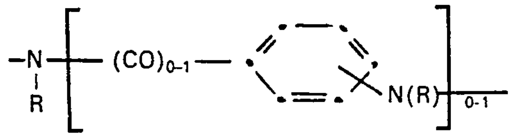

oder $-CH_2-N(R)-$ an D und/oder K und/oder $R_1$ gebunden ist und R die in Anspruch 6 angegebene Bedeutung hat.

10. Chrom- oder Kobaltkomplexe gemäss einem der Ansprüche 6 bis 9 der Formel

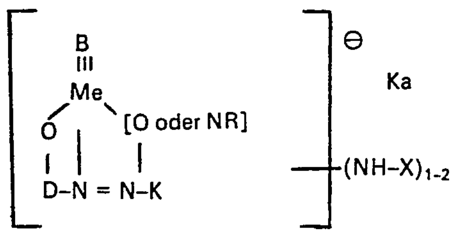

(5),

worin B den Rest der Formel

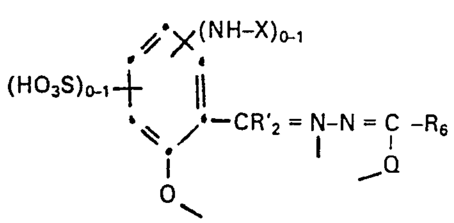

(6),

worin $R'_2$ Wasserstoff oder Methyl, $R_6$ Wasserstoff, Methyl, Phenyl oder $NH_2$ und Q ein Sauerstoff- oder Schwefelatom ist, oder den Rest der Formel

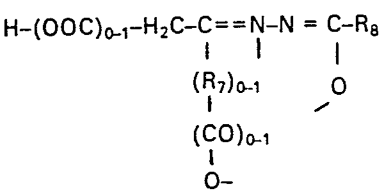

(7),

worin $R_7$ $C_{1-4}$-Alkyl und $R_8$ Methyl oder Phenyl ist, oder den Rest der Formel

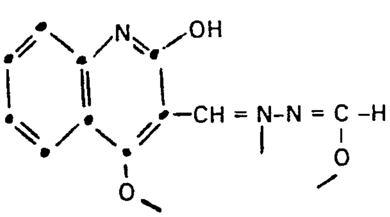

(8),

oder den Rest der Formel

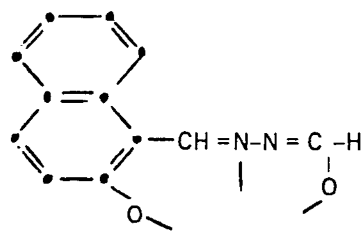

(9)

bedeutet, und D ein Benzolrest ist, der das Sauerstoffatom in o-Stellung zur Azobrücke enthält und durch Sulfo, Chlor, Nitro, Methoxy und den Rest –NH–X substituiert sein kann, oder ein Naphthalinrest ist, der das Sauerstoffatom in 1- oder 2-Stellung und die Azogruppe in 2- oder 1-Stellung enthält und der substituiert sein kann durch Sulfo, Nitro und den Rest –NH–X, K ein Naphthalinrest ist, der ausser durch den Rest –NH–X durch 1 oder 2 Sulfogruppen substituiert sein kann und das Sauerstoffatom oder –N(R), wobei R Wasserstoff oder Phenyl ist, in o-Stellung zur Azogruppe enthält, ein 1-Phenyl-3-methyl-5-pyrazolonrest ist, der im Phenylring durch den Rest –NH–X oder Sulfo substituiert sein kann, ein in o-Stellung zur Azogruppe durch das Sauerstoffatom substituierter Dimethyl- oder tert.-Butylphenolrest oder ein 2-Hydroxychinolinylrest ist, der die Azogruppe in 3-Stellung und das Sauerstoffatom in 4-Stellung enthält und X den α,β-Dibrompropionyl-, α-Bromacryloyl-, Chloracetyl-, β-Chlorpropionyl, 2-Fluor-4-(N-äthyl-N-phenylamino)- 1,3,5-triazinyl-6-, 2-Fluor-4-methoxy- oder 4-β-äthoxyäthoxy-1,3,5-triazinyl-6-, 2-Chlor- 4-phenylamino- 1,3,5-triazinyl-6-, 2-Chlor-4-methoxy- oder 4-äthoxy- oder 4-isopropoxy-1,3,5-triazinyl-6- oder 2,4-Difluor-5-chlorpyrimidinyl-6-rest bedeutet, Me ein Chrom- oder Kobaltatom und Ka ein Alkalikation ist.

11. Chromkomplexe gemäss einem der Ansprüche 1, 6 und 10.

12. Chrom- oder Kobaltkomplexe gemäss Anspruch 10, worin B in Formel (5) den Rest der Formel (6) bedeutet.

13. Chrom- oder Kobaltkomplexe gemäss Anspruch 10, worin X den α,β-Dibrompropionylrest bedeutet.

14. Chrom- oder Kobaltkomplexe gemäss einem der Ansprüche 2 und 6, worin Y ein Stickstoffatom ist.

15. Chromkomplexe gemäss Anspruch 10, worin K ein Naphthalinrest ist, der ausser durch den Rest –NH–X durch 1 oder 2 Sulfogruppen substituiert sein kann und das Sauerstoffatom in o-Stellung zur Azogruppe enthält.

16. Der Chromkomplex gemäss Anspruch 15 der Formel

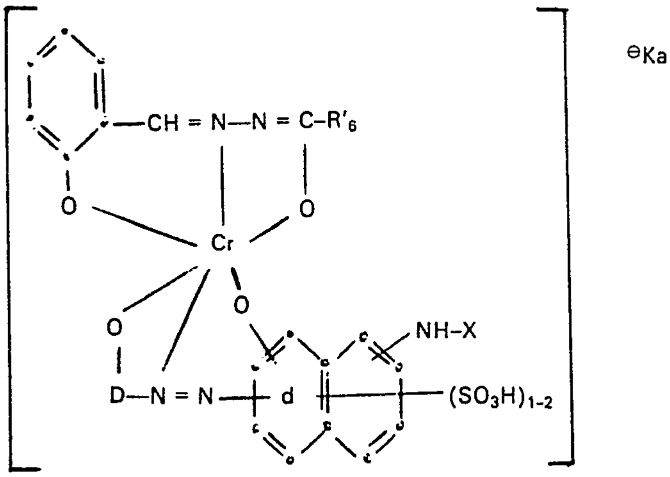

(10),

worin $R'_6$ Wasserstoff, Methyl, Phenyl oder Amino ist, D ein Benzolrest ist, der das Sauerstoffatom in o-Stellung zur Azobrücke enthält und durch Chlor oder Nitro substituiert sein kann, oder ein Naphthalinrest ist, der das Sauerstoffatom in 1- oder 2-Stellung und die Azogruppe in 2- oder 1-Stellung enthält und der substituiert sein kann durch Sulfo oder Nitro, und X ein α,β-Dibrompropionyl- oder α-Bromacryloylrest ist, und worin die Azogruppe in o-Stellung zu dem Sauerstoffatom an den Ring d gebunden ist und Ka ein Alkalikation ist.

17. Der Chromkomplex gemäss Anspruch 16 der Formel

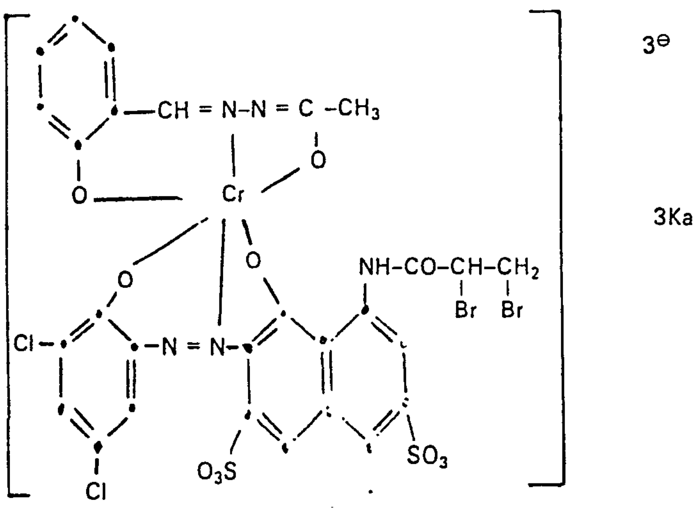

(11),

worin Ka ein Alkalikation ist.

18. Verfahren zur Herstellung von Chrom- oder Kobaltkomplexen gemäss Anspruch 1, dadurch gekennzeichnet, dass man eine den Rest B einführende Verbindung oder deren Vorprodukte mit einem 1:1-Komplex der Formel

$$\left[ A \equiv Me \equiv (L)_3 \right] \begin{matrix} \oplus An \\ (X)_n \end{matrix} \qquad (12)$$

worin A, Me und X die in Anspruch 1 angegebenen Bedeutungen haben, An ein Anion und n = 0, 1, 2, 3 oder 4 ist und L ein gegebenenfalls den 1:1-Komplex stabilisierender farbloser Ligand ist, und worin A und/oder B mindestens eine wasserlöslichmachende Gruppe enthält, in wässrigem organischem oder wässrig-organischem Medium umsetzt, und gegebenenfalls anschliessend den erhaltenen Chrom- oder Kobaltkomplex mit einer den(die) faserreaktiven Rest(e) X einführenden Verbindung umsetzt.

19. Verfahren gemäss Anspruch 18, dadurch gekennzeichnet, dass man die den Rest B einführende Verbindung mit dem 1:1-Chrom- oder Kobaltkomplex bei einer Temperatur von 50 bis 100 °C und einem pH von 5 bis 9 umsetzt.

20. Verfahren gemäss Anspruch 18, dadurch gekennzeichnet, dass man die Umsetzung mit einer die Reaktivgruppe(n) einführenden Verbindung bei einer Temperatur von 15 bis 30 °C und einem pH von 5 bis 8 ausführt.

21. Verfahren gemäss Anspruch 18, dadurch gekennzeichnet, dass man als Vorprodukte der den Rest B einführenden Verbindung ein Hydrazid der Formel

$$H_2N{-}NH{-}\underset{\substack{\| \\ Q}}{C}{-}V{-}R_3{-}(SO_3H)_u \qquad (17),$$

worin Q, V und $R_3$ die in Anspruch 3 angegebene

Bedeutung haben und u = 0, 1 oder 2 ist, und eine Carbonylverbindung der Formel

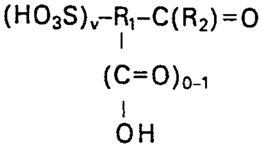 (18),

worin $R_1$ und $R_2$ die in Anspruch 3 angegebenen Bedeutungen haben und v = 0, 1 oder 2 ist, verwendet.

22. Verfahren gemäss Anspruch 18, dadurch gekennzeichnet, dass man als Vorprodukte der den Rest B einführenden Verbindung ein Hydrazon der Formel

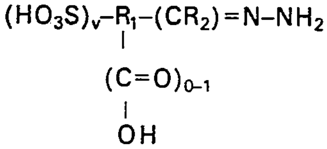 (20),

worin $R_1$, $R_2$ und v die in Anspruch 21 angegebenen Bedeutungen haben, und eine Verbindung der Formel

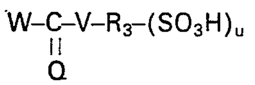 (21)

verwendet, wobei Q, V, $R_3$ und u die in Anspruch 21 angegebenen Bedeutungen haben, und W ein abspaltbarer Rest ist.

23. Verfahren zur Herstellung von Chromkomplexen gemäss Anspruch 1, dadurch gekennzeichnet, dass man eine den Rest B einführende Verbindung zum 1:1-Chromkomplex mit einem das Chromatom einführenden Mittel umsetzt und anschliessend mit einem metallfreien komplexierbaren Azofarbstoff umsetzt.

24. Verbindungen der Formel

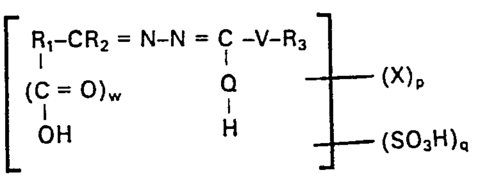 (16),

worin $R_1$ die direkte Bindung ein unsubstituierter oder durch Halogen, $C_{1-4}$-Alkoxy, Phenyl, Naphthyl, Carboxyl, $C_{1-8}$-Alkoxycarbonyl, Phenoxycarbonyl, $C_{1-8}$-Alkylaminocarbonyl oder Phenylaminocarbonyl substituierter Alkyl- oder Alkenylrest oder ein unsubstituierter oder durch $C_{1-4}$-Alkyl, $C_{1-4}$-Alkoxy, Halogen, $C_{2-5}$-Alkanoylamino, Nitro oder Cyano substituierter Phenyl- oder Naphthylrest, oder ein heterocyclischer Rest, $R_2$ Wasserstoff oder ein Alkyl-, Phenyl- oder Naphthylrest, der wie für den Alkyl-, Phenyl- oder Naphthylrest $R_1$ angegeben substituiert sein kann, V die direkte Bindung oder ein Sauerstoffatom, $R_3$ Wasserstoff, ein Alkyl-, Phenyl- oder Naphthylrest, der wie für den Alkyl-, Phenyl- oder Naphthylrest $R_1$ angegeben substituiert sein kann, ein heterocyclischer Rest oder eine gegebenenfalls substituierte Aminogruppe, Q ein Sauerstoff- oder Schwefelatom, X ein faserreaktiver Rest, p = 0, 1 oder 2, q = 1 oder 2 und w = 0 oder 1 ist, sowie deren Chrom- oder Kobaltkomplexe.

25. Verwendung der Chrom- oder Kobaltkomplexe gemäss Anspruch 1 zum Färben textiler Materialien.

26. Verwendung gemäss Anspruch 25, dadurch gekennzeichnet, dass man als textile Materialien synthetisches oder natürliches Polyamid verwendet.

27. Das gemäss Anspruch 25 gefärbte Textilmaterial.

**Revendications**

1. Complexes de chrome ou de cobalt, de formule

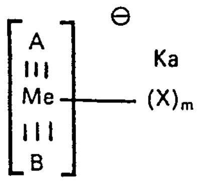 (1),

dans laquelle A est le reste d'un colorant azoïque ou azométhine bicyclique métallable; B est le reste d'un composé organique tridenté, dianionique, complexant, qui contient un groupe C=N–N=C participant au complexe de chrome ou de cobalt; X est un radical réactif avec les fibres; Me est un atome de chrome ou de cobalt; K est un cation; m vaut 1, 2, 3 ou 4; et le reste A et/ou le reste B contenant au moins un groupe conférant la solubilité dans l'eau.

2. Complexes de chrome ou de cobalt selon la revendication 1, dans lesquels le reste A correspond à la formule

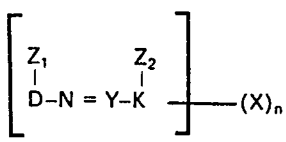 (2)

dans laquelle D est le reste d'un composant diazo de la série du benzène ou du naphtalène ou de la série hétérocyclique; Y est un atome d'azote ou le groupe –CH; K représente, dans le cas où Y est un atome d'azote, le reste d'un composant de copulation, ou, dans le cas où Y est le groupe –CH, le reste d'un o-hydroxybenzaldéhyde ou d'un o-hydroxynaphtaldéhyde; $Z_1$ est –O– ou le groupe –COO– en position ortho par rapport au groupe azo ou azométhine, et $Z_2$ est –O– ou un groupe –N(R)–, R représentant un atome d'hydrogène ou un radical alkyle en $C_{1-4}$ éventuellement substitué ou un radical phényle éventuellement substitué, et $Z_2$ est lié à K en position voisine du groupe –N=Y–; X a la signification donnée dans la revendication 1; et n vaut 0, 1, 2, 3 ou 4; le reste B dans la formule (1), dans le cas où n vaut 0, contenant au moins un radical X réactif avec les fibres.

3. Complexes de chrome ou de cobalt selon la revendication 1, dans lesquels le reste B correspond à la formule

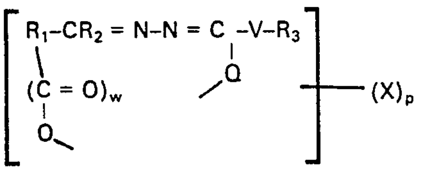

(3)

dans laquelle $R_1$ est la liaison directe ou un radical alkyle, alcényle ou aryle éventuellement substitué ou un radical hétérocyclique; $R_2$ est un atome d'hydrogène ou un radical alkyle ou aryle éventuellement substitué; V est la liaison directe ou un atome d'oxygène; $R_3$ est un atome d'hydrogène ou un radical alkyle ou aryle éventuellement substitué, un radical hétérocyclique ou un groupe amino éventuellement substitué; Q est un atome d'oxygène ou de soufre et w vaut 0 ou 1; X a la signification donnée dans la revendication 1; et p vaut 0, 1 ou 2; le reste A dans la formule (1), dans le cas où p vaut 0, contenant au moins un radical X réactif avec les fibres.

4. Complexes de chrome ou de cobalt selon l'une des revendications 1 à 3, dans lesquels X représente un radical réactif avec les fibres, de la série aliphatique ou hétérocyclique, qui est lié directement ou par un chaînon pontant au reste A et/ou au reste B.

5. Complexes de chrome ou de cobalt selon l'une des revendications 1 à 3, dans lesquels le reste A et/ou le reste B contient (contiennent) au moins un groupe sulfo.

6. Complexes de chrome ou de cobalt selon l'une des revendications 1 à 5, de formule

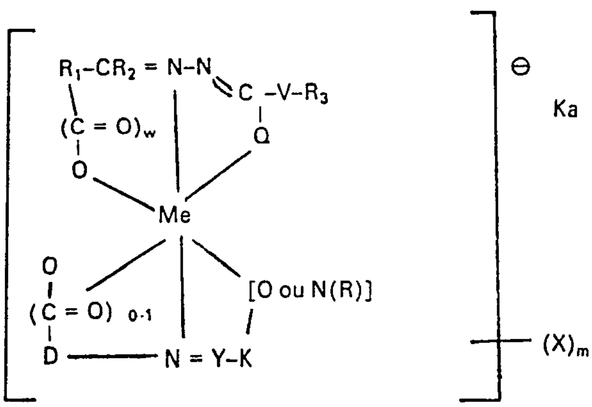

(4),

dans laquelle $R_1$ est la liaison directe au groupe –COO–, ou un radical alkyle en $C_{1-8}$ éventuellement substitué par un groupe carboxyle, en particulier un radical alkyle en $C_{1-4}$ éventuellement substitué par un groupe carboxyle, un radical alcényle en $C_{1-8}$, en particulier en $C_{1-4}$, ou un radical phényle ou naphtyle éventuellement substitué par un atome d'halogène ou par un groupe alkyle en $C_{1-4}$, nitro, alcanoyl($C_{2-5}$)-amino, sulfo, carboxyle ou arylazo, en particulier phénylazo, ou un radical hétérocyclique, en particulier un radical quinolinyle substitué par un groupe hydroxyle; $R_2$ est un atome d'hydrogène ou un radical alkyle en $C_{1-8}$, en particulier en $C_{1-4}$, éventuellement substitué par un groupe carboxyle, ou un radical phényle ou naphtyle éventuellement substitué par un atome d'halogène ou par un groupe alkyle en $C_{1-4}$, nitro, alcanoyl($C_{2-5}$)-amino, sulfo ou carboxyle, V est la liaison directe ou un atome d'oxygène; $R_3$ est un atome d'hydrogène ou un radical alkyle en $C_{1-8}$, en particulier en $C_{1-4}$, phényl-alkyle($C_{1-4}$), naphtyl-alkyle($C_{1-4}$), un radical phényle ou naphtyle éventuellement substitué par un atome d'halogène ou par un groupe alkyle en $C_{1-4}$, alcoxy en $C_{1-4}$, alcanoyl($C_{2-5}$)-amino, nitro, hydroxyle, cyano, sulfo ou phénylazo, ou un radical de formule

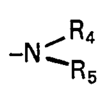

dans laquelle $R_4$ et $R_5$ sont, indépendamment l'un de l'autre, un atome d'hydrogène ou un radical alkyle en $C_{1-8}$, en particulier en $C_{1-4}$, éventuellement substitué, ou un radical phényle éventuellement substitué; Q est un atome d'oxygène ou de soufre; w vaut 0 ou 1; Me est un atome de chrome ou de cobalt; D est le reste d'un composant diazo de la série du benzène ou du naphtalène, qui comporte le groupe $-(CO)_{0-1}$ –O– en position ortho par rapport au groupe –N=Y–; Y est un atome d'azote ou le groupe –CH; K représente, dans le cas où Y est un atome d'azote, le reste d'un composant de copulation de la série du benzène ou du naphtalène ou de la série 5-pyrazolone, 5-aminopyrazole, quinoléine, acétoacétarylide ou benzoylacétarylide, qui comporte le radical –[O ou N(R)]– en position voisine du groupe azo et R étant un atome d'hydrogène ou un radical alkyle en $C_{1-4}$ éventuellement substitué ou phényle éventuellement substitué, ou, dans le cas où Y est le groupe –CH, K représente le reste d'un o-hydroxybenzaldéhyde ou o-hydroxynaphthaldéhyde; X représente un radical réactif avec les fibres, de la série aliphatique ou hétérocyclique, qui est lié directement ou par un chaînon pontant à D et/ou K et/ou $R_1$; Ka représente un cation; et m vaut 1, 2, 3 ou 4.

7. Complexes de chrome ou de cobalt selon la revendication 6, dans lesquels m vaut 1 ou 2.

8. Complexes de chrome ou de cobalt selon la

revendication 6, dans lesquels $R_1$ est un radical phényle ou naphtyle non substitué ou substitué par un atome d'halogène ou par un groupe alkyle en $C_{1-4}$, nitro, acétylamino, sulfo, phénylazo, sulfophénylazo ou –NH–X, ou un radical quinolinyle substitué par un groupe hydroxyle; $R_2$ est un atome d'hydrogène ou un radical alkyle en $C_{1-4}$; V est la liaison directe ou un atome d'oxygène; w vaut 0; Q est un atome d'oxygène ou de soufre; et $R_3$ est un atome d'hydrogène ou un radical amino, alkyle en $C_{1-4}$ ou un radical phényle non substitué ou substitué par un atome d'halogène ou par un groupe alkyle en $C_{1-4}$ ou nitro; ou dans lesquels $R_1$ est la liaison directe; $R_2$ est un atome d'hydrogène ou un radical alkyle en $C_{1-4}$, un radical alkyle en $C_{1-4}$ ou phényle substitué par un groupe carboxyle; V est la liaison directe ou un atome d'oxygène; w vaut 1; Q est un atome d'oxygène; et $R_3$ est un atome d'hydrogène ou un radical amino, alkyle en $C_{1-4}$, ou un radical phényle non substitué ou substitué par un atome d'halogène ou par un groupe alkyle en $C_{1-4}$ ou nitro; ou dans lesquels $R_1$ est un radical alkyle en $C_{1-4}$; $R_2$ est un atome d'hydrogène ou un radical alkyle en $C_{1-4}$ non substitué ou substitué par un groupe carboxyle; V est la liaison directe ou un atome d'oxygène; w vaut 0 ou 1; Q est un atome d'oxygène; et $R_3$ est un atome d'hydrogène ou un radical amino, alkyle en $C_{1-4}$ ou un radical phényle non substitué ou substitué par un atome d'halogène ou par un groupe alkyle en $C_{1-4}$ ou nitro, ou dans lesquels $R_1$ est un radical alcényle en $C_{3-6}$; $R_2$ et $R_3$ sont, indépendamment l'un de l'autre, un atome d'hydrogène ou un radical alkyle en $C_{1-4}$ ou un radical phényle non substitué ou substitué par un atome d'halogène ou par un groupe alkyle en $C_{1-4}$ ou nitro, ou $R_3$ est un groupe amino; V est la liaison directe ou un atome d'oxygène; w vaut 0; et Q est un atome d'oxygène.

9. Complexes de chrome ou de cobalt selon la revendication 6, dans lesquels X est un radical acryloyle, mono-, di- ou trihalogénoacryloyle ou -méthacryloyle, mono- ou dihalogénopropionyle, phénylsulfonylpropionyle, méthylsulfonylpropionyle, vinylsulfonyle, β-chloréthylsulfonyle, β-chloréthylsulfonylbutyryle, β-sulfatoéthylsulfonyle, ou un radical de la série mono-, di- ou trihalogénopyrimidyle ou mono- ou di-halogénotriazinyle, X étant lié à D et/ou K et/ou $R_1$ éventuellement par un chaînon pontant de formule

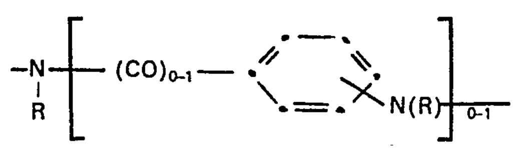

ou $-CH_2-N(R)-$, et R ayant la signification donnée dans la revendication 6.

10. Complexes de chrome ou de cobalt selon l'une des revendications 6 à 9, de formule

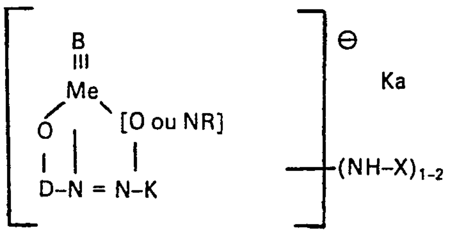

(5),

dans laquelle B représente le reste de formule

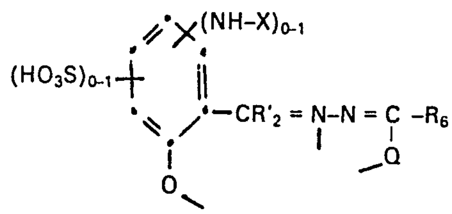

(6),

dans laquelle $R'_2$ est un atome d'hydrogène ou le groupe méthyle; $R_6$ est un atome d'hydrogène ou le groupe méthyle, phényle ou $NH_2$; et Q est un atome d'oxygène ou de soufre; ou le reste de formule

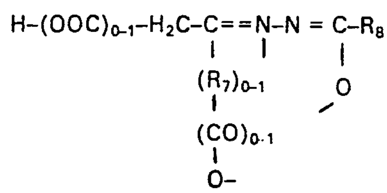

(7),

dans laquelle $R_7$ est un groupe alkyle en $C_{1-4}$ et $R_8$ est le groupe méthyle ou phényle; ou le reste de formule

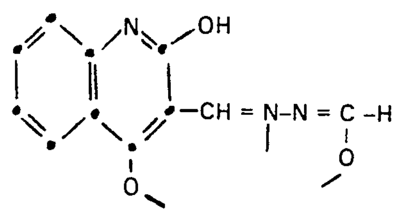

(8),

ou le reste de formule

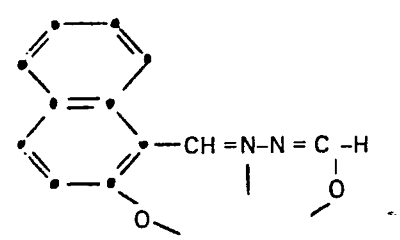

(9)

et D est un radical benzénique qui comporte l'atome d'oxygène en position ortho par rapport au pont azo, et peut être substitué par un atome de

chlore ou par un groupe sulfo, nitro, méthoxy et par le groupe –NH–X, ou est un radical naphtalène qui comporte l'atome d'oxygène en position 1 ou 2 et le groupe azo en position 2 ou 1, et qui peut être substitué par un groupe sulfo ou nitro, ou par le groupe –NH–X; K est un radical naphtalène qui peut être substitué, outre par le groupe –NH–X, par 1 ou 2 groupes sulfo, et qui comporte l'atome d'oxygène ou le groupe –N(R)–, R étant un atome d'hydrogène ou le radical phényle, en position ortho par rapport au groupe azo, un radical 1-phényl-3-méthyl-5-pyrazolone qui peut être substitué sur le noyau phényle par le groupe –NH–X ou sulfo, un radical diméthyl- ou tert-butylphénol substitué par l'atome d'oxygène en position ortho par rapport au groupe azo, ou un radical 2-hydroxyquinolinyle qui comporte le groupe azo en position 3 et l'atome d'oxygène en position 4; et X représente le radical α,β-dibromopropionyle, α-bromoacryloyle, chloracétyle, β-chloropropionyle, 2-fluoro-4-(N-éthyl-N-phénylamino)- 1,3,5-triazinyle-6 2-fluoro-4-méthoxy- ou -4-β-éthoxy-éthoxy- 1,3,5-triazinyle-6, 2-chloro- 4-phénylamino- 1,3,5-triazinyle-6, 2-chloro-4-méthoxy- ou -4-éthoxy- ou -4-isopropoxy-1,3,5-triazinyle-6 ou 2,4-difluoro-5-chloropyrimidinyle-6; Me est un atome de chrome ou de cobalt; et Ka est un cation alcalin.

11. Complexes de chrome selon l'une des revendications 1, 6 et 10.

12. Complexes de chrome ou de cobalt selon la revendication 10, dans lesquels B, dans la formule (5), représente le reste de formule (6).

13. Complexes de chrome ou de cobalt selon la revendication 10, dans lesquels X représent le radical α,β-dibromopropionyle.

14. Complexes de chrome ou de cobalt selon l'une des revendications 2 et 6, dans lesquels Y est un atome d'azote.

15. Complexes de chrome selon la revendication 10, dans lesquels K est un radical naphtalène qui peut être substitué, outre par le groupe –NH–X, par un ou deux groupes sulfo, et comporte l'atome d'oxygène en position ortho par rapport au groupe azo.

16. Complexe de chrome selon la revendication 15, de formule

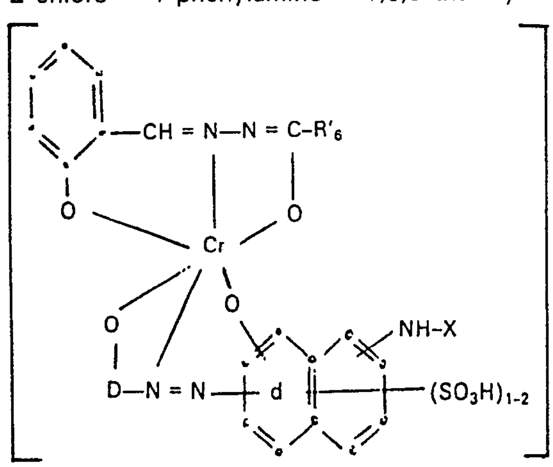

$^{\ominus}$Ka

(10),

dans laquelle $R'_6$ est un atome d'hydrogène ou un groupe méthyle, phényle ou amino; D est un radical benzénique qui comporte l'atome d'oxygène en position ortho par rapport au pont azo et peut être substitué par un atome de chlore ou par un groupe nitro, ou un radical naphtalène qui comporte l'atome d'oxygène en position 1 ou 2 et le groupe azo en position 2 ou 1, et qui peut être substitué par un groupe sulfo ou nitro; et X est un radical α,β-dibromopropionyle ou α-bromoacryloyle; et dans laquelle le groupe azo est lié au noyau d en position ortho par rapport à l'atome d'oxygène; et Ka est un cation alcalin.

17. Complexe de chrome selon la revendication 16, de formule

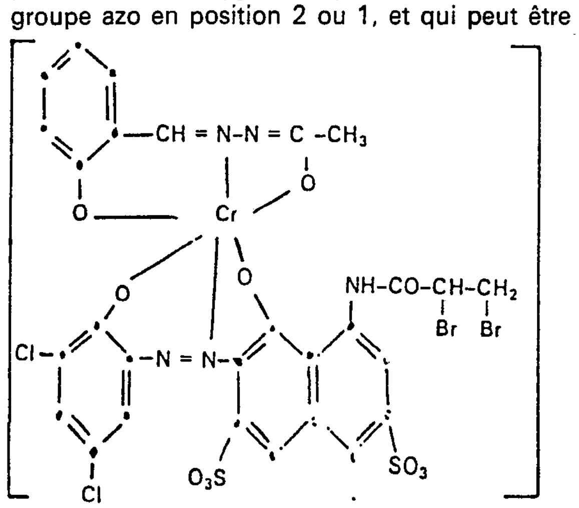

$3^{\ominus}$

3Ka

(11),

dans laquelle Ka est un cation alcalin.

18. Procédé pour la préparation de complexes de chrome ou de cobalt selon la revendication 1, caractérisé par le fait que l'on fait réagir, en milieu aqueux, organique ou aqueux-organique, un composé introduisant le reste B ou des précurseurs de celui-ci, avec un complexe 1:1 de formule

$$\left[ A \equiv Me \equiv (L)_3 \right] \begin{matrix} ^{\oplus}An \\ (X)_n \end{matrix} \qquad (12),$$

dans laquelle A, Me et X ont les significations données dans la revendication 1; An est un anion et n vaut 0, 1, 2, 3 ou 4; et L est un ligand incolore, stabilisant éventuellement le complexe 1:1; et dans laquelle A et/ou B contient (contiennent) au moins un groupe conférant la solubilité dans l'eau; et on fait éventuellement réagir ensuite le complexe de chrome ou de cobalt obtenu avec un composé introduisant le(s) reste(s) X réactif(s) avec les fibres.

19. Procédé selon la revendication 18, caractérisé par le fait que l'on fait réagir le composé introduisant le reste B avec le complexe de chrome ou de cobalt 1:1, à une température de 50 à 100 °C et à un pH de 5 à 9.

20. Procédé selon la revendication 18, caractérisé par le fait que l'on effectue la réaction avec un composé introduisant le(s) groupe(s) réactif(s) à une température de 15 à 30 °C et à un pH de 5 à 8.

21. Procédé selon la revendication 18, caractérisé par le fait que qu'en tant que précurseurs du composé introduisant le reste B, on utilise un hydrazide de formule

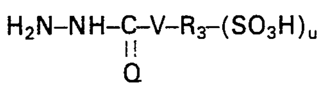
(17),

dans laquelle Q, V et $R_3$ ont les significations données dans la revendication 1, et u vaut 0, 1 ou 2, et un composé carbonyle de formule

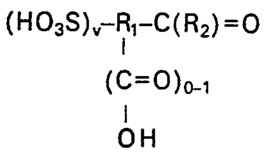
(18),

dans laquelle $R_1$ et $R_2$ ont les significations données dans la revendication 3, et v vaut 0, 1 ou 2.

22. Procédé selon la revendication 18, caractérisé par le fait qu'en tant que précurseurs du composé introduisant le reste B, une hydrazone de formule

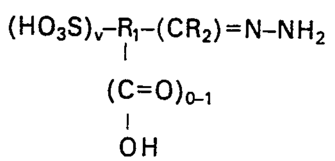
(20),

dans laquelle $R_1$, $R_2$ et v ont les significations données dans la revendication 21, et un composé de formule

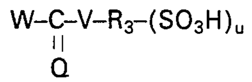
(21)

Q, V, $R_3$ et u ayant les significations données dans la revendication 21, et W étant un groupe séparable, sont utilisés.

23. Procédé pour la préparation de complexes de chrome selon la revendication 1, caractérisé par le fait que l'on fait réagir un composé introduisant le reste B avec un agent introduisant l'atome de chrome, pour aboutir au complexe de chrome 1:1, et on fait ensuite réagir celui-ci avec un colorant azoïque complexable, exempt de métal.

24. Composés de formule

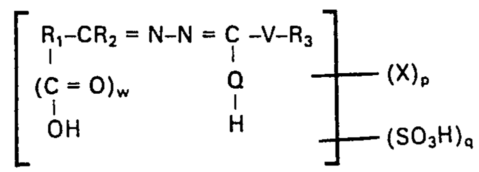
(16),

dans laquelle $R_1$ est la liaison directe ou un radical alkyle ou alcényle non substitué ou substitué par un atome d'halogène ou par un groupe alcoxy en $C_{1-4}$, phényle, naphtyle, carboxyle, alcoxy($C_{1-8}$)-carbonyle, phénoxycarbonyle, alkyl($C_{1-8}$)-aminocarbonyle ou phénylaminocarbonyle, ou un radical phényle ou naphtyle non substitué ou substitué par un atome d'halogène ou par un groupe alkyle en $C_{1-4}$, alcoxy en $C_{1-4}$, alcanoyl-($C_{2-5}$)-amino, nitro ou cyano, ou un radical hétérocyclique, $R_2$ est un atome d'hydrogène ou un radical alkyle, phényle ou naphtyle qui peut être substitué comme indiqué pour le radical alkyle, phényle ou naphtyle $R_1$; V est la liaison directe ou un atome d'oxygène; $R_3$ est un atome d'hydrogène ou un radical alkyle, phényle ou naphtyle qui peut être substitué comme indiqué pour le radical alkyle, phényle ou naphtyle $R_1$, un radical hétérocyclique ou un groupe amino éventuellement substitué; Q est un atome d'oxygène ou de soufre; X est un radical réactif avec les fibres; p vaut 0, 1 ou 2; q vaut 1 ou 2 et w vaut 0 ou 1; et complexes de chrome ou de cobalt de ceux-ci.

25. Utilisation des complexes de chrome ou de cobalt selon la revendication 1, pour la teinture de matériaux textiles.

26. Utilisation selon la revendication 25, caractérisée par le fait qu'en tant que matériaux textiles on utilise du polyamide naturel ou synthétique.

27. Le matériau textile teint selon la revendication 25.

**Claims**

1. A chromium or cobalt complex of the formula

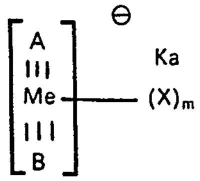

(1),

in which A is the radical of a bicyclic metallisable azo or azomethine dye, B is the radical of a tridentate, dianionic complexing organic compound that contains a C=N–N=C group which participates in the chromium or cobalt complex, X is a fibre-reactive radical, Me is a chromium or cobalt atom, Ka is a cation, m is 1, 2, 3 or 4 and where the radicals A and/or B contain at least one water-solubilising group.

2. A chromium or cobalt complex according to claim 1, in which the radical A has the formula

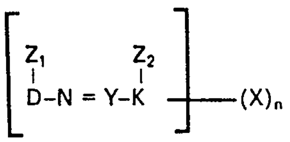

(2)

in which D is the radical of a diazo component of the benzene or naphthalene series or of the heterocyclic series, Y is a nitrogen atom or the –CH– group, K, if Y is a nitrogen atom, is the radical of a coupling component, or, if Y is the –CH– group, is the radical of an o-hydroxybenzaldehyde or of an o-hydroxynaphthaldehyde, $Z_1$ in the o-position to the azo or azomethine group is the –O– or –COO– group, and $Z_2$ is the –O– or –N(R) group where R is hydrogen, unsubstituted or substituted $C_1$–$C_4$alkyl or unsubstituted or substituted phenyl, and $Z_2$ vicinal to the –N=Y– radical is bonded to K, X is as defined in claim 1 and n is 0, 1, 2, 3 or 4, where, if n is 0, the radical B in formula (1) contains at least one fibre-reactive radical X.

3. A chromium or cobalt complex according to claim 1, in which the radical B has the formula

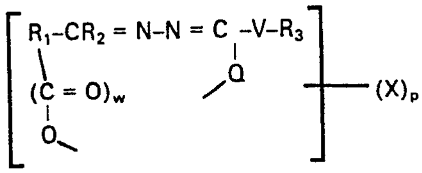

(3)

in which $R_1$ is a direct bond or an unsubstituted or substituted alkyl, alkenyl or aryl radical or is a heterocyclic radical, $R_2$ is hydrogen or an unsubstituted or substituted alkyl or aryl radical, V is the direct bond or an oxygen atom, $R_3$ is hydrogen, an unsubstituted or substituted alkyl or aryl radical, a heterocyclic radical or an unsubstituted or substituted amino group, Q is an oxygen or sulfur atom, w is 0 or 1, and X is as defined in claim 1 and p is 0, 1 or 2, where, if p is 0, the radical A in formula (1) contains at least one fibre-reactive radical.

4. A chromium or cobalt complex according to any one of claims 1 to 3, in which X is a fibre-reactive radical of the aliphatic or heterocyclic series which is attached to the radical A and/or to the radical B directly or through a bridge member.

5. A chromium or cobalt complex according to any one of claims 1 to 3, in which the radicals A and/or B contain at least one sulfonic acid group.

6. A chromium or cobalt complex according to any one of claims 1 to 5 of the formula

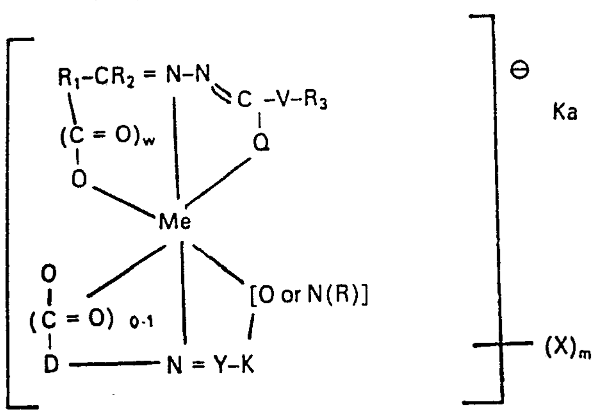

(4),

in which $R_1$ is a direct bond to the –COO radical, an unsubstituted or carboxyl-substituted $C_1$–$C_8$-alkyl radical, in particular an unsubstituted or carboxyl-substituted $C_1$–$C_4$alkyl radical, a $C_1$–$C_8$-alkenyl radical, in particular a $C_1$–$C_4$alkenyl radical, or a phenyl or naphthyl radical, each unsubstituted or substituted by $C_1$–$C_4$alkyl, halogen, nitro, $C_2$–$C_5$alkanoylamino, sulfo, carboxyl or arylazo, in particular phenylazo, or is a heterocyclic radical, in particular a quinolinyl radical, which is substituted by hydroxyl, $R_2$ is hydrogen, an unsubstituted or carboxylsubstituted $C_1$–$C_8$alkyl, in particular $C_1$–$C_4$alkyl, radical, or is a phenyl or naphthyl radical, each unsubstituted or substituted by $C_1$–$C_4$alkyl, halogen, nitro, $C_1$–$C_5$alkanoylamino, sulfo or carboxyl, V is the direct bond or an oxygen atom, $R_3$ is hydrogen, $C_1$–$C_8$alkyl, in particular $C_1$–$C_4$alkyl, phenyl-$C_1$–$C_4$alkyl, naphthyl-$C_1$–$C_4$alkyl, phenyl or naphthyl, each unsubstituted or substituted by $C_1$–$C_4$alkyl, $C_1$–$C_4$alkoxy, halogen, $C_2$–$C_5$alkanoylamino, nitro, hydroxyl, cyano, sulfo or phenylazo, or is a radical of the formula

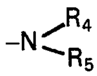

in which $R_4$ and $R_5$ are each independently of one another hydrogen, unsubstituted or substituted $C_1$–$C_8$alkyl, in particular $C_1$–$C_4$alkyl, or unsubstituted or substituted phenyl, Q is an oxygen or sulfur atom, w is 0 or 1, Me is a chromium or cobalt atom, D is the radical of a diazo component of the benzene or naphthalene series which contains the $-(CO)_{0-1}-$ 0 group in the o-position to the –N=Y group, Y is a nitrogen atom or the CH group, K, if Y is a nitrogen atom, is the radical of a coupling component of the benzene or naphthalene series or of the 5-pyrazolone, 5-aminopyrazole, quinoline, acetoacetarylide or benzoylacetarylide series, which radical contains the – 0 or (N(R) – radical vicinal to the azo group, and where R is hydrogen, unsubstituted or substituted $C_1$–$C_4$alkyl or unsubstituted or substituted phenyl or, if Y is the –CH– group, K is the radical of an o-hydroxybenzaldehyde or o-hydroxynaphthaldehyde, X is a fibre-reactive radical of the aliphatic or heterocyclic series which is attached to D and/or K and/or $R_1$ directly or through a bridge member, Ka is a cation and m is 1, 2, 3 or 4.

7. A chromium or cobalt complex according to claim 6, in which m is 1 or 2.

8. A chromium or cobalt complex according to claim 6, in which $R_1$ is phenyl or naphthyl, each unsubstituted or substituted by $C_1$–$C_4$alkyl, halogen, nitro, acetylamino, sulfo, phenylazo, sulfophenylazo or –NH–X, or is quinolinyl which is substituted by hydroxyl, $R_2$ is hydrogen or $C_1$–$C_4$alkyl, V is the direct bond or an oxygen atom, w is 0, Q is an oxygen or sulfur atom, and $R_3$ is hydrogen, amino, $C_1$–$C_4$alkyl, or a phenyl radical which is unsubstituted or substituted by $C_1$–$C_4$alkyl, halogen or nitro, or in which $R_1$ is the direct bond, $R_2$ is hydrogen, $C_1$–$C_4$alkyl, carboxyl-substituted $C_1$–$C_4$alkyl or phenyl, V is the direct bond or an oxygen atom, w is 1, Q is an oxygen atom, and $R_3$ is hydrogen, amino, $C_1$–$C_4$alkyl, or a phenyl radical which is unsubstituted or substituted by $C_1$–$C_4$alkyl, halogen or nitro, or in which $R_1$ is $C_1$–$C_4$alkyl, $R_2$ is hydrogen or unsubstituted or carboxyl-substituted $C_1$–$C_4$alkyl, V is the direct bond or an oxygen atom, w is 0 or 1, Q is an oxygen atom, and $R_3$ is hydrogen, amino, $C_1$–$C_4$alkyl, or a phenyl radical which is unsubstituted or substituted by $C_1$–$C_4$alkyl, halogen or nitro, or in which $R_1$ is $C_3$–$C_6$alkenyl, $R_2$ and $R_3$ are each independently of one another hydrogen, $C_1$–$C_4$alkyl, or a phenyl radical which is unsubstituted or substituted by $C_1$–$C_4$alkyl, halogen or nitro, or $R_3$ is amino, V is the direct bond or an oxygen atom, and w is 0 and q is an oxygen atom.

9. A chromium or cobalt complex according to claim 6, in which X is an acryloyl, monohaloacryloyl, dihaloacryloyl, trihaloacryloyl, monohalomethacryloyl, dihalomethacryloyl, trihalomethacryloyl, monohalopropionyl, dihalopropionyl, phenylsulfonylpropionyl, methylsulfonylpropionyl, vinylsulfonyl, β-chloroethylsulfonyl, β-chloroethylsulfonylbutyryl, or β-sulfatoethylsulfonyl radical, or a radical of the monohalopyrimidyl, dihalopyrimidyl or trihalopyrimidyl series or of the monohalotriazinyl or dihalotriazinyl series, where X may be attached to D and/or K and/or $R_1$ through a bridge member of the formula

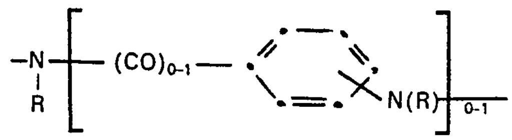

or $-CH_2-N(R)-$, and R is as defined in claim 6.

10. A chromium or cobalt complex according to any one of claims 6 to 9 of the formula

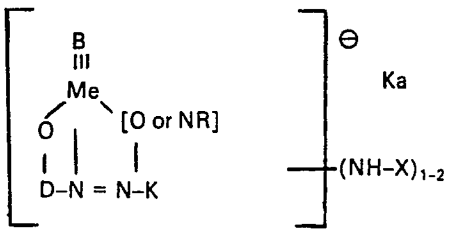

(5),

in which B is the radical of the formula

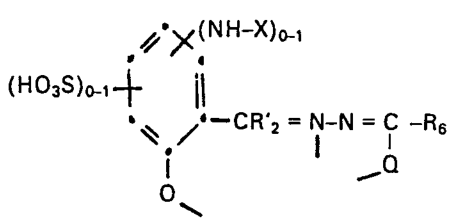

(6),

in which $R_2$ is hydrogen or methyl, $R_6$ is hydrogen, methyl, phenyl or $NH_2$, and Q is an oxygen or sulfur atom; or is the radical of the formula

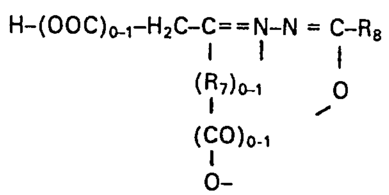

(7),

in which $R_7$ is $C_1$–$C_4$alkyl and $R_8$ is methyl or phenyl; or is the radical of the formula

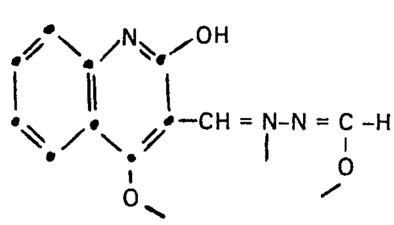

(8),

or the radical of the formula

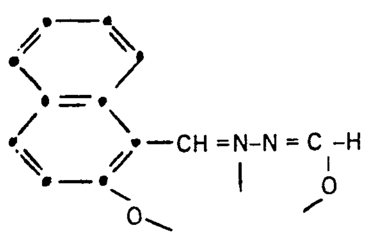

(9),

and D is a benzene radical which contains the oxygen atom in the o-position to the azo bridge and which may be substituted by sulfo, chlorine, nitro, methoxy and the –NH–X radical, or is a naphthalene radical which contains the oxygen atom in the 1- or 2-position and the azo group in the 2- or 1-position and which may be substituted by sulfo, nitro and the –NH–X radical; K is a naphthalene radical which may be substituted by 1 or 2 sulfo groups in addition to the NH–X radical and contains the oxygen atom or –N(R) where R is hydrogen or phenyl, in the o-position to the azo group, or is a 1-phenyl-3-methyl-5-pyrazolone radical which may be substituted in the phenyl ring by the –NH–X radical or sulfo, or is a dimethylphenol or tert-butylphenol radical which is substituted by the oxygen atom in the o-position to the azo group, or is a 2-hydroxyquinolinyl radical which contains the azo group in the 3-position and the oxygen atom in the 4-position, and X is the α,β-dibromopropionyl, α-bromoacryloyl, chloroacetyl, β-chloropropionyl, 2-fluoro-4-(N-ethyl-N-phenylamino)- 1,3,5-tri-azin- 6-yl, 2-fluoro- 4-methoxy- or - 4-β-ethoxy-ethoxy-1,3,5-triazin-6-yl, 2-chloro-4-phenylamino-1,3,5-triazin-6-yl, 2-chloro-4-methoxy- or -4-ethoxy- or -4-isopropoxy-1,3,5-triazin-6-yl or 2,4-difluoro-5-chloropyrimidin-6-yl radical, Me is a chromium or cobalt atom, and Ka is an alkali metal cation.

11. A chromium complex according to any one of claims 1, 6 and 10.

12. A chromium or cobalt complex according to claim 10, in which B in formula (5) is the radical of the formula (6).

13. A chromium or cobalt complex according to claim 10, in which X is the α,β-dibromopropionyl radical.

14. A chromium or cobalt complex according to either of claims 2 and 6, in which Y is a nitrogen atom.

15. A chromium complex according to claim 10, in which K is a naphthalene radical which may be substituted by 1 or 2 sulfo groups in addition to the –NH–X radical and contains the oxygen atom in the o-position to the azo group.

16. The chromium complex according to claim 15 of the formula

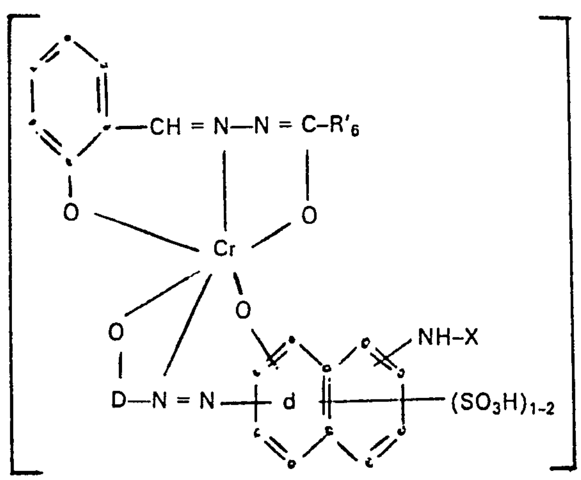

⊖Ka

(10),

in which $R_6$ is hydrogen, methyl, phenyl or amino, D is a benzene radical which contains the oxygen atom in the o-position to the azo bridge and may be substituted by chlorine or nitro, or is a naphthalene radical which contains the oxygen atom in the 1- or 2-position and the azo group in the 2- or 1-position and which may be substituted by sulfo or nitro, and X is an α,β-dibromopropionyl or α-bromoacryloyl radical, and in which the azo group is attached to the ring d in the o-position to the oxygen atom, and Ka is an alkali metal cation.

17. The chromium complex according to claim 16 of the formula

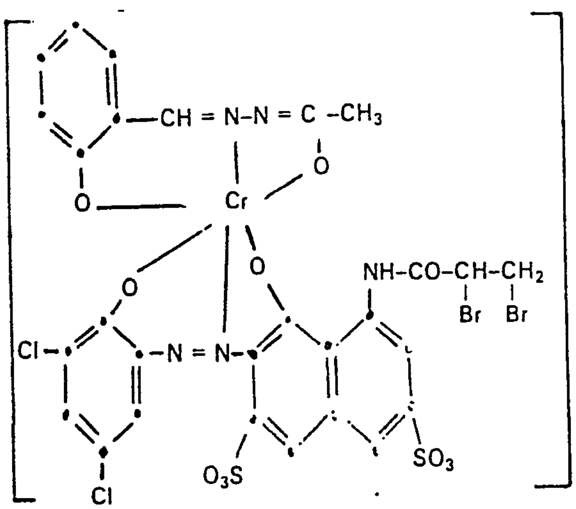

$3^{\ominus}$

3Ka (11),

in which Ka is an alkali metal cation.

18. A process for the preparation of a chromium or cobalt complex according to claim 1, which comprises reacting a compound which introduces the radical B, or precursors thereof, with a 1:1 complex of the formula

$$\left[ A \equiv Me \equiv (L)_3 \right] \begin{matrix} {}^{\oplus}An \\ (X)_n \end{matrix} \qquad (12),$$

in which A, Me and X are as defined in claim 1, An is an anion, n is 0, 1, 2, 3 or 4, and L is a colourless ligand that may stabilise the 1:1 complex, and in which A and/or B contains at least one water-solubilising group, in an aqueous, organic or aqueous-organic medium, and, if desired, reacting the resultant chromium or cobalt complex with a compound that introduces the fibre-reactive radical or radicals X.

19. A process according to claim 18, wherein the compound that introduces the radical B is reacted with the 1:1 chromium or cobalt complex at a temperature from 50 to 100 °C and at a pH from 5 to 9.

20 A process according to claim 18, wherein the reaction with a compound which introduces the reactive group or groups is carried out at a temperature from 15 to 30 °C and at a pH from 5 to 8.

21. A process according to claim 18, wherein a hydrazine of the formula

$$H_2N\text{-}NH\text{-}\underset{\underset{Q}{\parallel}}{C}\text{-}V\text{-}R_3\text{-}(SO_3H)_u \qquad (17),$$

in which Q, V and $R_3$ are as defined in claim 3 and u is 0, 1 or 2, and a carbonyl compound of the formula

$$(HO_3S)_v\text{-}\underset{\underset{\underset{OH}{|}}{\underset{(C=O)_{0-1}}{|}}}{R_1}\text{-}C(R_2)=O \qquad (18),$$

in which $R_1$ and $R_2$ are as defined in claim 3 and v is 0, 1 or 2, are used as the precursors of the compound which introduces the radical B.

22. A process according to claim 18, wherein a hydrazone of the formula

$$(HO_3S)_v\text{-}\underset{\underset{\underset{OH}{|}}{\underset{(C=O)_{0-1}}{|}}}{R_1}\text{-}(CR_2)=N\text{-}NH_2 \qquad (20),$$

in which $R_1$, $R_2$ and v are as defined in claim 21, and a compound of the formula

$$W\text{-}\underset{\underset{Q}{\parallel}}{C}\text{-}V\text{-}R_3\text{-}(SO_3H)_u \qquad (21)$$

are used as the precursors of the compound which introduces the radical B, where Q, V, $R_3$ and u are as defined in claim 21 and W is a removable radical.

23. A process for the preparation of a chromium complex according to claim 1, which comprises reacting a compound which introduces the radical B with an agent which introduces the chromium atom to give the 1:1 chromium complex, and subsequently reacting this complex with a metalfree complexable azo dye.

$$\left[ \underset{\underset{\underset{OH}{|}}{\underset{(C=O)_w}{|}}}{R_1}\text{-}CR_2=N\text{-}N=\underset{\underset{\underset{H}{|}}{\underset{Q}{|}}}{C}\text{-}V\text{-}R_3 \right] \begin{matrix} -(X)_p \\ -(SO_3H)_q \end{matrix} \qquad (16),$$

in which $R_1$ is the direct bond, an alkyl or alkenyl radical which is unsubstituted or substituted by halogen, $C_1$–$C_4$alkoxy, phenyl, naphthyl, carboxyl, $C_1$–$C_8$alkoxycarbonyl, phenoxycarbonyl, $C_1$–$C_8$alkylaminocarbonyl or phenylaminocarbonyl, or is a phenyl or naphthyl radical, each unsubstituted or substituted by $C_1$–$C_4$alkyl, $C_1$–$C_4$-alkoxy, halogen, $C_2$–$C_5$alkanoylamino, nitro or cyano, or is a heterocyclic radical, $R_2$ is hydrogen

or an alkyl, phenyl or naphthyl radical which can be substituted as indicated for the alkyl, phenyl or naphthyl radical $R_1$, V is the direct bond or an oxygen atom, $R_3$ is hydrogen, an alkyl, phenyl or naphthyl radical which can be substituted as indicated for the alkyl, phenyl or naphthyl radical $R_1$, or is a heterocyclic radical or an unsubstituted or substituted amino group, Q is an oxygen or sulfur atom, X is a fibre-reactive radical, p is 0, 1, or 2, q is 1 or 2 and w is 0 or 1, and a chromium or cobalt complex thereof.

25. The use of the chromium or cobalt complexes according to claim 1 for dyeing textile material.

26. Use according to claim 25, wherein the textile material used is synthetic or natural polyamide.

27. The textile material dyed according to claim 25.